(19) Europäisches Patentamt
European Patent Office
Office européen des brevets

(11) **EP 4 007 178 A1**

(12) **EUROPEAN PATENT APPLICATION**
published in accordance with Art. 153(4) EPC

(43) Date of publication:
**01.06.2022 Bulletin 2022/22**

(21) Application number: **20850743.4**

(22) Date of filing: **03.08.2020**

(51) International Patent Classification (IPC):
$H04B\ 7/0404^{(2017.01)}$    $H04B\ 7/0408^{(2017.01)}$
$H04B\ 17/309^{(2015.01)}$    $H04W\ 4/06^{(2009.01)}$

(52) Cooperative Patent Classification (CPC):
**H04B 7/0404; H04B 7/0408; H04B 17/309;
H04W 4/06**

(86) International application number:
**PCT/CN2020/106532**

(87) International publication number:
**WO 2021/023146 (11.02.2021 Gazette 2021/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.08.2019 CN 201910723741**

(71) Applicant: **Sony Group Corporation
Tokyo 108-0075 (JP)**

(72) Inventors:
• **XIE, Zhanyuan
Beijing 100084 (CN)**
• **GUO, Xin
Beijing 100028 (CN)**
• **CHEN, Wei
Beijing 100084 (CN)**

(74) Representative: **D Young & Co LLP
120 Holborn
London EC1N 2DY (GB)**

(54) **ELECTRONIC EQUIPMENT AND METHOD IN WIRELESS COMMUNICATION SYSTEM**

(57) The present disclosure relates to electronic device and communication method in a wireless communication system. The electronic device is a terminal-side electronic device and can communicate with a transmitting device in a wireless communication system via a first type of antenna and a second type of antenna, respectively, wherein the electronic device further comprises a processing circuit configured to acquire a first information indicating communication condition between the terminal-side electronic device and the transmitting device via the first type of antenna; and acquires a second information indicating communication condition between the terminal-side electronic device and the transmitting device via the second type of antenna, wherein the communication between the terminal-side electronic device and the transmitting device via the second type of antenna is performed based on the first information; wherein a configuration for the communication between the electronic device and the transmitting device can be set based on at least the second information, and wherein the first type of antenna and the second type of antenna have different directivity characteristics.

Fig. 1B

**Description**

CROSS-REFERENCE OF RELATED APPLICATIONS

The present application claims the benefit of priority to CN application No. 201910723741.5 filed on August 7, 2019, which is incorporated by reference herein in its entity.

FIELD OF THE INVENTION

The present disclosure relates to an electronic device and method in a wireless communication system, and in particular, to an electronic device and method for multicast communication in a wireless communication system.

BACKGROUND

With the development of communication technology, requirements for reliability and latency in communication become higher and higher. As one of the main scenarios to be considered in the fifth-generation communication system, Ultra-reliable and low-latency communication (URLLC) is attracting more and more attention. For example, in machine type communication (MTC), such as vehicle-to-vehicle (V2X), factory automation case, peer-to-peer communication (P2P), wireless sensor network (WSN) and so on, it can be considered to apply the ultra-reliable and low-latency communication (URLLC) service to meet quality of service (QoS) requirements of the machine type communication.

Millimeter wave and large-scale I/O technologies have been being widely studied in order to achieve gigabit level wireless access that meets the requirements of URLLC. A large-scale input-output technology with large degree of freedom ensures high energy efficiency and spectral efficiency, and provides wider available bandwidth in the millimeter wave band. In addition, due to short wavelength of the millimeter wave, a large number of antenna arrays can be equipped to form highly directional beams, so that a large-scale input-output system can be realized.

Multicast communication using sidelink is a common wireless communication scenario. For example, in a scenario of vehicle-to-vehicle (V2V) communication, vehicles can form a platooning-based driving mode. In each platooning, the leader vehicle transmits perception data acquired by itself, for example, the data acquired by the on-board camera or radar, to follower vehicles in a manner of multicast communication. However, because the length, shape and surrounding environment of the platooning often change, communication quality between the leader vehicle and the follower vehicles may deteriorate.

DISCLOSURE OF THE INVENTION

The present disclosure provides an electronic device and method in a wireless communication system, which can improve multicast communication in the wireless communication system.

An aspect of the present disclosure relates to a terminal-side electronic device in a wireless communication system, which can communicate with a transmitting device in the wireless communication system via a first type of antenna and a second type of antenna, respectively, wherein the electronic device further includes a processing circuit configured to acquire a first information indicating communication condition between the terminal-side electronic device and the transmitting device via the first type of antenna; and acquire a second information indicating communication condition between the terminal-side electronic device and the transmitting device via the second type of antenna, wherein the communication between the terminal-side electronic device and the transmitting device via the second type of antenna is performed based on the first information; wherein a communication configuration between the electronic device and the transmitting device can be set based on at least the second information, and wherein the first type of antenna and the second type of antenna have different directivity characteristics.

Another aspect of the present disclosure relates to a transmitting device in a wireless communication system, which can communicate with a terminal-side electronic device in the wireless communication system via a first type of antenna and a second type of antenna, respectively, wherein the transmitting device further includes a processing circuit configured to receive a first information indicating communication condition between the terminal-side electronic device and the transmitting device via the first type of antenna; carry out communication between the terminal-side electronic device and the transmitting device via the second type of antenna based on the first information; and receive a second information indicating communication condition between the terminal-side electronic device and the transmitting device via the second type of antenna; wherein a communication configuration between the electronic device and the transmitting device can be set based on at least the second information, and wherein the first type of antenna and the second type of antenna have different directivity characteristics.

Yet another aspect of the present disclosure relates to a transmitting device in a wireless communication system, which can communicate with a terminal-side electronic device in the wireless communication system via a first type of antenna and a second type of antenna, respectively, wherein the transmitting device further includes a processing circuit configured to acquire a first information about channel quality between the terminal-side electronic device and the transmitting device via the first type of antenna which is estimated based on a first reference signal transmitted by the terminal-side electronic device via the first type of antenna; acquire a second information about channel quality between the terminal-side electronic device and the transmitting device via the second type of antenna which is estimated based on a second reference signal transmitted by the terminal-side electronic device via the second type of antenna, wherein the communication between the terminal-side electronic device and the transmitting device via the second type of antenna is performed based on the first channel quality information; and wherein, a communication configuration between the electronic device and the transmitting device can be set based on at least the second channel quality information, and the first type of antenna and the second type of antenna have different directivity characteristics.

Yet another aspect of the present disclosure relates to a terminal-side electronic device in a wireless communication system, which can communicate with a transmitting device in the wireless communication system via a first type of antenna and a second type of antenna, respectively, wherein the electronic device further includes a processing circuit configured to receive a first information about channel quality between the terminal-side electronic device and the transmitting device via the first type of antenna which is estimated by the transmitting device based on a first reference signal transmitted by the terminal-side electronic device via the first type of antenna; carry out communication between the terminal-side electronic device and the transmitting device via the second type of antenna based on the first channel quality information; receive a second information about channel quality between the terminal-side electronic device and the transmitting device via the second type of antenna which is estimated by the transmitting device based on the second reference signal transmitted by the terminal-side electronic device via the second type of antenna; and wherein, a communication configuration between the electronic device and the transmitting device can be set based on at least the second channel quality information, and the first type of antenna and the second type of antenna have different directivity characteristics.

Yet another aspect of the present disclosure relates to a method for a terminal-side electronic device in a wireless communication system, which includes: acquiring a first information indicating communication condition between the terminal-side electronic device and the transmitting device via the first type of antenna; and acquiring a second information indicating communication condition between the terminal-side electronic device and the transmitting device via the second type of antenna, wherein the communication between the terminal-side electronic device and the transmitting device via the second type of antenna is performed based on the first information; wherein a communication configuration between the electronic device and the transmitting device can be set based on at least the second information, and wherein the first type of antenna and the second type of antenna have different directivity characteristics.

Another aspect of the present disclosure relates to a method for a transmitting device in a wireless communication system, which includes: receiving a first information indicating communication condition between the terminal-side electronic device and the transmitting device via the first type of antenna; performing communication between the terminal-side electronic device and the transmitting device via the second type of antenna based on the first information; and receiving a second information indicating communication condition between the terminal-side electronic device and the transmitting device via the second type of antenna; wherein a communication configuration between the electronic device and the transmitting device can be set based on at least the second information, and wherein the first type of antenna and the second type of antenna have different directivity characteristics.

Yet another aspect of the present disclosure relates to a method for a transmitting device in a wireless communication system, which includes: acquiring a first information about channel quality between the terminal-side electronic device and the transmitting device via the first type of antenna which is estimated based on a first reference signal transmitted by the terminal-side electronic device via the first type of antenna; acquiring a second information about channel quality between the terminal-side electronic device and the transmitting device via the second type of antenna which is estimated based on a second reference signal transmitted by the terminal-side electronic device via the second type of antenna, wherein the communication between the terminal-side electronic device and the transmitting device via the second type of antenna is performed based on the first channel quality information; and wherein, a communication configuration between the electronic device and the transmitting device can be set based on at least the second channel quality information, and the first type of antenna and the second type of antenna have different directivity characteristics.

Yet another aspect of the present disclosure relates to a method for a terminal-side electronic device in a wireless communication system, which includes: receiving a first information about channel quality between the terminal-side electronic device and the transmitting device via the first type of antenna which is estimated by the transmitting device based on a first reference signal transmitted by the terminal-side electronic device via the first type of antenna; performing communication between the terminal-side electronic device and the transmitting device via the second type of antenna based on the first channel quality information; receiving a second information about channel quality between the terminal-side electronic device and the transmitting device via the second type of antenna which is estimated by the transmitting device based on the second reference signal transmitted by the terminal-side electronic device via the second type of antenna; and wherein, a communication configuration between the electronic device and the transmitting device can be set based on at least the second channel quality information, and the first type of antenna and the second type of antenna have different directivity characteristics.

Yet another aspect of the present disclosure relates to a non-transitory computer-readable storage medium storing executable instructions thereon, and the executable instructions, when executed, cause implementation of methods as mentioned above.

Yet another aspect of the present disclosure relates to a wireless communication device. According to an embodiment, the wireless communication device comprises a processor, and a storage device storing executable instructions thereon, wherein the executable instructions, when executed, implement the methods as mentioned above.

Another aspect of the present disclosure relates to a wireless communication device including components for implementing the method as described above.

DESCRIPTION OF THE DRAWINGS

A better understanding of the present disclosure may be obtained when considering following detailed description of embodiments in conjunction with the accompanying drawings. The same or similar reference numerals are used in the drawings to indicate the same or similar components. Figures are included in the present specification together with the following detailed description and form a part of the specification, for illustrating the embodiments of the present disclosure and explaining the principles and advantages of the present disclosure. Wherein:

Fig. 1A is a schematic concept diagram illustrating a wireless communication system according to an embodiment of the present disclosure, and Fig. 1B is a schematic signaling diagram illustrating operations in a wireless communication system according to an embodiment of the present disclosure;

Fig. 2 illustrates a schematic block diagram of a terminal-side electronic device according to an embodiment of the present disclosure.

Fig. 3 illustrates a flowchart of a method for a terminal-side electronic device according to an embodiment of the present disclosure.

Fig. 4 illustrates a schematic block diagram of a transmitting device according to an embodiment of the present disclosure.

Fig. 5 illustrates a flowchart of a method for a transmitting device according to an embodiment of the present disclosure.

Figs. 6A to 6C respectively illustrate schematic diagrams of scenarios in which communication quality between the terminal-side electronic device and the transmitting device in the wireless communication system via a directional antenna deteriorates according to an embodiment of the present disclosure.

Fig. 7 illustrates a basic flow chart of communication condition determination and communication configuration setting between the terminal-side electronic device and the transmitting device in the wireless communication system according to the embodiment of the present disclosure.

Figs. 8A- 8C illustrate schematic signaling diagrams for communication between the terminal-side electronic device and the transmitting device in a wireless communication system via an omni-directional antenna according to an embodiment of the present disclosure.

Figs. 9A to 9C respectively show signaling diagrams of schematic methods of setting communication configurations for scenarios in which communication quality between the terminal-side electronic device and the transmitting device in the wireless communication system deteriorates according to embodiments of the present disclosure.

Fig. 10 illustrates a schematic block diagram of a terminal-side electronic device according to an embodiment of the present disclosure.

Fig. 11 illustrates a flowchart of a method for a terminal-side electronic device according to an embodiment of the present disclosure.

Fig. 12 illustrates a schematic block diagram of a transmitting device according to an embodiment of the present disclosure.

Fig. 13 illustrates a flowchart of a method for a transmitting device according to an embodiment of the present disclosure.

Figs. 14A- 14C show schematic signaling diagrams of communication between the terminal-side electronic device and the transmitting device in a wireless communication system via an omni-directional antenna according to an embodiment of the present disclosure.

Figs. 15A to 15C respectively show signaling diagrams of a schematic method of setting communication configuration for a scenario in which communication quality between the terminal-side electronic device and the transmitting device in the wireless communication system deteriorates according to an embodiment of the present disclosure;

FIG. 16 is a block diagram of an exemplary structure of a personal computer as an information processing device that can be employed in an embodiment of the present disclosure.

FIG. 17 is a block diagram illustrating a first example of a schematic configuration of an eNB to which the technology of the present disclosure can be applied.

FIG. 18 is a block diagram illustrating a second example of a schematic configuration of an eNB to which the technology of the present disclosure can be applied.

FIG. 19 is a block diagram illustrating an example of a schematic configuration of a smartphone to which the technology of the present disclosure can be applied; and

FIG. 20 is a block diagram illustrating an example of a schematic configuration of a car navigation device to which the technology of the present disclosure can be applied.

Although the embodiments described in this disclosure may be susceptible to various modifications and alternative forms, specific embodiments thereof are shown by way of example in the drawings and are described in detail herein. It should be understood, however, that the drawings and detailed description thereof are not intended to limit the embodiments to the particular forms disclosed, but on the contrary, the intention is to cover all modifications, equivalents, and alternatives falling within the spirit and scope of the claims.

DETAILED DESCRIPTION OF PREFERRED EMBODIMENTS

Hereinafter, exemplary embodiments of the present disclosure will be described with reference to the accompanying drawings. For the sake of clarity and conciseness, not all features of the embodiments are described in the description. However, it should be understood that many implementation-specific settings must be made during the implementation of the embodiments in order to achieve specific goals of developers, for example, to meet those constraints related to equipment and business, and these constraints may vary with different implementations. In addition, it should be understood that although the development work may be very complicated and time-consuming, it is only a routine task for those skilled in the art who benefit from this disclosure.

Here, it should also be noted that in order to avoid obscuring the present disclosure by unnecessary details, only processing steps and/or equipment structures closely related to the solutions at least according to the present disclosure are shown in the drawings, while other details not closely related to the present disclosure are omitted.

Vehicle-to-vehicle (V2V) communication is one of the most promising motivating factors for an intelligent transportation system, in which latency and reliability are the main concerns. In the scenarios of vehicle-to-vehicle (V2V) communication, vehicles on the road with some common interests can cooperatively form a platooning-based driving mode, in which adjacent vehicles keep a relatively close and almost constant distance. Generally, the vehicles in the communication system are arranged in a line or a column to form a platooning. There is usually a leader vehicle and several follower vehicles in a platooning, in which different follower vehicles have different distance from the leader vehicle, while under normal driving conditions, the follower vehicles have relatively close and basically constant distances therebetween. In the application scenario of the platooning, the leader vehicle transmits respective data, which can be the same or different, to all the follower vehicles through multicast communication. When a millimeter wave communication technology is applied, the leader vehicle will use a high directional beam for multicast. In addition, in order to protect data privacy, the communication coverage only needs to include the first vehicle to the last follower vehicle in the platooning, which is usually a way of sight propagation. In this way, the leader vehicle needs less energy to reach the communication coverage that can be covered by an omni-directional antenna. For example, considering an application example of information sharing in automatic driving (semi-automatic driving or fully automatic driving). In these application examples, the platooning needs to share high-resolution perception data, and usually the leader vehicle transmits its perception data (acquired by the on-board camera or radar) to the follower vehicles by multicast with the high directional beam. It has been proved that compared with independent driving, this platooning-based driving mode can significantly improve road capacity and energy efficiency.

It should be pointed out that the above platooning in which vehicles are arranged in rows or columns is only exemplary, and in specific applications, the platooning can also have other vehicle arrangements, such as the vehicles are arranged along a specific trajectory, etc., as long as these vehicles can drive cooperatively (for example, form a platooning) to carry out data communication between vehicles (for example, between the leader vehicle and the follower vehicles) by multicast.

However, in the application scenarios, there are usually some influencing factors/events that cause a follower vehicle to fail to receive the data from the leader vehicle successively, which leads to deterioration of the communication quality in the platooning. Such events may be related to inconsistency between the relative position among vehicles in the platooning and the coverage of directional beams, possible occlusion, and so on. For example, in V2V communication scenarios, the leader vehicle generally uses high directional beams for multicast, but the length, shape and surrounding environment of the platooning often change, which may lead to deterioration of the communication quality between the leader vehicle and the follower vehicles. Some typical scenarios/events will be described with examples below.

Event 1: The platooning is too long

Generally, when a millimeter wave communication technology is applied, the leader vehicle in the platooning will use a high directional beam for multicast communication, and the communication coverage only needs to include that from the leader vehicle to the last follower vehicle in the platooning, which is usually the way of sight propagation.

However, for example, when the platooning becomes too long due to factors such as widening of the spacing between vehicles, addition of new vehicles, etc.

during driving, the length of the platooning at this time has exceeded the communication coverage previously set for the platooning, which may cause a vehicle beyond the previous platooning length to fail to accurately or even successfully receive data from the leader vehicle, resulting in deterioration of the communication quality in the platooning.

Event 2: Some vehicles in the platooning are not covered by the beam

Generally, when the millimeter-wave communication technology is applied, the leader vehicle in the platooning will use a high directional beam for multicast communication. Moreover, during communication, in order to protect data privacy, the leader vehicle may dynamically adjust the coverage of the beam. In this way, a vehicle covered by the beam can successfully receive data, however, the coverage of the beam available for communication is limited, and a vehicle not covered by the beam will not be able to successfully receive data, even if the leader vehicle keeps increasing its power.

Event 3: The communication links between the leader vehicle and some vehicles in platooning are blocked

Generally, when the millimeter-wave communication technology is applied, the leader vehicle in the platooning will use a high directional beam for multicast communication. However, when there is a barrier or obstacle between the leader vehicle and the follower vehicles, and the barrier or obstacle partially or completely blocks the transmission path of the high directional beam for multicast communication, the direct communication links between the leader vehicle and the follower vehicles are blocked, and the follower vehicles may not be able to successfully receive data by receiving the high directional beam.

From the above, it can be seen that in the platooning communication scenario, some events may occur, such as events related to inconsistency between the relative positional relationship among vehicles in the platooning and the beam coverage (for example, the above-mentioned events 1 and 2) and the possible occlusion (for example, the above-mentioned event 3), etc. Such inconsistency or occlusion may be caused by relative displacement between the leader vehicle and the follower vehicles, the platooning turning or the platooning being too long, or even other events, which may cause the multicast communication carried out by the leader vehicle using the high directional beam to not accurately or even successively arrive at the follower vehicles, so that communication quality cannot be guaranteed. This will get worse in high frequency band communication. The above describes some typical events that may be encountered in the platooning communication scenario, but it should be pointed out that these are only exemplary, and other similar events, which may result in the communication quality not being guaranteed, may be encountered in the platooning communication scenario.

Therefore, when using the multicast communication, how to guarantee the communication quality between the leader vehicle and the follower vehicles in the platooning is a very important issue. In order to realize effective communication management, it is important to find out or to effectively determine the causes of communication link quality deterioration.

The present disclosure proposes the following basic idea: determine the communication condition in the communication scenario and dynamically adjust the communication configuration according to a specific communication condition in the communication scenario, thereby making the communication configuration better suitable for the communication scenario, thus being able to eliminate the influence of unfavorable factors and guarantee the communication quality between the leader vehicle and the follower vehicles in the platooning during multicast communication. In particular, the present disclosure proposes communication condition determination based on the measurement of heterogeneous antennas (the first type of antenna and the second type of antenna are combined), wherein the first type of antenna and the second type of antenna have different directivity characteristics. The directivity characteristics may particularly relate to pointing range, angle, etc. of the antenna. Preferably, the second type of antenna has wider directivity characteristics than the first type of antenna, for example, it has a wider pointing range and a wider pointing angle. For example, the pointing range of the second type of antenna may cover the pointing range of the first type of antenna. The present disclosure further proposes to accordingly adjust the communication configuration, especially the configuration for data communication via the second type of antenna, based on the communication condition determination.

It should be noted that the first type of antenna and the second type of antenna can be realized in various ways. According to an embodiment, the first type of antenna and the second type of antenna can be two separate sets of antennas that respectively transmit/receive beams with different pointing ranges for communication. For example, they can be two sets of antennas for directional beam communication and omnidirectional beam communication, respectively. According to an embodiment, the first type of antenna and the second type of antenna may be the same, but can transmit/receive beams with different pointing ranges for communication at a specific time. For example, it can be an antenna array that can be configured to be capable of both directional beam communication and omnidirectional beam communication, and only one of them can be performed at a specific time.

The following description will take the first type of antenna being a directional antenna and the second type of antenna being an omni-directional antenna as an example. It should be pointed out that the following description based on directional antenna and omnidirectional antenna is only exemplary, not restrictive, and various aspects and embodiments of the present disclosure can also be realized by other kinds of the first type of antenna and the second type of antenna, as long as the above-mentioned pointing range requirements are met.

An embodiment of the present disclosure will be described below with a platooning communication system as an example. In the embodiment of the present disclosure described below, a specific vehicle in the platooning system is set as a local management entity, called a leader vehicle, and other vehicles in the platooning system are set as follower vehicles. It is assumed that every vehicle in the platooning system, including the leader vehicle and the follower vehicles, is equipped with an omnidirectional antenna and a directional antenna. Specifically, the present disclosure simultaneously utilizes the omnidirectional antenna and directional antenna configured for the vehicles, in which the high directional beam emitted by the directional antenna is used for data communication between the leader vehicle and the follower vehicles, which improves the road capacity and energy efficiency, while the omnidirectional antenna-based communication between the leader vehicle and the follower vehicles is carried out to facilitate more appropriate and accurate judgement of the communication condition, so that upon the communication via the directional antenna is influenced, the type of the event influencing the communication can be judged by means of the omnidirectional antenna, and the communication configuration can be adjusted accordingly, so that the communication between vehicles can be improved. Communication via the directional antenna and communication via the omnidirectional antenna can be carried out in various ways known in the art, which will not be described in detail here.

It should be pointed out that although the platooning communication mode is taken as an example to describe the factors and events that influecen communication in the multicast communication operation in a team mode, similar factors and events may also occur in any other cooperative operation scenario including multiple terminal-side electronic devices, such as a wireless communication scenario including unmanned aerial vehicles formation flight, intelligent factory robots cooperative operation, and other multicast communication using sidelink. Therefore, the basic technical concepts and technical solutions of the present disclosure can also be applied to similar wireless communication scenarios using multicast, in which both directional antenna and omnidirectional antenna are simultaneously used for the multicast communication.

It should be pointed out that "omni-directional antenna" is only for convenience of expression, and is not limited to indicate only the well-known omni-directional antenna. For example, the omni-directional antenna can also indicate an antenna whose transmitting beam is not completely omni-directional, but close to omni-directional, or even an antenna which is suitable for a specific application scenario and has a specific beam coverage that is smaller than that of the omni-directional antenna but larger than that of the directional antenna, etc. For example, the coverage of the omnidirectional antenna may not be limited to 360 degree, but may also be a smaller angle, such as a specific angle in a specific direction, such as 240 degree or even 180 degree, etc.

The basic technical concept and exemplary embodiments of the wireless communication system of the present disclosure will be described below with reference to the accompanying drawings.

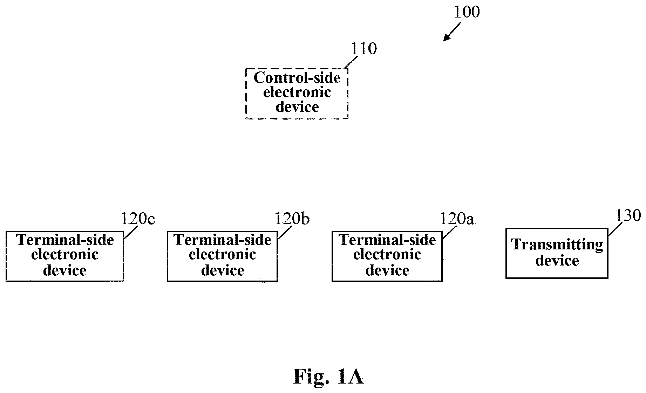

Fig. 1A shows a schematic diagram of a wireless communication system 100 according to an embodiment of the present disclosure. The wireless communication system 100 may include a transmitting device 130, terminal-side electronic devices 120a, 120b and 120c. Although three terminal-side electronic devices are shown in Fig. 1A, it should be understood that the wireless communication system 100 can also include any other suitable number of terminal-side electronic devices.

It should be pointed out that the wireless communication system of the present disclosure can be applied to various wireless communication scenarios in which the multicast is performed by using sidelink, such as platooning communication, unmanned aerial vehicle formation flight, intelligent factory robot formation operation, etc. For example, each of the transmitting device 130 and the terminal-side electronic devices 120a, 120b, and 120c can also be a vehicle, an unmanned aerial vehicle, a robot, or any other electronic device suitable for multicast using sidelink.

In some embodiments, the wireless communication system 100 may also optionally include a control-side electronic device 110, which may be configured to communicate with the transmitting device 130 and the terminal-side electronic devices 120a, 120b and 120c through a wireless communication technology such as 4G and 5G, etc. In this disclosure, "control-side electronic device" has the full breadth of its common meaning, for example, it can include a device that is a part of a wireless communication system or a radio system to facilitate communication condition determination and/or communication configuration setting.

In some embodiments, the control-side electronic device 110 may be, for example, a base station (e.g., gNB) or a roadside unit (RSU) or the like or a part thereof. In this disclosure, the term "base station" has the full breadth of its common meaning, and at least includes a wireless communication station which is a part of a wireless communication system or a radio system to facilitate communication. As an example, the base station may be, for example, an eNB in a 4G communication standard, a gNB in a 5G communication standard, a remote radio head, a wireless access point, an unmanned aerial vehicle control tower, or a communication device that performs similar functions. In some embodiments, any one of the transmitting device 130 and the terminal-side electronic devices 120a, 120b, and 120c may act as the control-side electronic device 110 to implement communication condition determination and/or communication configuration setting.

The transmitting device 130 can communicate with the terminal-side electronic devices 120a, 120b, and 120c by multicast utilizing sidelink, so as to travel in a cooperative manner. For example, each of the transmitting device 130 and the terminal-side electronic devices 120a, 120b and 120c may be a vehicle, wherein the transmitting device 130 is a leader vehicle and each of the terminal-side electronic devices 120a, 120b and 120c is a follower vehicle. The leader vehicle and the follower vehicles can cooperatively form a platooning-based driving mode, and because the terminal-side electronic devices 120a, 120b and 120c are arranged in a specific positional relationship, for example, they are usually arranged in a row, the transmitting device 130 generally uses directional antennas to transmit beams with high directivity for multicast so as to improve the transmission efficiency. The transmitting device 130 can transmit the perception data acquired by the transmitting device 130 (for example, the data acquired by a camera or radar installed on the transmitting device 130) to the terminal-side electronic devices 120a, 120b and 120c by multicast using the sidelink, so that the vehicles can share the data while traveling cooperatively.

The transmitting device 130 and the terminal-side electronic devices 120a, 120b and 120c may all be configured with respective directional antennas and omnidirectional antennas. It should be understood that the directional antennas and omnidirectional antennas here are only examples of the first type of antenna and the second type of antenna with different pointing ranges. The directional antenna and the omni-directional antenna may be two sets of antennas for directional beam communication and omni-directional beam communication, respectively, and alternatively, they may be an antenna array that can be configured to be capable of both directional beam communication and omni-directional beam communication and only carry out one of them at a specific time.

However, in the process of device traveling, the multicast communication quality between the transmitting device and the terminal-side electronic devices may deteriorate due to position change of the terminal-side electronic devices and possible change of the surrounding environment, or even addition of new terminal-side electronic devices. Therefore, the present disclosure proposes a technical idea to deal with the deterioration of communication quality by detecting the communication condition and adjusting the communication configuration accordingly, and an embodiment according to the present disclosure will be described below.

It should be noted that although the figure shows that the transmitting device and the terminal-side electronic device are lined up and the transmitting device is located at the head of the line, this is only exemplary, and the transmitting device can be located at any other position in the line, such as the tail of the line or any other specific position in the line except the tail. It should be pointed out that although the figure shows that the terminal-side electronic devices 120a, 120b and 120c are usually arranged in a row, this is only an example, and the terminal-side electronic devices can be arranged in other suitable arrangements/layouts, as long as the terminal-side electronic devices can operate cooperatively and use directional beams for multicast communication. Therefore, the technical concept of the present disclosure can be equally applied to such a case.

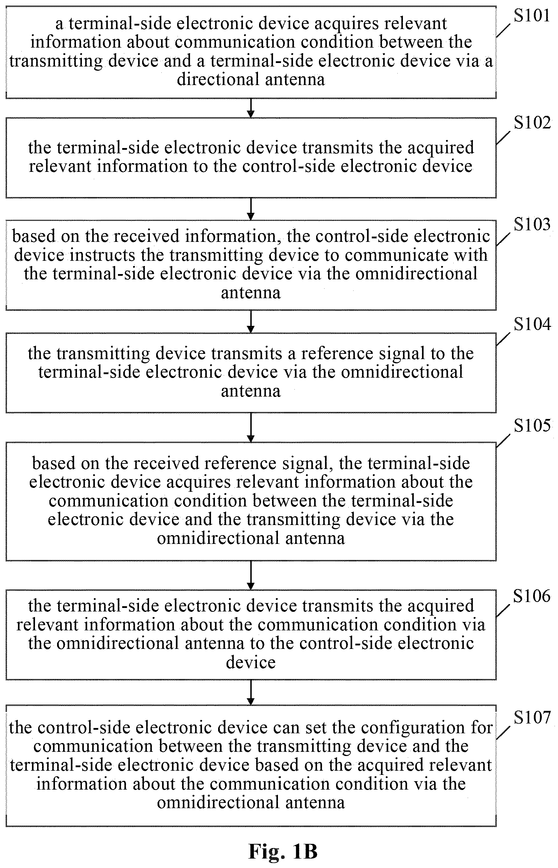

Fig. 1B schematically shows an exemplary signaling interaction flow chart of communication in a wireless communication system according to an embodiment of the present disclosure.

At S101, a terminal-side electronic device acquires relevant information about communication condition between the transmitting device and a terminal-side electronic device via a directional antenna.

As an example, the communication condition via the directional antenna can be continuously/periodically acquired by the terminal-side electronic device, or acquired in response to change of the data communication condition. As another example, the terminal-side electronic device can receive an instruction/request from the control-side electronic device to acquire the communication condition between the terminal-side electronic device and the transmitting device via the directional antenna.

As an example, the relevant information can be relevant parameters themselves indicating the communication condition, for example, raw data indicating the communication condition, so that the control-side electronic device can accurately judge the communication condition based on the received parameter information, or the relevant information can be quantized values of the relevant parameters, for example, the values obtained by quantizing the raw data according to a specific threshold, in order to save communication resources. As another example, the relevant information can even be a judgment result of the communication condition or an instruction or request based on the judgment result, which can be transmitted to the control-side electronic device to further save the working overhead at the control-side electronic device.

At S102, the terminal-side electronic device transmits the acquired relevant information to the control-side electronic device. As an example, the terminal-side electronic device may transmit the acquired relevant information whenever it acquires the relevant information. Additionally or alternatively, the obtained relevant information can be transmitted only under a specific communication condition. As an example, the information can be transmitted only when the communication condition deteriorates, so that less information is transmitted, transmission resources are saved and transmission efficiency is improved.

At S103, based on the received information, the control-side electronic device instructs the transmitting device to communicate with the terminal-side electronic device via the omnidirectional antenna, so as to acquire the communication condition between the terminal-side electronic device and the transmitting device via the omnidirectional antenna.

As an example, the control-side electronic device can judge the communication condition via directional antenna based on the obtained relevant information (for example, raw data or quantized values), and instruct the transmitting device to carry out the communication via omni-directional antenna only under a specific communication condition via directional antenna, for example, the communication condition becomes worse. As another example, in a case that the relevant information is only transmitted under a specific communication condition via directional antenna, the control-side electronic device can instruct the transmitting device to carry out the communication via omni-directional antenna whenever it receives the relevant information. For example, when the relevant information is transmitted only when the communication condition is poor, the control-side electronic device can instruct the transmitting device to carry out the communication via omni-directional antenna upon receipt of the transmitted information, thus reducing the workload of the control-side electronic device.

At S104, the transmitting device transmits a reference signal to the terminal-side electronic device via the omnidirectional antenna, and at S105, based on the received reference signal, the terminal-side electronic device acquires relevant information about the communication condition between the terminal-side electronic device and the transmitting device via the omnidirectional antenna, and at S106, the terminal-side electronic device transmits the acquired relevant information about the communication condition via the omnidirectional antenna to the control-side electronic device.

As an example, similar to the aforementioned relevant information about the communication condition via the directional antenna, the relevant information about the communication condition via the omni-directional antenna may also be the relevant parameters themselves indicating the communication condition, their quantized value, or even the judgment result of the communication condition.

At S107, the control-side electronic device can set the configuration for communication between the transmitting device and the terminal-side electronic device based on the acquired relevant information about the communication condition via the omnidirectional antenna. As an example, the control-side electronic device can judge what factor influences the communication condition (or what kind of event it belongs to) according to the relevant information, and adjust the communication configuration according to the judgment result accordingly, so as to improve the communication quality between the transmitting device and the terminal device.

According to one embodiment, the configuration for communication between the terminal-side electronic device and the transmitting device may refer to the communication configuration for data communication between the terminal-side electronic device and the transmitting device. Preferably, the communication configuration refers to the configuration related to directional antenna communication between the terminal-side electronic device and the transmitting device, such as the transmission power, the beam transmitting angle and coverage (corresponding to the directivity and coverage of the transmitting beam) of the directional antenna of the transmitting device, the receiving configuration of the terminal-side electronic device, and so on. Alternatively, the communication configuration can also refer to other communication configurations related to data communication, such as at least one of the identifier and configuration of a relay device that can be used for data communication (it should be noted that when the configuration information of the relay device is stored in correspondence with the identifier, the configuration parameters of the relay device can be directly known by knowing the identifier of the relay device, and in this case, only the identifier can be transmitted without transmitting the configuration information again), and so on. As an example, the communication configuration can also be set based on the positions of the terminal-side electronic devices and the transmitting device, information (e.g., environmental information, etc.) sensed by cameras or radars of the transmitting device and/or the terminal-side electronic devices, etc.

Therefore, the communication between the transmitting device and the terminal-side electronic device in the wireless communication system can be performed based on the adjusted communication configuration, which can effectively eliminate the influence caused by previous unfavorable factors and improve the communication quality. As an example, the adjusted communication configuration can be transmitted to both the transmitting device and the terminal-side electronic device, so that the transmitting device can carry out communication based on the adjusted communication configuration, and the terminal-side electronic device can also accordingly adjust the receiving configuration before receiving, so as to carry out appropriate reception. As another example, the adjusted communication configuration can be transmitted to the transmitting device, so that the transmitting device can carry out communication based on the adjusted communication configuration, and the terminal-side electronic device can determine its own receiving configuration by using the technology known in the art when receiving, so as to conduct appropriate data communication. It should be noted that the adjusted communication configuration can be transmitted via any suitable communication link between the control-side electronic device and the transmitting device/terminal-side electronic device, which can be a 4G link, a 5G link or any other link in the field, and will not be described in detail here.

According to one embodiment, the control-side electronic device may be, for example, a base station (e.g., gNB), a roadside unit (RSU), etc. or a part thereof, and it may communicate with the transmitting device and the terminal-side electronic device by means of any communication manner known in the art, to instruct the transmitting device and the terminal-side electronic device to operate.

According to another embodiment, the control-side electronic device can be a terminal-side electronic device itself, in which case, the terminal-side electronic device judges and informs the communication condition via the directional antenna to the transmitting device to carry out omni-directional antenna communication, and then the terminal-side electronic device judges the communication condition via the omnidirectional antenna, utilizes it to set the communication configuration, and informs the transmitting device of the set communication configuration. It should be noted that the set communication configuration can be transmitted to the transmitting device, for example, via the omni-directional antenna or other suitable link.

According to yet another embodiment, the control-side electronic device can be the transmitting device itself, and in such a case, the transmitting device can instruct the terminal-side electronic device, for example, by sending a reference signal, to acquire the relevant information about the communication condition, including the relevant information about the communication condition via directional antenna and the relevant information about the communication condition via omnidirectional antenna, and to notify the relevant information to the transmitting device, so that the transmitting device can judge the communication condition, or, the relevant information can be directly acquired by the transmitting device based on the feedback from the terminal-side electronic device, so that the transmitting device can judge the communication condition, therefore, the transmitting device can set the communication configuration according to the judgment of the communication condition. It should be noted that if the communication configuration needs to be transmitted to the terminal-side electronic device, it can be transmitted to the terminal-side electronic device, for example, via an omni-directional antenna or any other suitable link. Of course, the communication configuration may not be transmitted to the terminal-side electronic device.

It should be pointed out that the control-side electronic devices in each operation step in the above signaling can be the same electronic device or different electronic devices. As an example, the control-side electronic device in each operation step may be the same control-side electronic device, transmitting device or terminal-side electronic device. As another example, each operation step can be performed by different control-side electronic devices, transmitting devices or terminal-side electronic devices, respectively.

According to an embodiment of the present disclosure, by judging the communication condition between the transmitting device and the terminal-side electronic device in the wireless communication system and dynamically adjusting the communication configuration based on the communication condition, it is possible to further improve the resource utilization rate and ensure the communication quality.

An electronic device and a communication method in a wireless communication system using sidelink for multicast according to an embodiment of the present disclosure will be described below with reference to the accompanying drawings.

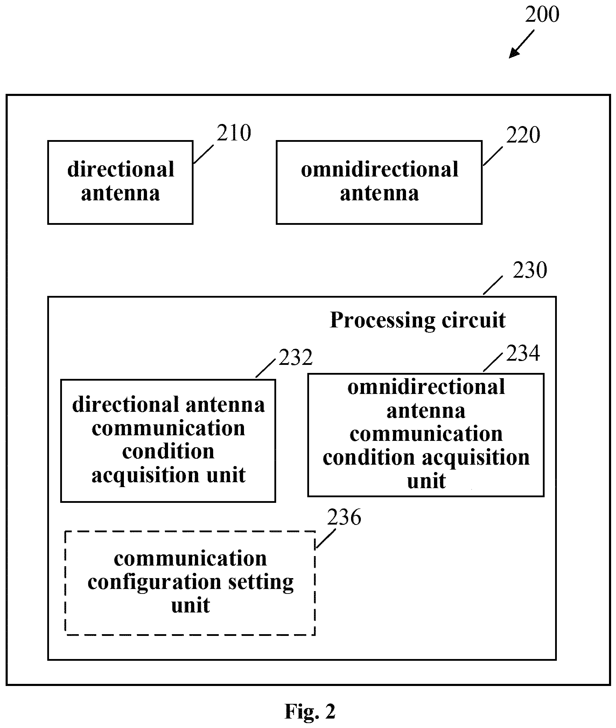

Fig. 2 shows a schematic block diagram of a terminal-side electronic device 200 according to an embodiment of the present disclosure. The terminal-side electronic device 200 may correspond to terminal-side electronic devices 120a, 120b or 120c in Fig. 1A, which can communicate with a control-side electronic device/a transmitting devics in a wireless communication system. For clarity, the following description will take the first type of antenna being a directional antenna and the second type of antenna being an omni-directional antenna as an example. As shown in Fig. 2, the terminal-side electronic device 200 may include a directional antenna 210, an omnidirectional antenna 220 and a processing circuit 230.

According to an embodiment of the present disclosure, the processing circuit 230 may be configured to acquire a first information indicating a communication condition between the terminal-side electronic device 200 and the transmitting device via a directional antenna; and acquire a second information indicating a communication stuatus between the terminal-side electronic device 200 and the transmitting device via an omni-directional antenna, wherein the communication between the terminal-side electronic device 200 and the transmitting device via the omni-directional antenna is performed based on the first information; wherein a configuration for communication between the electronic device 200 and the transmitting device can be set based on at least the second information.

In the structural example of the above device, the processing circuit 230 may be in the form of a general-purpose processor, or may be a dedicated processing circuit, such as an ASIC. For example, the processing circuit 230 can be configured by a circuit (hardware) or a central processing device such as a central processing unit (CPU). In addition, the processing circuit 230 may carry a program (software) for operating the circuit (hardware) or the central processing device. The program can be stored in a memory (such as arranged in the memory) or an external storage medium connected from the outside, and downloaded via a network (such as the Internet).

According to an embodiment of the present disclosure, the processing circuit 230 may include various units for realizing the above functions, such as a directional antenna communication condition acquisition unit 232 configured to acquire a first information indicating the communication condition between the terminal-side electronic device 200 and the transmitting device via a directional antenna, and an omnidirectional antenna communication condition acquisition unit 234 configured to acquire a second information indicating the communication stuatus between the terminal-side electronic device 200 and the transmitting device via an omni-directional antenna.

The processing circuit 230 may optionally include a communication configuration setting unit 236 configured to set the configuration for communication between the terminal-side electronic device 200 and the transmitting device based on the second information. The communication configuration setting unit 236 is drawn by a dotted line to illustrate that the unit is not necessarily included in the processing circuit. As an example, the unit may be located in the terminal-side electronic device outside the processing circuit, or even outside the terminal-side electronic device 200.

These units included in the processing circuit 230 may be communicatively coupled to each other (not shown) and/or to one or more of the directional antenna 210 and the omnidirectional antenna 220 (not shown). It should be noted that although each unit is shown as a separate unit in Fig. 2, one or more of these units can be combined into one unit or split into multiple units.

It should be noted that each of the above units only belongs to a logical module classified according to the specific function it implements, instead of limiting its specific implementation manner, for example, it can be implemented in software, hardware, or a combination of software and hardware. In an actual implementation, the foregoing units may be implemented as independent physical entities, or may be implemented by a single entity (for example, a processor (CPU or DSP, etc.), an integrated circuit, etc.). Furthermore, that the foregoing units are indicated by dotted lines in the figure indicates that the foregoing units may not actually exist, and the operation / functionality they achieve can be implemented by the processing circuit itself.

It should be noted that the directional antenna 210 and the omnidirectional antenna 220 are only examples of the first type of antenna and the second type of antenna with different pointing ranges. According to an embodiment, the directional antenna 210 and the omnidirectional antenna 220 can be two sets of antennas or antenna arrays for directional beam communication and omnidirectional beam communication, respectively, or a set of antenna arrays that can be configured to carry out both directional beam communication and omnidirectional beam communication, but carry out only one of them at different times. As an example, the antennas 210 and 220 may be a communication unit or a part of the communication unit, and the communication unit may be configured to communicate with a control-side electronic device, a transmitting device or other terminal-side electronic devices under the control of the processing circuit 230. In one example, the communication unit can be implemented as a transmitter or a transceiver, including antenna arrays, such as both omni-directional antennas and directional antennas, or a single antenna array capable of realizing the functions of both omni-directional antennas and directional antennas, and/or communication components such as radio frequency links. In one embodiment, the communication unit can transmit the relevant information about the communication condition determined in the processing circuit to the control-side electronic device. In one embodiment, the communication unit can also transmit and receive signaling required for the process described in the embodiment according to the present disclosure.

Although it is shown in Fig. 2 that the processing circuit 230 is separated from the antennas 210 and 220, the processing circuit 230 may also be implemented to include the antennas. In addition, the processing circuit 230 can also be implemented to include one or more of other components in the terminal-side electronic device, or can be implemented as the terminal-side electronic device. In actual implementation, the processing circuit 230 can be implemented as a chip (such as an integrated circuit module including a single wafer), a hardware component or a complete product.

It should be noted that although it is shown in Fig. 2 that the antennas 210 and 220 are included in the electronic device 200, it should be noted that the antennas 210 and 220 may be antennas coupled/attached to the electronic device 200, but not included in the electronic device 200.

It should be understood that Fig. 2 is only a schematic structural configuration of the terminal-side electronic device, and the terminal-side electronic device 200 may also include other possible components (e.g., memory, etc.). Optionally, the control-side electronic device 200 may also include other components not shown, such as a memory, a radio frequency link, a baseband processing unit, a network interface, a processor, a controller, and the like. The processing circuit may be associated with the memory and/or the antennas. For example, the processing circuit may be directly or indirectly (for example, other components may be disposed therebetween) connected to the memory for data access. Also for example, the processing circuit may be directly or indirectly connected to the antennas to transmit radio signals via the communication units and receive radio signals via the communication units.

The memory may store various kinds of information generated by the processing circuit 230 (for example, relevant information about communication condition, configuration information of the terminal-side electronic device, location information, etc.), programs and data for controlling the operation of the terminal-side electronic device, data to be transmitted by the terminal-side electronic device, etc. The memory can also be located inside the terminal-side electronic device but outside the processing circuit, or even outside the terminal-side electronic device. The memory may be a volatile memory and / or a non-volatile memory, for example, the memory may include, but not limited to, random access memory (RAM), dynamic random access memory (DRAM), static random access memory (SRAM), read-only memory (ROM), and flash memory.

The functions of the units in the processing circuit 230 of the terminal-side electronic device 200 in Fig. 2 will be described in detail below.

According to an embodiment of the present disclosure, the first information indicating the communication condition between the terminal-side electronic device 200 and the transmitting device via the first type of antenna can be generated by the terminal-side electronic device 200. For example, the first type of antenna can be a directional antenna. In one embodiment, the first information can be acquired by the directional antenna communication condition acquisition unit 232.

According to an embodiment of the present disclosure, the first information may include any one of the following or its quantized value: communication quality information about data communication between the terminal-side electronic device 200 and the transmitting device via the first type of antenna; and channel quality information determined based on the reference signal transmitted by the transmitting device via the first type of antenna. The channel quality information may include any one of the following: power parameters of the received reference signal transmitted by the transmitting device via the first type of antenna, for example, reference signal reception power (RSRP) and reference signal reception quality (RSRQ); and channel state, e.g., channel quality indicator (CQI), between the terminal-side electronic device 200 and the transmitting device via the first type of antenna estimated based on the received reference signal.

According to an embodiment of the present disclosure, the first information may be information indicating the communication condition via the first type of antenna (for example, relevant parameters of the communication condition, such as raw data indicating the communication condition) itself, such as various parameters related to the data communication quality, various parameters related to the channel quality via the first type of antenna, etc.

Alternatively or additionally, the first information may also be a quantized value of the information indicating the communication condition, for example, it may be a simple quantized value indicating the communication condition obtained from the information. According to one embodiment, the normalized value obtained by normalizing the information can be used as the quantized value, or the information can be quantized by various quantization methods in the field in order to reduce the number of bits required for information transmission.

According to another embodiment, a threshold (e.g., a threshold value) related to the communication condition can be set to process this information so as to determine which level of communication condition the acquired communication condition belongs to, and the determination result can be directly acquired as the first information. As an example, the communication condition can be represented by a corresponding level value, and the level value can be transmitted as the first information. For example, it is assumed that the communication condition can be divided into 1 to N levels, and the numerical value N corresponding to the level of the acquired communication condition is transmitted as the first information. In this case, the level value can also be regarded as a quantized value.

According to another embodiment, the first information may be a value that directly indicates whether the communication condition is good or not, for example, it may be indicated by a binary bit. For example, it is to indicate the communication condition by judging whether the communication condition is higher than a specific threshold or not, where 1 indicates that the communication condition is good, higher than the specific threshold and can be maintained continuously; 0 indicates that the communication condition is poor, which is lower than the specific threshold and needs to be adjusted. In this way, the number of bits required for transmission of the first information can be further reduced, so the transmission efficiency will be further improved. In this case, the specific threshold can be regarded as a quantization threshold capable of quantizing the relevant information about the communication condition, and the binary bit can be regarded as a kind of quantized value and transmitted as the first information.

According to an embodiment of the present disclosure, the first information can be continuously or periodically acquired by the terminal-side electronic device, and alternatively or additionally, it can also be acquired in response to a specific trigger (for example, a specific reference signal transmitted by the transmitting device, etc.).

According to an embodiment of the present disclosure, the first information, after being acquired by the terminal-side electronic device, can be tranmitted by the terminal-side electronic device to the control-side electronic device/transmitting device, so that the control-side electronic device/transmitting device can judge the communication condition and judge whether to conduct communication via the second type of antenna based on the first information. In this way, the control-side electronic device/transmitting device can determine whether to conduct the communication via the second type of antenna based on parameters of the communication condition indicated by the first information themselves or their quantized values, such as the communication condition level value, binary value representing the communication condition being good or poor, etc..

Alternatively or additionally, the terminal-side electronic device can transmit the first information (preferably, a quantized value or a binary value) or specific instruction/indication information to the control-side electronic device/transmitting device only when it is judged that the communication condition is poor based on the first information, and the control-side electronic device/transmitting device can directly carry out the communication via the second type of antenna upon receipt of the first information or the specific instruction/indication information, without making judgment, thus reducing the processing overhead of the control-side electronic device.

According to an embodiment, the specific instruction/indication information may be information indicating whether the communication condition via the first type of antenna is good or bad. According to an example, the terminal-side electronic device can transmit any 1-bit instruction information to the control-side electronic device/transmitting device when it is judged that the communication condition is poor, so as to inform the control-side electronic device/transmitting device that the communication via the second type of antenna can be carried out. The instruction information transmitted at this time can also be equivalent to the first information, and the control-side electronic device/transmitting device can carry out the communication via the second type of antenna once receipt of such instruction information.

According to one embodiment, the terminal-side electronic device can transmit the first information to the control-side electronic device/transmitting device only when it is judged that the communication condition is poor based on the first information, and the control-side electronic device/transmitting device can also make a judgment based on the received first information to verify whether the judgment by the terminal-side electronic device is correct, which can further improve the accuracy of the communication condition judgment.

According to an embodiment of the present disclosure, the terminal-side electronic device can directly transmit the first information to the transmitting device or the control-side electronic device, for example, via the first type of antenna, for example, when there is still a sidelink between the terminal-side electronic device and the transmitting device or the control-side electronic device. Alternatively, the terminal-side electronic device can transmit the first information to the transmitting device or the control-side electronic device via any other device, for example, via a relay device or any other auxiliary communication device.

According to an embodiment, the first information can be information about data communication quality or its quantized value, and can be periodically or continuously acquired by the terminal-side electronic device. In this case, the terminal-side electronic device can acquire the communication quality information or its quantized value as the first information when performing data communication with the transmitting device via the first type of antenna.

According to another embodiment, the first information can be channel quality information or its quantized value. In this case, the terminal-side electronic device can perform channel quality estimation based on a first reference signal transmitted by the transmitting device via the first type of antenna and acquire the channel quality information or its quantized value as the first information.

According to one embodiment, the acquiring the first information indicating the communication condition between the terminal-side electronic device 200 and the transmitting device via the first type of antenna includes determining data communication quality between the terminal-side electronic device 200 and the transmitting device via the first type of antenna; and in response to the data communication quality between the terminal-side electronic device 200 and the transmitting device via the first type of antenna being lower than a corresponding threshold, determining the first information based on the received first reference signal transmitted by the transmitting device via the first type of antenna. Therefore, the terminal-side electronic device can estimate the channel quality based on the received first reference signal, and acquire information about the channel quality as the first information. The first information may be determined based on any suitable channel quality estimation technique. As an example, the first information can be transmitted to the control-side electronic device/transmitting device as described above.

According to embodiments of the present disclosure, the first reference signal can be transmitted by the transmitting device via the first type of antenna in various ways. Particularly, the first reference signal may be spontaneously transmitted by the transmitting device and/or transmitted by the transmitting device in response to a request or instruction.

According to one embodiment, the first reference signal is continuously transmitted or periodically transmitted (for example, transmitted at fixed intervals) by the transmitting device via its first type of antenna. This situation can be called spontaneous transmission by the transmitting device.

According to another embodiment, the transmitting device may transmit the first reference signal depending on the data communication quality between the transmitting device and the terminal-side device via the first type of antenna. As an example, for example, the transmitting device may judge the data communication condition between the transmitting device and the terminal-side device via the first type of antenna, and transmit the first reference signal based on the judgment result. This situation can also be called spontaneous transmission by the transmitting device.

According to an embodiment of the present disclosure, the transmitting device can make a judgment based on the relevant information about the data communication quality from the terminal-side device via the first type of antenna or feedback about data communication from the terminal device.

In yet another embodiment, the terminal-side electronic device 200 can transmit information about data communication quality between the terminal-side electronic device 200 and the transmitting device via the first type of antenna, e.g., error rate, accuracy rate, etc., to the transmitting device, such transmission can be periodic or in response to the information about data communication quality being lower than a corresponding threshold, and can be a direct transmission or a relay transmission via the control-side electronic device or the like. The transmitting device compares the received information about data communication quality with a specific threshold, and transmits a first reference signal via the first type of antenna of the transmitting device, for example, directional antenna 210, if the data communication quality information is lower than the corresponding threshold.

In yet another embodiment, the terminal-side electronic device 200 may periodically transmit feedback about the data communication quality to the transmitting device, and the transmitting device may transmit the first reference signal in response to the received feedback about data communication quality. For example, the terminal-side electronic device can judge whether the data communication quality is lower than a specific threshold, and transmit the judgment result as the feedback to the transmitting device. The transmitting device transmits the first reference signal when the data communication quality feedback is a specific value indicating the poor data communication quality. For example, the feedback can be indicated by a binary data, with a specific value of 1 representing good and a specific value of 0 representing poor.

In one embodiment, when the data communication quality between the terminal-side electronic device 200 and the transmitting device via the first type of antenna is poor, the transmitting device may not receive the feedback transmitted by the terminal-side electronic device 200 due to packet loss or the like. In this embodiment, the first reference signal may be re-transmitted by the transmitting device via the first type of antenna of the transmitting device, e.g., directional antenna 210, in response to not receiving the feedback about the data communication quality from the terminal-side electronic device 200 within a certain period of time.

In one embodiment, the first reference signal can be transmitted by the transmitting device in response to a request/instruction from the terminal-side electronic device 200 and/or the control-side electronic device, the request/instruction can be transmitted by the terminal-side electronic device 200 via the first type of antenna and/or by the control-side electronic device when the data communication quality between the terminal-side electronic device 200 and the transmitting device via the first type of antenna is lower than the corresponding threshold. For example, when the data communication quality between the terminal-side electronic device 200 and the transmitting device via the first type of antenna is poor to a certain extent, for example, the bit error rate is higher than a certain threshold, or the terminal-side electronic device 200 has not received the data transmitted from the transmitting device via the first type of antenna for a certain period of time, the request/instruction can be transmitted to the transmitting device directly or through the control-side electronic device, for example, base station or roadside unit, etc., as a relay.

In one embodiment, the communication between the terminal-side electronic device 200 and the transmitting device via the second type of antenna can be based on, for example, the first information acquired by the directional antenna communication condition acquisition unit 232 which indicates communication condition between the terminal-side electronic device 200 and the transmitting device via the first type of antenna.

Here, the first type of antenna and the second type of antenna may have different directivity characteristics. For example, the second type of antenna can have a wider directivity characteristic than the first type of antenna, such as a wider pointing range and a wider pointing angle. For example, the first type of antenna may be a directional antenna, and the second type of antenna may be an omnidirectional antenna. According to embodiments, the antenna of the terminal-side electronic device 200 and the antenna of the transmitting device can be implemented in the same or similar way. Particularly, according to the embodiment, the first type of antenna of the terminal-side electronic device 200 and the first type of antenna of the transmitting device may be the same type of antenna, for example, directional antenna, and their characteristics, for example, pointing range, may be the same or different. The same is true for the second type of antenna of the terminal-side electronic device 200 and the second type of antenna of the transmitting device.

According to embodiments, the antenna of the terminal-side electronic device 200 and the antenna of the transmitting device can also be implemented in different ways, as long as they each meet the requirements of pointing range. For example, one of the antenna of the terminal-side electronic device 200 and the antenna of the transmitting device may be a single antenna array with different operating states, while the other may be two separate sets of antennas.

According to one embodiment, in response to the first information being lower than a first threshold or the comparison result between the first information and the first threshold being a specific value, the communication between the terminal-side electronic device and the transmitting device via the second type of antenna is carried out by the transmitting device. As an example, in response to the first information being lower than the first threshold, for example, the RSRP is lower than -140dBm, or the comparison result between the first information and the first threshold being a specific value, for example, the comparison result between the RSRP and the first threshold - 140dBm being negative, that is, the RSRP is lower than -140dBm, or if 1 means greater than or equal to and 0 means less than, the comparison result is 0, the communication between the terminal-side electronic device 200 and the transmitting device via the second type of antenna is carried out by the transmitting device. The first threshold may be set based on communication requirement, the type of the first information, etc.

According to one embodiment, the communication via the second type of antenna can be carried out by the transmitting device spontaneously and/or carried out by the transmitting device in response to a request or instruction.

According to one embodiment, the transmitting device can judge the received first information and conduct the communication via the second type of antenna based on the judgment result. This can be called spontaneous transmission.

According to one embodiment, when the first information is a binary value indicating the data communication quality, such as the above-mentioned feedback of data communication quality, whether the transmitting device performs the communication via the second type of antenna or not may be in response to whether the first information is a specific value. For example, the communication via the second type of antenna is carried out only when the first information is 0. It should be noted that the judgment operation on the first information can also be performed in other ways, for example, as described above.

According to one embodiment, the transmitting device can carry out the communication via the second type of antenna in response to the request/instruction from the terminal-side electronic device/control-side electronic device, and the first information or instruction information can be transmitted by the terminal-side electronic device to the transmitting device as the request/instruction only if the data communication quality is poor. Once receipt of the information from the terminal-side electronic device/control-side electronic device via the first type of antenna, such as the request or instruction information, the transmitting device can directly carry out the communication via the second type of antenna, without verifying the first information. As another example, when receiving the request/instruction, the transmitting device can still judge the first information, which can further improve the accuracy of judging the communication condition.

Additionally, in an embodiment, further in response to a change between the current first information and the previous first information being within a predetermined range, for example, the absolute value of the difference between the current RSRQ and the previous RSRQ is less than 5, the communication between the terminal-side electronic device 200 and the transmitting device via the second type of antenna can be carried out by the transmitting device spontaneously or based on the instruction from the control-side electronic device.

The spontaneous or instructed communication can be carried out as described above, and will not be described in detail here.

By comparing the current first information with the previous first information, it can be determined whether the communication condition via the first type of antenna has changed steadily, thus avoiding the ping-pong effect triggered by false alarm caused by mutation or measurement error, communication resource wasting caused by frequent adjustment of communication configuration, and so on.

According to the embodiment of the present disclosure, in response to the communication by the transmitting device via the second type of antenna, the second information can be acquired by the terminal-side electronic device 200, and information about the second information, such as the second information itself or the quantization result of the second information, etc., is transmitted to the transmitting device and/or the control-side electronic device. In one embodiment, the second information can be acquired by the omnidirectional antenna communication condition acquisition unit 234.

According to one embodiment, the second information may indicate the communication condition between the terminal-side electronic device 200 and the transmitting device via the second type of antenna. The second information may include information about channel quality between the terminal-side electronic device 200 and the transmitting device via the second type of antenna or its quantized value, such as RSRP, RSRQ, CQI, etc. As an example, the second information can be the information about channel quality via the second type of antenna per se or its quantized value, the quantized value can be acquired in a similar way with the quantization of the first information described above and will not be described in detail here.

The information about channel quality via the second type of antenna can be estimated by various methods known in the art. According to one embodiment, the second information may be determined based on a second reference signal transmitted by the transmitting device via the second type of antenna. As an example, the second information can be determined by channel quality estimation based on the second reference signal, which can be based on any suitable channel quality estimation technique.

According to one embodiment, acquiring the second information indicating the communication condition between the terminal-side electronic device and the transmitting device via the second type of antenna may include determining the second information based on the received second reference signal transmitted by the transmitting device via the second type of antenna, in response to the first information being lower than the first threshold or the comparison result between the first information and the first threshold being a specific value.

According to embodiments of the present disclosure, the second reference signal may be transmitted by the transmitting device in various appropriate ways. As an example, the second reference signal may be transmitted by the transmitting device spontaneously or in response to a request/instruction, as described above.

In one embodiment, the second reference signal can be transmitted by the transmitting device via the second type of antenna, e.g., omnidirectional antenna 220, of the transmitting device in response to a request from the terminal-side electronic device 200, wherein the request can be transmitted by the terminal-side electronic device 200 via the second type of antenna, e.g., omnidirectional antenna 220, of the terminal-side electronic device 200, when the first information is lower than the first threshold or the comparison result between the first information and the first threshold is a specific value.

In another embodiment, the terminal-side electronic device 200 can transmit the first information or the comparison result of the first information and the first threshold to the transmitting device or the control-side electronic device. The second reference signal may be transmitted by the transmitting device via the second type of antenna, for example, omnidirectional antenna 220, of the transmitting device in response to the received first information being lower than the first threshold or the comparison result between the received first information and the first threshold being a specific value.

It should be understood that although the second type of antenna of the terminal-side electronic device 200 and the second type of antenna of the transmitting device are the same type of antennas, for example, omnidirectional antenna, their characteristics, for example, pointing range, may be the same or different.

In another embodiment, the transmitting device can also transmit a second reference signal in response to an instruction from the control-side electronic device, which can be transmitted by the control-side electronic device based on the relevant information about the communication condition of communication between the transmitting device and the control-side electronic device via the first type of antenna.

According to an embodiment of the present disclosure, the configuration for communication between the terminal-side electronic device 200 and the transmitting device can be set based on at least the second information. According to one embodiment, the communication configuration can be appropriately set according to comparison result of the second information and a specific threshold, so as to further improve the communication quality between the terminal-side electronic device and the transmitting device. The meaning and setting of communication configuration can be that as described above, which will not be described in detail here.

According to embodiments of the present disclosure, the communication configuration can be set/adjusted by various devices. According to the embodiments of the present disclosure, the communication configuration can be set by the transmitting device based on the second information, set by the terminal-side electronic device based on the second information and informed to the transmitting device, or set and informed by other devices, such as the control-side electronic device, the auxiliary relay device and so on, to the transmitting device.

For example, the terminal-side electronic device 200 can transmit any one of the second information and the comparison result between the second information and the specific threshold to the control-side electronic device/transmitting device, for the control-side electronic device/transmitting device to set the configuration for communication between the terminal-side electronic device 200 and the transmitting device 400. For example, the communication configuration setting unit 236 of the terminal-side electronic device 200 can also set the configuration for communication between the terminal-side electronic device 200 and the transmitting device 400 based on the second information, and inform the control-side electronic device or the transmitting device of the setting information to set the communication configuration.

Therefore, the transmitting device can carry out data communication with the terminal-side electronic device 200 based on the set/adjusted communication configuration, and the terminal-side electronic device 200 can receive the transmitted data more robustly and reliably, so that the communication quality is stable. It should be noted that the terminal-side electronic device 200 may include a unit for data communication with the transmitting device, and such a unit may be implemented in a manner known in the art, which will not be described in detail here.

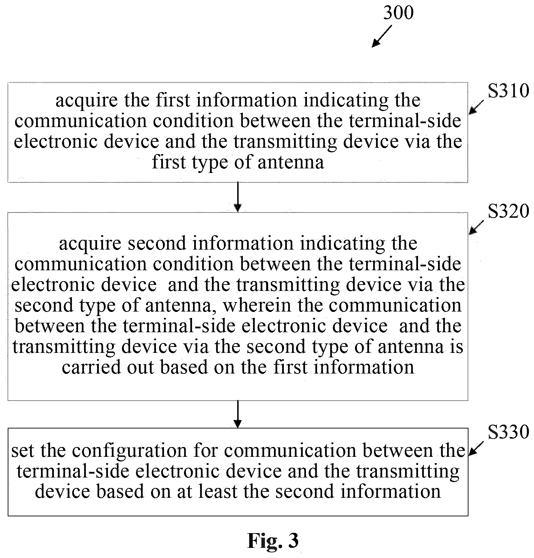

Fig. 3 shows a flowchart of a method 300 for a terminal-side electronic device according to an embodiment of the present disclosure. Next, the communication method 300 will be described in combination with Fig. 2, wherein the terminal-side electronic device can be, for example, the terminal-side electronic device 200 shown in Fig. 2.

In step S310, the first information indicating the communication condition between the terminal-side electronic device 200 and the transmitting device via the first type of antenna is acquired. This step S310 can be performed, for example, by the directional antenna communication condition acquisition unit 232 in Fig. 2. Various examples of the first information and various implementations of acquiring the first information have been described above, and will not be repeated here.

Then, the flow proceeds to step S320. In step S320, second information indicating the communication condition between the terminal-side electronic device 200 and the transmitting device via the second type of antenna is acquired. This step S320 can be performed, for example, by the omni-directional antenna communication condition acquisition unit 234 in Fig. 2. As described above, the communication between the terminal-side electronic device 200 and the transmitting device via the second type of antenna can be based on the first information. Various examples of the second information and various implementations of obtaining the second information have been described above, and will not be repeated here.

Then, the flow proceeds to step S330. In step S330, the configuration for communication between the terminal-side electronic device 200 and the transmitting device may be set based on at least the second information. As an example, as described above, it is possible to adjust the configuration of the transmitting device for data communication via the first type of antenna, or other configurations related to data communication between the transmitting device and the terminal side device.

This step S330 can be performed by the communication configuration setting unit 236 in Fig. 2, for example. Step S330 is drawn with dashed lines, because in some embodiments of the present disclosure, the setting of the communication configuration can also be performed by other devices (for example, the transmitting device or the control-side electronic device) than the terminal-side electronic device 200, as described above.

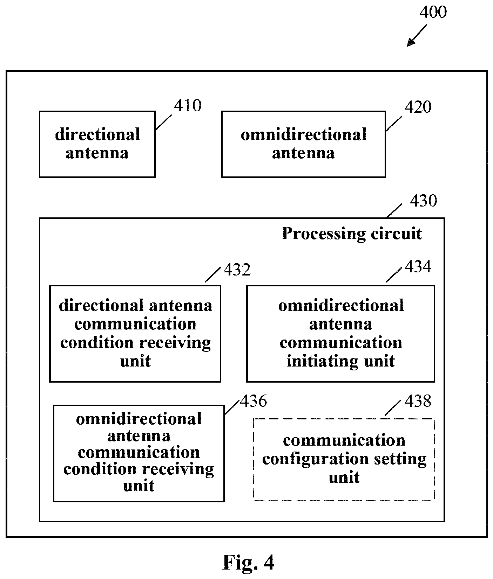

Fig. 4 shows a schematic block diagram of a transmitting device according to an embodiment of the present disclosure. The transmitting device 400 may correspond to the transmitting device 130 in Fig. 1, which can communicate with control-side electronic devices/terminal-side electronic devices in the wireless communication system, for example, the above-mentioned control-side electronic devices 110, terminal-side electronic devices 120a-120c, 200, etc. For clarity, the following description will take the first type of antenna being a directional antenna and the second type of antenna being an omni-directional antenna as an example. As shown in Fig. 4, the transmitting device 400 may include a directional antenna 410, an omnidirectional antenna 420 and a processing circuit 430.

According to an embodiment of the present disclosure, the processing circuit 430 may be configured to receive first information indicating the communication condition between the terminal-side electronic device and the transmitting device 400 via a directional antenna; carry out communication between the terminal-side electronic device and the transmitting device 400 via an omnidirectional antenna based on the first information; and receive second information indicating the communication condition between the terminal-side electronic device and the transmitting device 400 via the omnidirectional antenna; wherein the configuration for communication between the terminal-side electronic device and the transmitting device 400 can be set based on at least the second information.

In the structural example of the above-mentioned device, the processing circuit 430 may be in the form of a general-purpose processor or a special-purpose processing circuit, such as an ASIC. For example, the processing circuit 430 can be configured by a circuit (hardware) or a central processing device such as a central processing unit (CPU). In addition, the processing circuit 430 can carry a program (software) for enabling the circuit (hardware) or the central processing device to work thereon. The program can be stored in a memory (such as arranged in the memory) or an external storage medium connected from the outside, or downloaded via a network (such as the Internet).

According to an embodiment of the present disclosure, the processing circuit 430 may include various units for realizing the above functions, such as a directional antenna communication condition receiving unit 432, an omnidirectional antenna communication initiating unit 434 and an omnidirectional antenna communication condition receiving unit 436, and may optionally include a communication configuration setting unit 438. The communication configuration setting unit 438 is drawn with dashed lines because it can also be located outside the transmitting device 400. These units included in the processing circuit 430 may be communicatively coupled to each other (not shown) and/or coupled to one or more of the directional antenna 410 and the omnidirectional antenna 420 (not shown). It should be noted that although each unit is shown as a separate unit in Fig. 4, one or more of these units can be combined into one unit or split into multiple units.

It should be noted that each of the above units only belongs to a logical module classified according to the specific function it implements, instead of limiting its specific implementation manner, for example, it can be implemented in software, hardware, or a combination of software and hardware. In an actual implementation, the foregoing units may be implemented as independent physical entities, or may be implemented by a single entity (for example, a processor (CPU or DSP, etc.), an integrated circuit, etc.). Furthermore, that the foregoing units are indicated by dotted lines in the figure indicates that the foregoing units may not actually exist, and the operation / functionality they achieve can be implemented by the processing circuit itself.

According to an embodiment, the directional antenna 410 and the omnidirectional antenna 420 can be two sets of antennas or antenna arrays for directional beam communication and omnidirectional beam communication, respectively, or a set of antenna arrays that can be configured to carry out both directional beam communication and omnidirectional beam communication, but carry out only one of them at different times. As an example, the antennas 410 and 420 may be a communication unit or a part of the communication unit, and the communication unit may be configured to communicate with a control-side electronic device, a transmitting device or other terminal-side electronic devices under the control of the processing circuit 430. In one example, the communication unit can be implemented as a transmitter or a transceiver, including antenna arrays, such as both omni-directional antennas and directional antennas, or a single antenna array capable of realizing the functions of both omnidirectional antennas and directional antennas, and/or communication components such as radio frequency links. In one embodiment, the communication unit can transmit the relevant information about the communication condition determined in the processing circuit to the control-side electronic device. In one embodiment, the communication unit can also transmit and receive signaling required for the process described in the embodiment according to the present disclosure.

Although it is shown in Fig. 4 that the processing circuit 430 is separated from the antennas 410 and 420, the processing circuit 430 may also be implemented to include the antennas. In addition, the processing circuit 430 can also be implemented to include one or more of other components in the terminal-side electronic device, or even can be implemented as the terminal-side electronic device. In actual implementation, the processing circuit 430 can be implemented as a chip, such as an integrated circuit module including a single wafer, a hardware component or a complete product.

It should be noted that although it is shown in Fig. 4 that the antennas 410 and 420 are included in the electronic device 400, it should be noted that the antennas 410 and 420 may be antennas coupled/attached to the electronic device 400, but not included in the electronic device 400.

It should be understood that Fig. 4 is only a schematic structural configuration of the transmitting device, and the transmitting electronic device 400 may also include other possible components (e.g., memory, etc.). Optionally, the control-side electronic device 400 may also include other components not shown, such as a memory, a radio frequency link, a baseband processing unit, a network interface, a processor, a controller, and the like. The processing circuit may be associated with the memory and/or the antennas. For example, the processing circuit may be directly or indirectly (for example, other components may be disposed therebetween) connected to the memory for data access. Also for example, the processing circuit may be directly or indirectly connected to the antennas to transmit radio signals via the communication units and receive radio signals via the communication units.

The memory may store various kinds of information generated by the processing circuit 430 (for example, relevant information about communication condition, configuration information of the terminal-side electronic device, location information, etc.), programs and data for controlling the operation of the terminal-side electronic device, data to be sent by the terminal-side electronic device, etc. The memory can also be located inside the terminal-side electronic device but outside the processing circuit, or even outside the terminal-side electronic device. The memory may be a volatile memory and / or a non-volatile memory, for example, the memory may include, but not limited to, random access memory (RAM), dynamic random access memory (DRAM), static random access memory (SRAM), read-only memory (ROM), and flash memory.

The functions of the units in the processing circuit 430 of the transmitting device 400 in Fig. 4 will be described in detail below.

According to an embodiment of the present disclosure, the directional antenna communication condition receiving unit 432 may be configured to receive first information indicating the communication condition between the terminal-side electronic device 200 and the transmitting device 400 via the directional antenna. As an example, radio signal containing the first information can be received by the directional antenna 410 from the terminal-side electronic device 200 or the control-side electronic device, and then is subject to processing such as down conversion and analog-digital conversion to obtain the first information, and then the first information can be transmitted to the directional antenna communication condition receiving unit 432.

In one embodiment, relevant information about the data communication condition between the terminal-side electronic device and the transmitting device via the directional antenna or its quantized value can be received as the first information. In another embodiment, relevant information about the channel quality condition between the terminal-side electronic device and the transmitting device via the directional antenna or its quantized value can be received as the first information. Here, the channel quality condition can be estimated based on a first reference signal transmitted by the transmitting device. The meaning, type, acquisition and transmission manners of the first information can be that as described above, which will not be described in detail here.

It should be noted that although not shown in the drawings, the processing circuit 430 may include a unit for transmitting the first reference signal, which may transmit the first reference signal continuously or periodically or in response to the first information. The transmission manner of the first reference signal and the like can be that as described above, and will not be described in detail here.

According to an embodiment of the present disclosure, the omnidirectional antenna communication initiating unit 434 may be configured to carry out communication between the terminal-side electronic device 200 and the transmitting device 400 via the omnidirectional antenna based on the first information. As an example, this communication via the omni-directional antenna can be performed by the transmitting device 400 spontaneously by judging the first information, and/or based on an instruction transmitted from the control-side electronic device/terminal-side electronic device based on the first information.

In an embodiment, the transmitting device 400 can carry out communication between the terminal-side electronic device 200 and the transmitting device 400 via the omnidirectional antenna in response to the first information being lower than a first threshold or the comparison result between the first information and the first threshold being a specific value.

In another embodiment, further in response to a change between the current first information and a previously received first information being within a predetermined range, the transmitting device 400 performs the communication between the terminal-side electronic device 200 and the transmitting device 400 via the omni-directional antenna spontaneously or based on the instruction transmitted from the control-side electronic device/terminal-side electronic device based on the first information. The meaning, transmission manner and the like of the instruction transmitted based on the first information can be that as described above, and will not be described in detail here.

According to one embodiment, the omni-directional antenna communication initiating unit 434 may transmit a second reference signal via the omni-directional antenna based on the first information, so as to carry out communication between the transmitting device and the terminal-side electronic device via the omni-directional antenna. The transmission manner of the second reference signal can be spontaneous or responsive to instructions/requests, which can be that as described above and will not be described in detail here.

According to an embodiment of the present disclosure, the omnidirectional antenna communication condition receiving unit 436 may be configured to receive second information indicating the communication condition between the terminal-side electronic device and the transmitting device via the omnidirectional antenna. As an example, radio signal containing the second information can be received by the omnidirectional antenna 420 from the terminal-side electronic device 200 or the control-side electronic device, and then is subject to processing such as down conversion and analog-digital conversion to obtain the first information, and then the second information can be transmitted to the omnidirectional antenna communication condition receiving unit 436. The meaning, type, acquisition and transmission mode of the second information can be as described above, and will not be described in detail here.

According to an embodiment of the present disclosure, the configuration for communication between the terminal-side electronic device 200 and the transmitting device 400 can be set based on at least the second information. As an example, as described above, it is possible to adjust the configuration of the transmitting device for data communication via the directional antenna, or other configurations related to data communication between the transmitting device and the terminal-side device.

In one embodiment, the processing circuit 430 may include a communication configuration setting unit 438, which may be configured to set the configuration for communication between the terminal-side electronic device 200 and the transmitting device 400 based on at least the second information. It should be understood that the configuration for communication between the terminal-side electronic device 200 and the transmitting device 400 can also be set by the terminal-side electronic device 200 or the control-side electronic device. For example, the transmitting device 400 can transmit any one of the second information and the comparison result between the second information and a specific threshold to the control-side electronic device/terminal-side device, for the control-side electronic device/terminal-side device to set the configuration for communication between the terminal-side electronic device 200 and the transmitting device 400.

Therefore, the transmitting device 400 can use the set/adjusted communication configuration to carry out data communication with the terminal-side electronic device, thereby eliminating the influence of unfavorable factors and keeping the communication quality stable. It should be noted that the transmitting device 400 may include a unit for data communication with the terminal-side electronic device, and such a unit may be implemented in a manner known in the art, which will not be described in detail here.

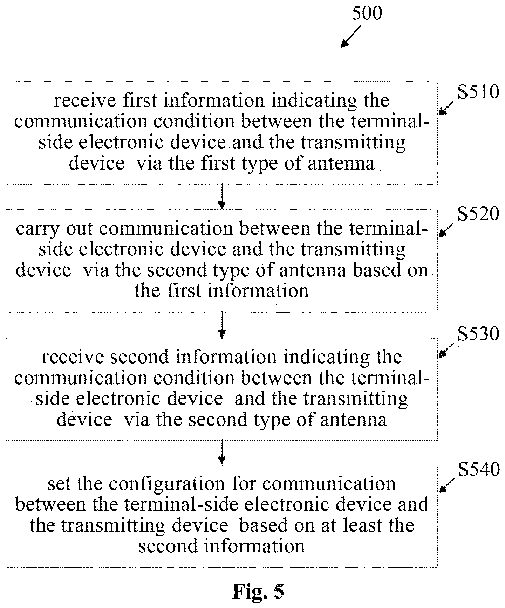

Fig. 5 shows a flowchart of a communication method 500 for a transmitting device according to an embodiment of the present disclosure.

In step S510, first information indicating the communication condition between the terminal-side electronic device and the transmitting device 400 via the first type of antenna is received. The first information can be received by the transmitting device 400 from the terminal-side electronic device 200 or the control-side electronic device, for example, such receiving can be executed by the directional antenna communication condition receiving unit 432 in Fig. 4.

Then, the flow proceeds to step S520. In step S520, the transmitting device 400 may carry out communication between the terminal-side electronic device 200 and the transmitting device 400 via the second type of antenna based on the first information. This step S520 can be performed, for example, by the omnidirectional antenna communication initiating unit 434 in Fig. 4.

Then, the flow proceeds to step S530. In step S530, second information indicating the communication condition between the terminal-side electronic device 200 and the transmitting device 400 via the second type of antenna is received. As an example, the second information can be received by the transmitting device 400 from the terminal-side electronic device 200 or the control-side electronic device. This step S530 can be performed, for example, by the omnidirectional antenna communication condition receiving unit 436 in Fig. 4.

Then, the flow proceeds to step S540. In step S540, the transmitting device 400 may set the configuration for communication between the terminal-side electronic device 200 and the transmitting device 400 based on at least the second information. This step S540 can be performed by the communication configuration setting unit 438 in Fig. 4, for example. It should be noted that step S540 is drawn with a dashed line, because in some embodiments, step S540 can also be performed by other devices than the transmitting device 400, for example, the terminal-side electronic device 200 or the control-side electronic device, as described above.

Exemplary implementations of communication condition judgement and communication configuration setting in a wireless communication system according to embodiments of the present disclosure will be described below with reference to the accompanying drawings. Particularly, in the wireless communication system, firstly, the communication condition via directional antenna and the communication condition via omnidirectional antenna will be judged, so as to accurately judge the influencing factors/events that result in deterioration of communication quality, and then the communication configuration will be appropriately adjusted/set according to the judgment result, thereby improving the communication quality and communication robustness in the communication system.

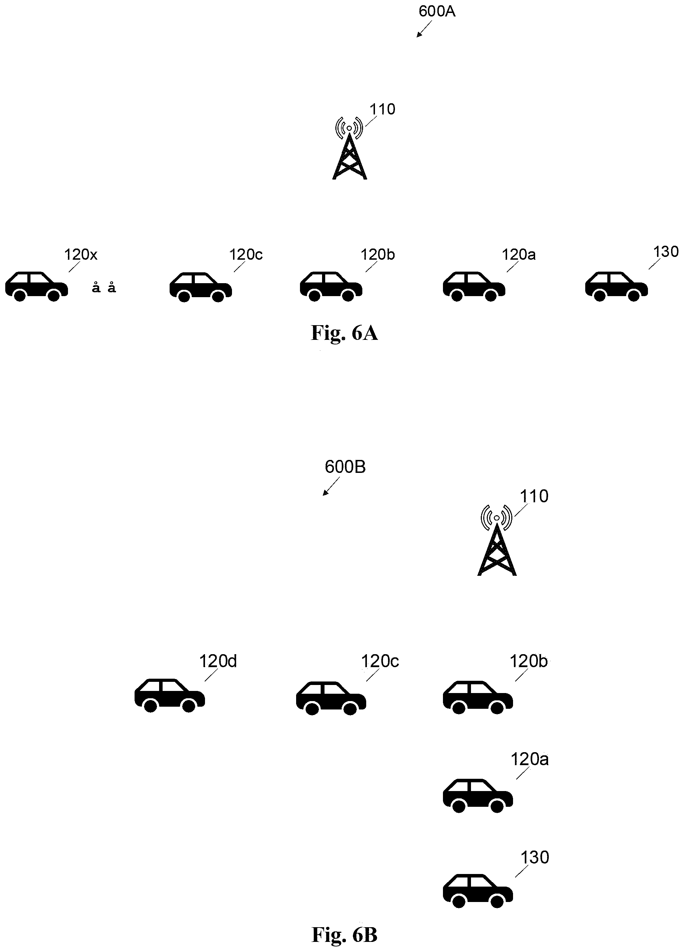

Figs. 6A- 6C describe three different scenarios in the wireless communication system according to the embodiment of the present disclosure, in which the communication quality between the terminal-side electronic device and the transmitting device via the directional antenna deteriorates. In Figs. 6A- 6C, a vehicle-to-vehicle communication system based on platooning is described as an example, in which both the terminal-side electronic device and the transmitting device are vehicles. It should be understood that, as mentioned above, the present disclosure is not limited to this, but can also be similarly applied to scenarios such as cooperative flight of unmanned aerial vehicles, cooperative passage of intelligent engineering robots, etc.

In each of the wireless communication systems 600A-600C shown in Figs. 6A-6C, a leader vehicle 130 and follower vehicles 120a, 120b, 120c......... and 120x may be included. The wireless communication system may also optionally include a control-side electronic device 110. Although the control-side electronic device 110 is shown as a base station (e.g., gNB) in the figure, the control-side electronic device 110 can also be a roadside unit, even a vehicle itself in the platooning, etc. The leader vehicle 130 may correspond to the transmitting device 400 shown in Fig. 4, and any one of the follower vehicles 120a, 120b, 120c......... and 120x may correspond to the terminal-side electronic device 200 shown in Fig. 2. In an embodiment, each of the leader vehicle 130 and the follower vehicles 120a, 120b, 120c, ... and 120x can carry out automatic driving (semi-automatic driving or fully automatic driving) and communicate with each other through sidelink, thereby forming a platooning. The leader vehicle 130 can transmit the perception data acquired by the leader vehicle 130 (for example, the data acquired by the camera or radar installed on the leader vehicle 130, etc.) and/or the driving strategy to the follower vehicles 120a, 120b, 120c......... and 120x via the directional antenna in a multicast manner.

Fig. 6A shows a schematic diagram of a scenario in the wireless communication system 600A according to an embodiment of the present disclosure, in which the communication quality between the terminal-side electronic device and the transmitting device via the directional antenna deteriorates. As shown in Fig. 6A, if the length of the platooning is too long, for example, a new vehicle joins the platooning or the spacing between the follower vehicle and the leader vehicle becomes larger due to traffic reasons, etc., although there is no obstacle, for example, buildings, mountains and other objects that can block the beam, between the leader vehicle 130 and the follower vehicle, the follower vehicle may still exceed the coverage of the high directional beam of the leader vehicle, and there may occur a case that the communication quality between the leader vehicle and the last one or more of the follower vehicles, for example, the follower vehicle 120x, in the platooning becomes poor.

Fig. 6B shows a schematic diagram of another scenario in the wireless communication system 600B according to the embodiment of the present disclosure, in which the communication quality between the terminal-side electronic device and the transmitting device via the directional antenna deteriorates. As shown in Fig. 6B, during driving, due to change of the arrangement of platooning, such as turning at an intersection, the follower vehicles 120a and 120b may still be within the coverage of the high directional beam of the directional antenna from the leader vehicle 130, but the follower vehicles 120c and 120d may deviate from the high directional beam from the directional antenna of the leader vehicle 130, resulting in deterioration of communication quality. It should be pointed out that the platooning may also change due to other factors, which may cause the follower vehicle to deviate from the coverage of the directional beam from the leader vehicle. As an example, the follower vehicle may deviate from the beam from the directional antenna of the leader vehicle 130 for other reasons, such as temporary detour, traffic congestion, etc.

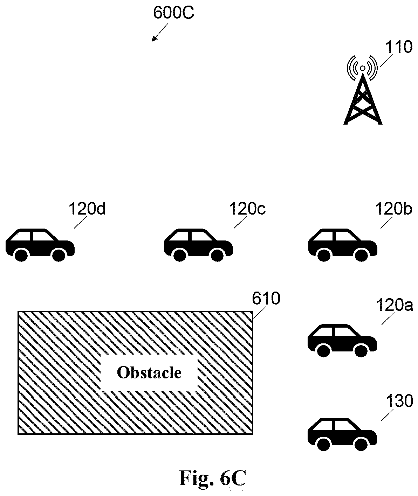

Fig. 6C shows a schematic diagram of yet another scenario in the wireless communication system 600C according to an embodiment of the present disclosure, in which the communication quality between the terminal-side electronic device and the transmitting device via the directional antenna deteriorates. As shown in Fig. 6C, the relative positions of the leader vehicle 130 and the follower vehicles 120a, 120b, 120c and 120d are similar to those in Fig. 6B, but because there is an obstacle 610 between the leader vehicle 130 and the follower vehicles 120c and 120d, in the third scenario, no matter how the beam emitted by the leader vehicle 130 is adjusted, it is difficult to guarantee the communication quality of the follower vehicles 120c and 120d. Although it is shown in Fig. 6C that the platooning is turning, this is only an example, and this scenario may also include any other scenario where the communication quality between the leader vehicle and the follower vehicle via both directional antenna and omnidirectional antenna is not ideal due to the obstacle. For example, when the platooning is going straight, an obstacle (e.g., a large vehicle, etc.) may also appear between the leader vehicle 130 and the follower vehicles, thus deteriorating the communication quality.

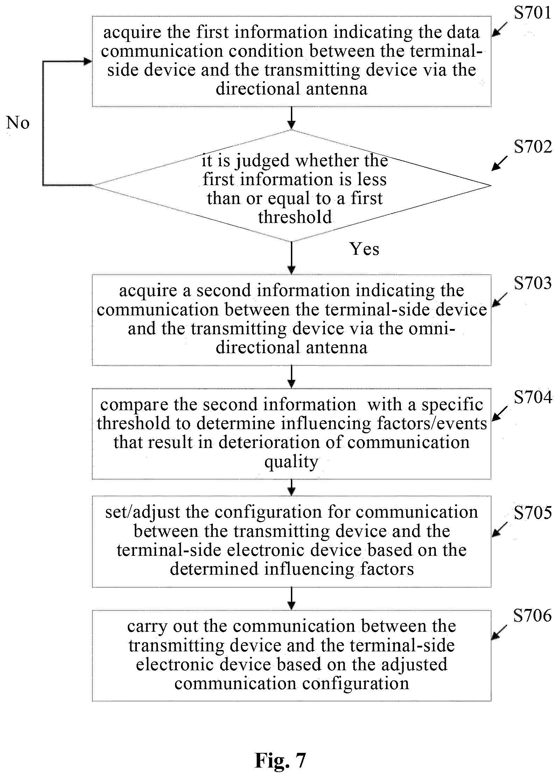

Fig. 7 schematically shows the basic flow of a schematic implementation according to an embodiment of the present disclosure. In S701, the first information indicating the data communication condition between the terminal-side device and the transmitting device via the directional antenna is acquired. The meaning and acquisition manner of the first information can be realized as described above, and will not be described in detail here.

In S702, it is judged whether the first information is less than or equal to a first threshold. As an example, when the first information is original data indicating the communication condition or its quantized value, the first threshold may be a corresponding data or numerical threshold; when the first information is a binary value indicating the communication quality status being good or not, the first threshold can be any number between 0 and 1. It should be noted that the above is only an example, and the first threshold can also be appropriately set based on the communication requirement, the type of the first information, etc.

When the first information is less than or equal to the first threshold, which indicates that the communication quality between the terminal-side device and the transmitting device via the directional antenna deteriorates, it will proceed to step S703; otherwise, it will return to step S701 to continuously acquire the first information.

In S703, a second information indicating the communication between the terminal-side device and the transmitting device via the omni-directional antenna is acquired. The meaning and acquisition manner of the second information can be realized as described above, and will not be described in detail here.

In S704, the second information is compared with a specific threshold to determine influencing factors/events that result in deterioration of communication quality. Similar to the first threshold, the specific threshold can be set based on the communication requirement, the type of the second information, etc.

As an example, in step S704, it is judged whether the second information is less than a second threshold $\varepsilon_o$. If it is determined that the second information is less than the second threshold $\varepsilon_o$, it is judged that event 1, that is, the scenario shown in Fig. 6A, has occurred in the communication system. It is judged whether the second information exceeds a third threshold $\widetilde{\varepsilon_o}$, and if it is determined that the second information is greater than the third threshold $\widetilde{\varepsilon_o}$, it is judged that event 2, that is, the scenario as shown in Fig. 6B, has occurred in the communication system; if it is determined that the second information does not exceed the third threshold $\widetilde{\varepsilon_o}$ and is not less than the second threshold $\varepsilon_o$, it is judged that event 3, that is, the scenario as shown in Fig. 6C, has occurred in the communication system. The second

threshold $\varepsilon_o$ and the third threshold $\widetilde{\varepsilon_o}$ can be determined according to information such as the communication requirement and the type of the second information, etc.. It should be noted that, as mentioned above, the above event judgement can be performed by one or more of the control-side electronic device, the transmitting device and/or the terminal-side electronic device.

In step S705, the configuration for communication between the transmitting device and the terminal-side electronic device is set/adjusted based on the determined influencing factors. The meaning of communication configuration and its setting/adjusting manner can be realized as described above, and will not be described in detail here. As an example, in step S705, the communication configuration can be adjusted correspondingly for the events as determined above, and the adjusted communication configuration can be informed to the transmitting device, or even to the terminal-side electronic device.

In step S706, the communication between the transmitting device and the terminal-side electronic device can be carried out based on the adjusted communication configuration. Communication can be carried out in various ways known in the art, especially via directional antenna, which will not be described in detail here.

It should be noted that the above steps can be performed by one or more of the control-side electronic device, the transmitting device and/or the terminal-side electronic device. As an example, all the above steps may be performed by one of the control-side electronic device, the transmitting device and/or the terminal-side electronic device, or each step may be performed by different devices among the control-side electronic device, the transmitting device and/or the terminal-side electronic device, respectively.

Particularly, in embodiments according to the present disclosure, the determination of the communication condition via the omnidirectional antenna and the setting of the communication configuration can be performed by various different devices, and the exemplary implementation according to the embodiment of the present disclosure will be described below with reference to the drawings.

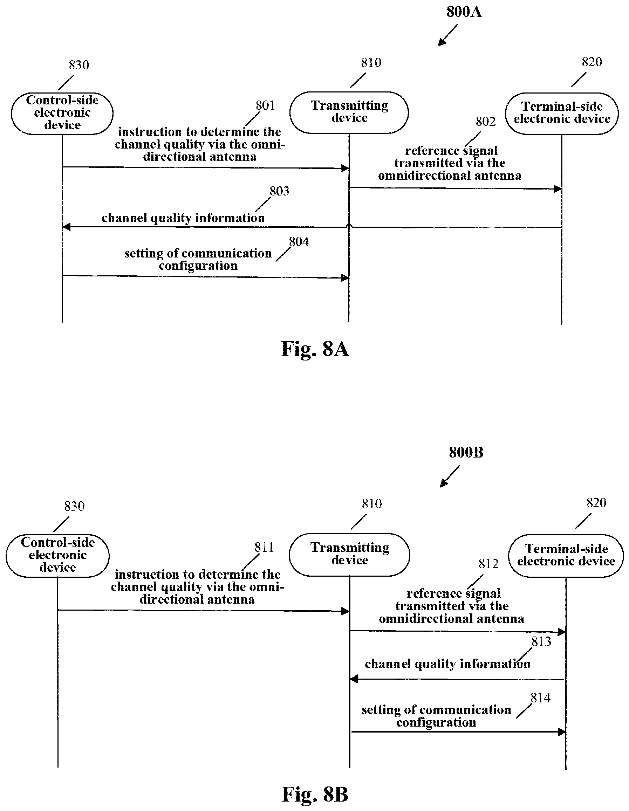

Figs. 8A- 8C illustrate schematic signaling diagrams for communication between a terminal-side electronic device and a transmitting device in a wireless communication system via an omni-directional antenna according to an embodiment of the present disclosure. It should be pointed out that the communication via the omnidirectional antenna is based on the communication condition via the directional antenna, and as mentioned above, the measurement and judgement of the communication condition via the directional antenna have been omitted here for the sake of simplicity.

Fig. 8A illustrates a signaling diagram of a schematic method 800A for communication between a terminal-side electronic device and a transmitting device via an omnidirectional antenna in a wireless communication system according to an embodiment of the present disclosure. The transmitting device 810 can communicate with the terminal-side electronic device 820 through a sidelink, and can communicate with the control-side electronic device 830 through a wireless link such as 5G, etc.. The control-side electronic device 830 can instruct communication via omnidirectional antenna and communication configuration setting. Before starting the signaling operation of Fig. 8A, the terminal-side electronic device 820 may have transmitted the first information, e.g., bit error rate, RSRP, etc., indicating the communication condition between the terminal-side electronic device 820 and the transmitting device 810 via the directional antenna or the comparison result between the first information and a first threshold to the control-side electronic device 830 directly or through the transmitting device 810.

In step 801, the control-side electronic device 830 may transmit an instruction to the transmitting device 810 to determine the channel quality via the omni-directional antenna, for example, in response to the first information being lower than the first threshold or the comparison result between the first information and the first threshold being a specific value.

In step 802, the transmitting device 810 may transmit a reference signal to the terminal-side electronic device 820 via the omnidirectional antenna in response to the instruction.

In step 803, the terminal-side electronic device 820 can directly transmit a second information, for example, channel quality information or its quantized value, etc., which is determined based on the reference signal received from the transmitting device 810 via the omnidirectional antenna in step 802, to the control-side electronic device 830, the second information can indicate the communication condition between the terminal-side electronic device 820 and the transmitting device 810 via the omnidirectional antenna. Alternatively, the second information can also be transmitted by the terminal-side electronic device 820 to the transmitting device 810, and then transmitted by the transmitting device 810 to the control-side electronic device 830.

In step 804, the control-side electronic device 830 can set/adjust the configuration for communication between the terminal-side electronic device 820 and the transmitting device 810 based on at least the second information received in step 803, and transmit the set/adjusted communication configuration to the transmitting device 810.

According to an embodiment, depending on the type and specific information of the communication configuration, additionally, the communication configuration can also be transmitted to the terminal-side electronic device 820, so that the terminal-side electronic device 820 can carry out data reception accordingly. It should be noted that, corresponding to a specific communication configuration, for example, only increasing the transmission power of the transmitting device via the directional antenna, the transmitting device 810 can directly utilize the set/adjusted communication configuration for data communication, without transmitting the communication configuration to the terminal-side electronic device 820. The judgement of communication condition and the setting/adjustment of communication configuration can be performed as described herein and will not be described in detail here.

Fig. 8B shows a signaling diagram of a schematic method 800B for communication between the terminal-side electronic device and the transmitting device via an omnidirectional antenna in a wireless communication system according to an embodiment of the present disclosure. The control-side electronic device 830 can instruct the communication via the omni-directional antenna, and the transmitting device 810 can carry out the communication configuration setting. Before starting the signaling operation of Fig. 8B, the first information or the comparison result between the first information and the first threshold has been transmitted to the control-side electronic device 830, similar to that of Fig. 8A.

In step 811, the control-side electronic device 830 may transmit an instruction to the transmitting device 810 to determine the channel quality via the omni-directional antenna, for example, in response to the first information being lower than the first threshold or the comparison result between the first information and the first threshold being a specific value.

In step 812, the transmitting device 810 may transmit a reference signal to the terminal-side electronic device 820 via the omnidirectional antenna.

In step 813, the terminal-side electronic device 820 can transmit a second information, for example, channel quality information or its quantized value, etc., which is determined based on the reference signal received from the transmitting device 810 via the omnidirectional antenna in step 812, to the transmitting device 810, the second information can indicate the communication condition between the terminal-side electronic device 820 and the transmitting device 810 via the omnidirectional antenna. The terminal-side electronic device 820 can also transmit the second information to the transmitting device 810 with the control-side electronic device 830 as a relay.

In step 814, the transmitting device 810 can set/adjust the configuration for communication between the terminal-side electronic device 820 and the transmitting device 810 based on at least the second information received in step 813, and additionally, depending on the type and specific information of the communication configuration, the communication configuration can also be transmitted to the terminal-side electronic device 820, similar to Fig. 8A.

In Fig. 8A and Fig. 8B, by utilizing the control-side electronic device 830 to determine whether it is necessary to acquire the information about communication quality between the terminal-side electronic device 820 and the transmitting device 810 via the omni-directional antenna and/or set the configuration for communication between the terminal-side electronic device 820 and the transmitting device 810, the control-side electronic device 830 can integrate the information it has received to make a decision. In addition, even if there is a communication link occlusion between the terminal-side electronic device 820 and the transmitting device 810, the control-side electronic device 830 can communicate with both the terminal-side electronic device 820 and the transmitting device 810.

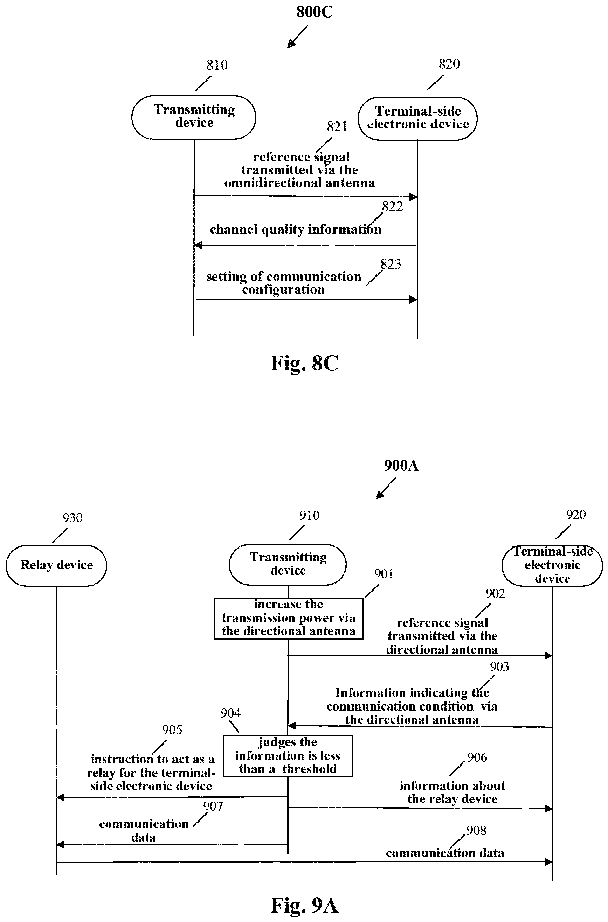

Fig. 8C shows a signaling diagram of a schematic method 800C for communication between terminal-side electronic device and transmitting device via an omnidirectional antenna in a wireless communication system according to an embodiment of the present disclosure. The transmitting device 810 can instruct communication via omnidirectional antenna and communication configuration setting. In Fig. 8C, the control-side electronic device 830 may not participate in the communication between the terminal-side electronic device 820 and the transmitting device 810 via the omnidirectional antenna, so the control-side electronic device 830 is not shown. Before starting the signaling operation of fig. 8C, the first information or the comparison result between the first information and the first threshold has been transmitted to the transmitting device 810.

In step 821, the transmitting device 810 may transmit a reference signal to the terminal-side electronic device 820 via the omnidirectional antenna, in response to the first information being lower than the first threshold or the comparison result between the first information and the first threshold being a specific value.

In step 822, the terminal-side electronic device 820 can transmit a second information, for example, channel quality information or its quantized value, etc., which is determined based on the reference signal received from the transmitting device 810 via the omnidirectional antenna in step 821, to the transmitting device 810, the second information can indicate the communication condition between the terminal-side electronic device 820 and the transmitting device 810 via the omnidirectional antenna.

In step 823, the transmitting device 810 can set/adjust the configuration for communication between the terminal-side electronic device 820 and the transmitting device 810 based on at least the second information received in step 822, and additionally, depending on the type and specific information of the communication configuration, the communication configuration can also be transmitted to the terminal-side electronic device 820, similar to Fig. 8A.

In Figs. 8A- 8C, the transmitting device 810 or the control-side electronic device 830 performs setting of the communication configuration between the terminal-side electronic device 820 and the transmitting device 810. It should be understood that the implementation of the present disclosure is not limited to this, and as an example, the setting can also be determined by the terminal-side electronic device 820 and transmitted to the transmitting device 810 and/or the control-side electronic device 830. For example, the terminal-side electronic device 820 can share data with neighboring terminal-side electronic devices or base stations, roadside units, etc., and then decide the setting of communication configuration.

Hereinafter, schematic signaling diagrams of setting the communication configuration between terminal-side electronic device and transmitting device according to embodiments of the present disclosure will be described with reference to Figs. 9A- 9C. According to embodiments of the present disclosure, the communication configuration between the terminal-side electronic device and the transmitting device can be appropriately adjusted/set based on the determined communication scenario between the terminal-side electronic device and the transmitting device.

According to embodiments of the present invention, for a scenario as shown in Fig. 6A, although the distance between the follower vehicle and the leader vehicle is too far, which causes the communication quality to deteriorate, the follower vehicle 120x is still located in the direction of the beam from the directional antenna of the leader vehicle 130 and there is no obstacle between them, so the communication quality can be improved by increasing the transmission power of the leader vehicle 130 via the directional antenna or by utilizing a relay.

In one embodiment, in response to the second information indicating the communication condition between the terminal-side electronic device and the transmitting device via the omnidirectional antenna being less than the second threshold $\epsilon_0$, that is, the first scenario occurs, at least one of the following can be performed: the communication between the transmitting device and the terminal-side electronic device via the directional antenna can be relayed by means of a relay device; and the transmission power of the transmitting device via the directional antenna can be increased, wherein the relay device can be a base station, a roadside unit or any other terminal-side electronic device, etc.

In one embodiment, in response to the second information being less than the second threshold $\epsilon_0$, the transmission power of the transmitting device via the directional antenna is increased; and if the first information indicating the communication condition between the terminal-side electronic device and the transmitting device via the directional antenna, which is acquired when the transmission power is increased to a specific power, is still less than the first threshold, the communication between the transmitting device and the terminal-side electronic device via the directional antenna is relayed by the relay device.

Fig. 9A shows an exemplary signaling diagram of an exemplary method 900A of communication configuration setting for a scenario in which the communication quality between terminal-side electronic device and transmitting device in a wireless communication system deteriorates, that is, the scenario shown in Fig. 6A, according to an embodiment of the present disclosure.

As shown in Fig. 9A, in step 901, the transmitting device 910 can increase the transmission power via the directional antenna, in response to the second information indicating the communication condition between the terminal-side electronic device 920 and the transmitting device 910 via the omnidirectional antenna, which is received, for example, from the terminal-side electronic device 920 or the control-side electronic device, etc., being less than the second threshold $\in_0$.

In step 902, the transmitting device 910 transmits a reference signal to the terminal-side electronic device 920 via the directional antenna with increased power.

In step 903, the transmitting device 910 receives the first information which is determined by the terminal-side electronic device 920 based on the reference signal transmitted by the transmitting device 910 in step 902 and indicates the communication condition between the terminal-side electronic device 920 and the transmitting device 910 via the directional antenna.

In step 904, the transmitting device 910 judges whether the first information is less than a first threshold. That is, it is judged how about the communication quality between the transmitting device 910 and the terminal-side electronic device 920 via the directional antenna, after the transmission power of the directional antenna is increased.

In response to judging that the first information is not less than the first threshold, the transmitting device can use the transmission power for directional data communication in subsequent operations. As an example, the transmitting device can directly use the increased transmission power for communication with the terminal-side electronic device via the directional antenna, without informing the terminal-side electronic device of the communication configuration, for example, the increased transmission power. As another example, the terminal-side electronic device can also be informed of the relevant transmission configuration, so that the terminal-side electronic device can receive information more appropriately, such as adjusting the receiving power, etc. Therefore, the influence of the above events on the communication quality can be effectively suppressed by simple power adjustment.

In response to determining that the first information is less than the first threshold, a relay can be used for communication. In step 905, the transmitting device 910 may transmit the relay device 930 an instruction to act as a relay for the terminal-side electronic device 920. The relay device 930 may be a base station, a roadside unit, an adjacent terminal-side electronic device or any other suitable electronic device. The transmitting device 910 can select the relay device 930 based on information such as the position of the transmitting device 910, the terminal-side electronic device 920, the base station, the roadside unit and other electronic devices, the direction and speed of the transmitting device 910 and the terminal-side electronic device 920, and the communication quality of other terminal-side electronic devices, etc.

In step 906, the transmitting device 910 may transmit the communication configuration, such as information about the relay device 930, etc., to the terminal-side electronic device 920. It should be understood that the order of step 905 and step 906 can be interchanged.

In step 907, the transmitting device 910 may transmit communication data to the relay device 930. Then, in step 908, the relay device 930 can transmit the communication data to the terminal-side electronic device 920.

It should be pointed out that according to the embodiment of the present disclosure, the transmission power of the transmitting device via the directional antenna can be continuously increased or increased in specific steps up to a specific transmission power, for example, the maximum rated transmission power of the directional antenna, and the acquisition and judgement of the first information can be performed after each increasement of the transmission power. In one embodiment, the above steps 901-904 can be repeated until the first information acquired at a certain transmission power is greater than the first threshold, and then the transmission power is used for directional data communication in subsequent operations. If the first information acquired when the transmission power is increased to the specific transmission power is still less than the first threshold, then steps 905-908 are executed again.

As another example, step 901 can be performed only once to increase the transmission power of the transmitting device by a specific value or directly to a specific transmission power, and then the relay is directly used for communication when it is judged in step 904 that the first information is less than the first threshold.

According to the embodiment of the present disclosure, it is also possible to directly use the relay for communication instead of increasing the power of the transmitting device. As an example, steps 905-907 can be directly executed when the second information is less than the second threshold $\in_0$. Using the relay to communicate can guarantee reliable communication, but compared with increasing the transmission power of the antenna of the transmitting device, the latency may be increased.

Therefore, appropriate adjustments can be adopted to suppress the deterioration of communication quality caused by scenario 1.

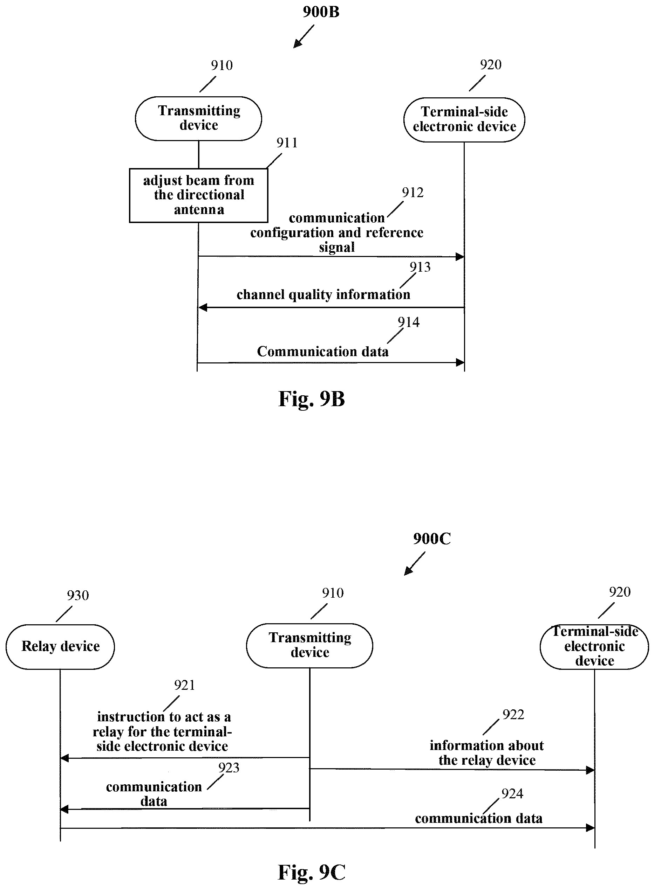

According to an embodiment of the present invention, for the second scenario as shown in Fig. 6B, although the follower vehicle deviates from the beam coverage of the leader vehicle, there is no obstacle between the leader vehicle 130 and the follower vehicles 120c, 120d that seriously blocks the communication link, that is, the communication quality between the leader vehicle 130 and the follower vehicles 120c, 120d through the omnidirectional antenna can meet the requirements, so it is possible to improve the communication quality between the leader vehicle 130 and the follower vehicles 120c, 120d by adjusting the beam emitted by the leader vehicle 130 through the directional antenna. Of course, it should be pointed out that relay can also be used to alleviate this scenario and improve the communication quality between the leader vehicle 130 and the follower vehicles 120c and 120d via the directional antenna. Especially, when the amount of data multicasted by the leader vehicle 130 is large, the relay may cause the latency to increase. The way of setting the configuration for communication between the leader vehicle 130 and the follower vehicle 120d or the follower vehicle 120c in the second scenario will be further described below with reference to Fig. 9B.

Fig. 9B illustrates an exemplary signaling diagram of an exemplary method 900B of communication configuration setting for the second scenario in which the communication quality between terminal-side electronic device and transmitting device in a wireless communication system deteriorates, according to an embodiment of the present disclosure. As described above, in the second scenario, the terminal-side electronic device 920 deviates from the beam from the directional antenna of the transmitting device 910, but there is no obstacle that seriously blocks the communication link therebetween, so the communication quality can be improved by adjusting the beam from the directional antenna of the transmitting device 910. As an example, it is possible to expand the beam coverage, change the beam angle, adopt multibeams, etc., or change to use the omni-directional antenna, when the directional antenna and omni-directional antenna are the same antenna array, the antenna array can be configured to carry out omni-directional transmission.

As shown in Fig. 9B, in step 911, the transmitting device 910 can adjust the beam of the directional antenna in response to a second information, which is received, for example, from the terminal-side electronic device 920 or the control-side electronic device, etc., and indicates the communication condition between the terminal-side electronic device 920 and the transmitting device 910 via the omnidirectional antenna, exceeding the third threshold $\widetilde{\epsilon_o}$ . For example, it is possible expand the beam coverage, change the beam angle, adopt multi-beams, etc., and it is also possible to change to use the omni-directional antenna. In one embodiment, the adjustment of the beam can also be based on other information, such as the position of the terminal-side electronic device 920, the data captured by the radar or camera of the transmitting device 910, etc.

In step 912, the transmitting device 910 can transmit the communication configuration (e.g., beam direction, etc.) and the reference signal to the terminal-side electronic device 920 by using the directional antenna after beam adjustment or the omnidirectional antenna.

In step 913, the transmitting device 910 receives information, e.g., channel quality information, indicating the communication condition between the terminal-side electronic device 920 and the transmitting device 910 via the adjusted directional antenna or omnidirectional antenna, which is determined by the terminal-side electronic device 920 based on the reference signal transmitted by the transmitting device 910 in step 912, and judges whether the communication condition after adjustment is improved. If the received channel quality information meets the communication requirements in step 913, the transmitting device 910 can use the adjusted directional antenna to transmit communication data to the terminal-side electronic device 920, as in step 914.

Preferably, the transmitting device 910 can inform the terminal-side electronic device of the adjusted configuration information of the directional antenna before data communication, so that the terminal-side electronic device can receive data from the transmitting device 910 more appropriately. In this case, the adjusted configuration information of the directional antenna can be transmitted as communication configuration information. According to another example, the configuration information of the adjusted directional antenna may not be informed to the terminal-side electronic device, but the terminal-side electronic device uses the receiving method known in the art to determine its own optimal receiving configuration and thus to perform appropriate reception with resect to the transmission from the transmitting device using the adjusted directional antenna configuration.

The basic flow of making beam adjustment once has been described above. It should be noted that according to the embodiment of the present disclosure, the beam can be adjusted many times. According to an embodiment, if the channel quality information received in step 913 does not meet the communication requirements, the transmitting device 910 may repeat steps 911-913 to further adjust the beam from the antenna. As an example, the coverage, angle and number of beams can be further adjusted. As an example, the beam adjustment can also be carried out continuously or stepwise, and it is possible to verify whether the communication condition after adjustment is improved after each adjustment, similar to the loop process described above with reference to Fig. 9A.

If the communication condition cannot be improved after performing a specific beam adjustment, for example, the beam is adjusted to a specific coverage, angle, beam number or even omnidirectional beam, the relay can be used for communication and the relay information can be notified to the terminal-side electronic device. This can be that as shown in steps 905-908 described above with reference to Fig. 9A, and will not be described in detail here.

For the third scenario shown in Fig. 9C, according to an embodiment of the present invention, the control-side electronic device 110 or other follower vehicles in the platooning, for example, the follower vehicle 120b in Fig. 6C, can be used as the relay to improve the communication quality between the leader vehicle 130 and the follower vehicle 120d or 120c. The way of setting the communication configuration between the leader vehicle 130 and the follower vehicle 120d or the follower vehicle 120c in the third scenario will be further described below with reference to Fig. 9C.

Fig. 9C shows a signaling diagram of a schematic method 900C of communication configuration setting for a third scenario of communication quality deterioration between the terminal-side electronic device and the transmitting device in the wireless communication system according to an embodiment of the present disclosure. As described above, in the third scenario, both communication qualities between the transmitting device 910 and the terminal-side electronic device 920 via the directional antenna and the omni-directional antenna are not ideal due to obstacles. According to an embodiment of the present disclosure, in response to the second information indicating the communication condition between the terminal-side electronic device 920 and the transmitting device 910 via the omni-directional antenna not exceeding the third threshold $\widetilde{\in}_o$ and not less than the second threshold $\in_o$, it is judged that the third scenario occurs, wherein the second threshold $\in_o$ is less than the third threshold $\widetilde{\in}_o$, and a relay device can be used to relay the communication between the transmitting device 910 and the terminal-side electronic device 920.

As shown in Fig. 9C, in step 921, in response to the second information, which is received, for example, from the terminal-side electronic device 920 or the control-side electronic device, etc., and indicates the communication condition between the terminal-side electronic device 920 and the transmitting device 910 via the omnidirectional antenna, does not exceed the third threshold $\widetilde{\in}_o$ and is not less than the second threshold $\in_o$, the transmitting device 910 can transmit the relay device 930 an instruction to act as a relay for the terminal-side electronic device 920. The relay device 930 may be a base station, a roadside unit, an adjacent terminal-side electronic device or any other suitable electronic device. The transmitting device 910 can select the relay device 930 based on information such as the position of the transmitting device 910, the terminal-side electronic device 920, the base station, the roadside unit and other electronic devices, the direction and speed of the transmitting device 910 and the terminal-side electronic device 920, and the communication quality of other terminal-side electronic devices, etc.

In one embodiment, in response to the difference between the first information of the terminal-side electronic device 920 and the adjacent terminal-side electronic device , which is the information indicating the communication condition between the terminal-side electronic device and the transmitting device via the directional antenna, being greater than a specific threshold, that is, the communication quality between the adjacent terminal-side electronic device and the transmitting device 910 via the directional antenna meets the requirement, the communication between the transmitting device 910 and the terminal-side electronic device 920 is relayed by the adjacent terminal-side electronic device.

In step 922, the transmitting device 910 may transmit the communication configuration, such as information of the relay device 930, to the terminal-side electronic device 920. It should be understood that the order of step 921 and step 922 can be interchanged.

In step 923, the transmitting device 910 may transmit communication data to the relay device 930. Then, in step 924, the relay device 930 can transmit the communication data to the terminal-side electronic device 920.

According to the embodiment of the present disclosure, the data communication condition of the relay can also be verified, and if the data communication condition is still not good, other appropriate relay devices can be further selected.

The process of adjusting the communication configuration for different scenarios/events according to the embodiment of the present disclosure has been exemplarily described above. It should be noted that the above is only exemplary, and the communication configuration can be adjusted for other types of scenarios in a similar way.

According to the embodiment of the present disclosure, by accurately judging the communication condition and appropriately adjusting the communication configuration according to the judgment result, it is possible to appropriately suppress the adverse effects of unfavorable factors/events on the communication in the wireless communication system, improve the communication in the wireless communication system, and make it more robust.

In some of the above embodiments, the terminal-side electronic device estimates the channel quality of the downlink using the reference signal received from the transmitting device. Due to the reciprocity of the wireless channel, it is also possible for the terminal-side electronic device to transmit the reference signal to the transmitting device, and the transmitting device can estimate the channel quality of the uplink and set the configuration for communication between the transmitting device and the terminal-side electronic device accordingly. Particularly, compared with the embodiment described above, in the present embodiment using channel reciprocity, the operation of judging the communication condition is interchanged between the terminal-side electronic device and the transmitting device, wherein the terminal-side electronic device can be regarded as operating in a similar manner to the transmitting device described above, and the transmitting device can be regarded as operating in a similar manner to the terminal-side electronic device described above.

An electronic device and a communication method based on channel reciprocity in a wireless communication system using a sidelink for multicast according to an embodiment of the present disclosure will be described below with reference to the accompanying drawings.

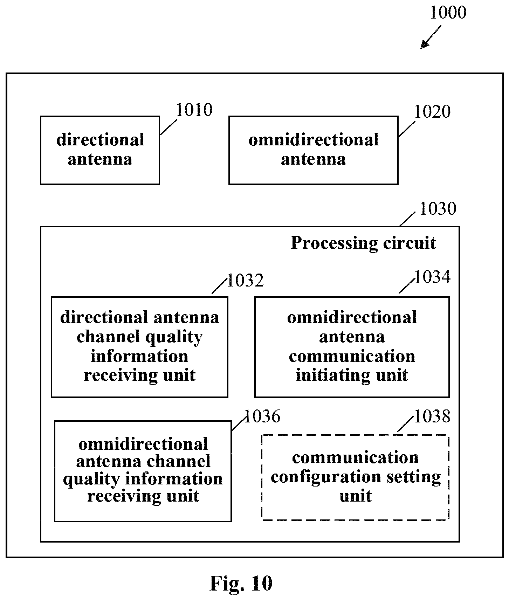

Fig. 10 shows a schematic block diagram of a terminal-side electronic device 1000 according to an embodiment of the present disclosure. The terminal-side electronic device 1000 may correspond to terminal-side electronic devices 120a, 120b or 120c in Fig. 1. For clarity, the following description will take the first type of antenna being a directional antenna and the second type of antenna being an omni-directional antenna as an example. As shown in Fig. 10, the terminal-side electronic device 1000 may include a directional antenna 1010, an omnidirectional antenna 1020 and a processing circuit 1030.

The processing circuit 1030 can provide various functions of the terminal-side electronic device 1000. According to an embodiment of the present disclosure, the processing circuit 1030 may be configured to receive a first information about channel quality between the terminal-side electronic device 1000 and the transmitting device via the directional antenna, which is estimated by the transmitting device based on a first reference signal transmitted by the terminal-side electronic device 1000 via the directional antenna; carry out communication between the terminal-side electronic device 1000 and the transmitting device via an omni-directional antenna based on the first information about channel quality; receive a second information about channel quality between the terminal-side electronic device 1000 and the transmitting device via the omnidirectional antenna, which is estimated by the transmitting device based on a second reference signal transmitted by the terminal-side electronic device 1000 via the omnidirectional antenna; and wherein, the communication configuration between the terminal-side electronic device 1000 and the transmitting device can be set based on at least the second information about channel quality.

According to an embodiment of the present disclosure, the processing circuit 1030 may include various units for realizing the above functions, such as a directional antenna channel quality information receiving unit 1032, an omnidirectional antenna communication initiating unit 1034 and an omnidirectional antenna channel quality information receiving unit 1036, and may optionally include a communication configuration setting unit 1038. The communication configuration setting unit 1038 is drawn with dashed lines because it can also be located outside the terminal-side electronic device 1000. These units included in the processing circuit 1030 may be communicatively coupled to each other (not shown) and/or to one or more of the directional antenna 1010 and the omnidirectional antenna 1020 (not shown). It should be noted that although each unit is shown as a discrete unit in Fig. 10, one or more of these units can be combined into one unit or split into multiple units. In addition, although four units of the processing circuit 1030 are shown in Fig. 10, the processing circuit 1030 may also include other possible units.

According to an embodiment of the present disclosure, the directional antenna channel quality information receiving unit 1032 may be configured to receive a first information about channel quality between the terminal-side electronic device 1000 and the transmitting device via the directional antenna, which is estimated by the transmitting device based on a first reference signal transmitted by the terminal-side electronic device 1000 via the directional antenna. For example, after a radio signal containing the first channel quality information is received by the directional antenna 1010 from the transmitting device or the control-side electronic device, the first channel quality information can be obtained from the radio signal through processing such as down conversion and analog-digital conversion, etc., and then the first channel quality information can be transmitted to the directional antenna channel quality information receiving unit 1032.

As described above, the first channel quality information may include any of the following: power parameters, for example, reference signal reception power (RSRP) and reference signal reception quality (RSRQ), of the received first reference signal transmitted by the terminal-side electronic device 1000 via the directional antenna 1010; and the channel state, e.g., channel quality indicator (CQI), between the terminal-side electronic device 1000 and the transmitting device via the directional antenna which is estimated based on the received first reference signal.

According to an embodiment, the first reference signal may be transmitted by the terminal-side electronic device 1000 spontaneously or in response to a request/instruction, as described above for the first reference signal transmitted by the transmitting device. For example, the first reference signal may be continuously or periodically transmitted, may be transmitted in response to the deterioration of the data communication quality via the directional antenna acquired by the transmitting device, or may be transmitted in response to the request/instruction from the transmitting device and/or the control-side electronic device. The specific operation mode can be as described above and will not be described in detail here.

According to an embodiment of the present disclosure, the omnidirectional antenna communication initiating unit 1034 may be configured to carry out communication between the terminal-side electronic device 1000 and the transmitting device via an omni-directional antenna based on the first channel quality information. The omni-directional antenna communication initiating unit 1034 can also carry out communication between the terminal-side electronic device 1000 and the transmitting device via the omni-directional antenna based on an instruction transmitted from the transmitting device or the control-side electronic device based on the first channel quality information.

In one embodiment, the terminal-side electronic device 1000 can receive the first channel quality information or the comparison result between the first channel quality information and the first threshold from the transmitting device or the control-side electronic device. In response to the first channel quality information being lower than the first threshold or the comparison result between the first channel quality information and the first threshold being a specific value, the communication between the terminal-side electronic device 1000 and the transmitting device via the omnidirectional antenna can be carried out by the terminal-side electronic device 1000 spontaneously or based on the instruction from the control-side electronic device. In one embodiment, further in response to the change between the current first channel quality information and the previously received first channel quality information being within a predetermined range, the communication between the terminal-side electronic device 1000 and the transmitting device via the omnidirectional antenna is carried out by the terminal-side electronic device 1000 spontaneously or based on the instruction from the control-side electronic device.

As an example, the terminal-side electronic device 1000 may transmit the second reference signal to the transmitting device via the omnidirectional antenna 1020 to carry out communication via the omnidirectional antenna. The second reference signal may be transmitted by the terminal-side electronic device 1000 spontaneously or in response to a request/instruction, as described above for the second reference signal transmitted by the transmitting device. For example, the second reference signal can be transmitted continuously or periodically, transmitted in response to the first channel quality information being lower than the first threshold, or transmitted in response to a request/instruction from the transmitting device and/or the control-side electronic device based on the first channel quality information being lower than the first threshold. The specific operation mode can be as described above and will not be described in detail here.

According to an embodiment of the present disclosure, the omnidirectional antenna channel quality information receiving unit 1036 may be configured to receive a second information about channel quality between the terminal-side electronic device 1000 and the transmitting device via the omnidirectional antenna, which is estimated by the transmitting device based on a second reference signal transmitted by the terminal-side electronic device 1000 via the omnidirectional antenna. For example, after a radio signal containing the second channel quality information is received by the omni-directional antenna 1020 from the transmitting device or the control-side electronic device, the second channel quality information can be obtained from the radio signal through processing such as down conversion and analog-digital conversion, etc., and then the second channel quality information can be transmitted to the omni-directional antenna channel quality information receiving unit 1036. The transmitting device may determine the second channel quality information based on any suitable channel quality estimation technique.

In one embodiment, the second channel quality information may include any of the following: power parameters, for example, reference signal reception power (RSRP) and reference signal reception quality (RSRQ), of the received second reference signal transmitted by the terminal-side electronic device 1000 via the omni-directional antenna 1020; and the channel state, e.g., channel quality indicator (CQI), between the terminal-side electronic device 1000 and the transmitting device via the omni-directional antenna which is estimated based on the received second reference signal.

According to an embodiment of the present disclosure, the configuration for communication between the terminal-side electronic device 1000 and the transmitting device can be set based on at least the second channel quality information. In one embodiment, the processing circuit 1030 may include a communication configuration setting unit 1038, which may be configured to set the configuration for communication between the terminal-side electronic device 1000 and the transmitting device based on at least the second channel quality information. It should be understood that the configuration for communication between the terminal-side electronic device 1000 and the transmitting device can also be set by the transmitting device or the control-side electronic device. The meaning and setting/adjusting operation of communication configuration can be as described above, and will not be described in detail here.

The realization of directional antenna 1010 and omnidirectional antenna 1020 can be similar to directional antenna 210 and omnidirectional antenna 220 as described above, and will not be described in detail here. It should be understood that Fig. 10 is only a schematic structural configuration of the terminal-side electronic device, and the terminal-side electronic device 1000 may also include other possible components (e.g., memory, etc.), similar to the terminal-side electronic device 200 described above. It will not be described in detail here.

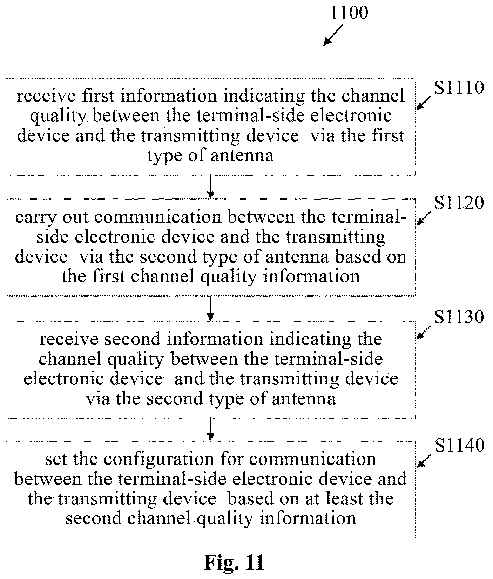

Fig. 11 shows a flowchart of a communication method 1100 for a terminal-side electronic device according to an embodiment of the present disclosure, wherein the terminal-side electronic device is, for example, the terminal-side electronic device 1000 shown in Fig. 10.

In step S1110, the terminal-side electronic device 1000 can receive from a transmitting device or a control-side electronic device a first information about channel quality between the terminal-side electronic device 1000 and the transmitting device via a first type of antenna, such as, the directional antenna 1010, which is estimated by the transmitting device based on a first reference signal transmitted by the terminal-side electronic device 1000 via the first type of antenna of the terminal-side electronic device 1000. This step S1110 may be performed by the directional antenna channel quality information receiving unit 1032 in Fig. 10, for example.

Then, the flow proceeds to step S1120. In step S1120, the terminal-side electronic device 1000 may carry out communication between the terminal-side electronic device 1000 and the transmitting device via a second type of antenna based on the first channel quality information. This step S1120 may be performed by the omnidirectional antenna communication initiating unit 1034 in Fig. 10, for example.

Then, the flow proceeds to step S1130. In step S1130, the terminal-side electronic device 1000 may receive from the transmitting device or the control-side electronic device a second information about channel quality between the terminal-side electronic device 1000 and the transmitting device via the second type of antenna, such as, the omnidirectional antenna 1020, which is estimated by the transmitting device based on a second reference signal transmitted by the terminal-side electronic device 1000 via the second type of antenna of the terminal-side electronic device 1000. This step S1130 may be performed by the omnidirectional antenna channel quality information receiving unit 1036 in Fig. 10, for example.

Then, the flow proceeds to step S1140. In step S1140, the terminal-side electronic device 1000 may set the configuration for communication between the terminal-side electronic device 1000 and the transmitting device based on at least the second channel quality information. This step S1140 can be performed by the communication configuration setting unit 1038 in Fig. 10, for example. Step S1140 is drawn with dashed lines, because in some embodiments, step S1140 can also be performed by other devicesthan the terminal-side electronic device 1000, e.g., the transmitting device or the control-side electronic device. For example, the transmitting device can trasmit any one of the second channel quality information and the comparison result between the second channel quality information and a specific threshold to the control-side electronic device for the control-side electronic device to set the configuration for communication between the terminal-side electronic device 1000 and the transmitting device. For example, the communication configuration setting unit of the transmitting device can also set the configuration for communication between the terminal-side electronic device 1000 and the transmitting device based on the second channel quality information.

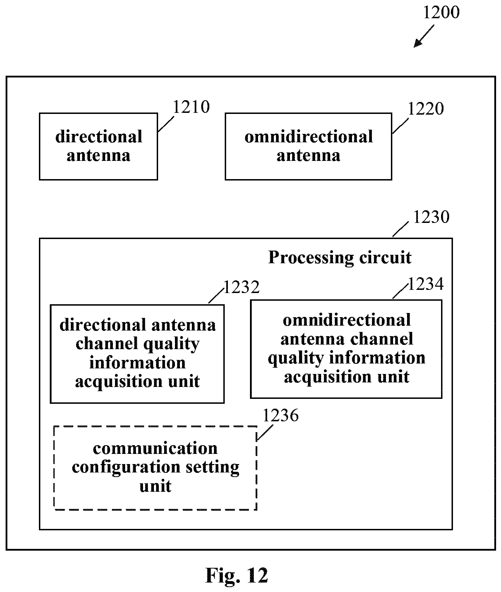

Fig. 12 shows a schematic block diagram of a transmitting device 1200 according to an embodiment of the present disclosure. The transmitting device 1200 may correspond to the transmitting device 130 in Fig. 1. For clarity, the following description will take the first type of antenna being a directional antenna and the second type of antenna being an omni-directional antenna as an example. As shown in Fig. 12, the transmitting device 1200 may include a directional antenna 1210, an omnidirectional antenna 1220 and a processing circuit 1230. For convenience, the functions in the processing circuit 1230 of the transmitting device 1200 in Fig. 12 will be described below with reference to the terminal-side electronic device 1000 according to the embodiment of the present disclosure shown in Fig. 10.

The processing circuit 1230 may provide various functions of the transmitting device 1200. According to an embodiment of the present disclosure, the processing circuit 1230 may be configured to acquire a first information about channel quality between the terminal-side electronic device 1000 and the transmitting device 1200 via the directional antenna, which is estimated based on the first reference signal transmitted by the terminal-side electronic device 1000 via the directional antenna 1010; acquire a second information about channel quality between the terminal-side electronic device 1000 and the transmitting device 1200 via the omnidirectional antenna, which is estimated based on the second reference signal transmitted by the terminal-side electronic device 1000 via the omnidirectional antenna, wherein the communication between the terminal-side electronic device 1000 and the transmitting device 1200 via the omnidirectional antenna is based on the first channel quality information; and wherein, the configuration for communication between the terminal-side electronic device 1000 and the transmitting device 1200 can be set based on at least the second channel quality information.

According to an embodiment of the present disclosure, the processing circuit 1230 may include various units for realizing the above functions, such as a directional antenna channel quality information acquisition unit 1232 and an omnidirectional antenna channel quality information acquisition unit 1234, and may optionally include a communication configuration setting unit 1236. The communication configuration setting unit 1236 is drawn with dashed lines because it can also be located outside the transmitting device 1200. These units included in the processing circuit 1230 may be communicatively coupled to each other (not shown) and/or to one or more of the directional antenna 1210 and the omnidirectional antenna 1220 (not shown). It should be noted that although each unit is shown as a discrete unit in Fig. 12, one or more of these units can be combined into one unit or split into multiple units. In addition, although three units of the processing circuit 1230 are shown in Fig. 12, the processing circuit 1230 may also include other possible units.

According to an embodiment of the present disclosure, the directional antenna channel quality information acquisition unit 1232 may be configured to acquire the first information about channel quality between the terminal-side electronic device 1000 and the transmitting device 1200 via the directional antenna, which is estimated based on the first reference signal transmitted by the terminal-side electronic device 1000 via the directional antenna 1010.

The first channel quality information may include any of the following: power parameters, for example, reference signal reception power (RSRP) and reference signal reception quality (RSRQ), of the received first reference signal transmitted by the terminal-side electronic device 1000 via the directional antenna 1010; and the channel state, e.g., channel quality indicator (CQI), between the terminal-side electronic device 1000 and the transmitting device 1200 via the directional antenna which is estimated based on the received first reference signal. In one embodiment, the first channel quality information is generated by the transmitting device 1200 and can be transmitted to the terminal-side electronic device 1000 and/or the control-side electronic device.

According to an embodiment of the present disclosure, the omnidirectional antenna communication condition acquisition unit 1234 may be configured to acquire the second information about channel quality between the terminal-side electronic device 1000 and the transmitting device 1200 via the omnidirectional antenna, which is estimated based on the second reference signal transmitted by the terminal-side electronic device 1000 via the omnidirectional antenna 1020. The second channel quality information may include information about channel quality between the terminal-side electronic device 1000 and the transmitting device 1200 via the omnidirectional antenna, which is determined based on the second reference signal transmitted by the terminal-side electronic device 1000 via the omnidirectional antenna, or a quantized value of the channel quality information. In one embodiment, the second channel quality information is generated by the transmitting device 1200 and can be transmitted to the terminal-side electronic device 1000 and/or the control-side electronic device. In one embodiment, the communication between the terminal-side electronic device 1000 and the transmitting device 1200 via the omnidirectional antenna is based on the first information about channel quality between the terminal-side electronic device 1000 and the transmitting device 1200 via the directional antenna, which is acquired by the directional antenna channel quality information acquisition unit 1232. For example, the communication between the terminal-side electronic device 1000 and the transmitting device 1200 via the omnidirectional antenna can be performed in response to the first channel quality information indicating that the communication between the terminal-side electronic device 1000 and the transmitting device 1200 via the directional antenna is poor, for example, the first channel quality information is lower than a certain threshold.

According to an embodiment of the present disclosure, the communication configuration between the terminal-side electronic device 1000 and the transmitting device 1200 can be set based on at least the second channel quality information. In one embodiment, the processing circuit 1230 may include a communication configuration setting unit 1236, which may be configured to set the configuration for communication between the terminal-side electronic device 1000 and the transmitting device 1200 based on at least the second channel quality information. It should be understood that the configuration for communication between the terminal-side electronic device 1000 and the transmitting device 1200 can also be set by the terminal-side electronic device 1000 or the control-side electronic device. The specific method of communication configuration setting will be further described below.

The realization of directional antenna 1210 and omnidirectional antenna 1220 can be similar to directional antenna 410 and omnidirectional antenna 420 as described above, and will not be described in detail here. It should be understood that Fig. 12 is only a schematic structural configuration of the transmitting device, and the transmitting device 1200 may also include other possible components (e.g., memory, etc.), similar to the transmitting device 400 described above. It will not be described in detail here.

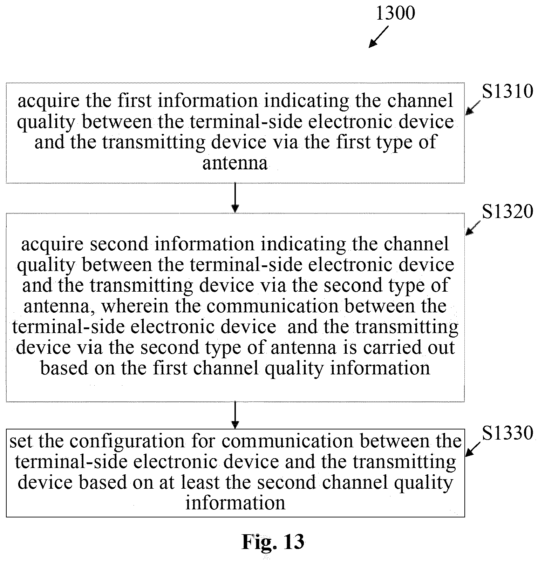

Fig. 13 shows a flowchart of a communication method 1300 for a transmitting device according to an embodiment of the present disclosure. Next, the communication method 1300 will be described with reference to Figs. 10 and 12, wherein the transmitting device is, for example, the transmitting device 1200 shown in Fig. 12.

In step S1310, the transmitting device 1200 acquires the first information about channel quality between the terminal-side electronic device 1000 and the transmitting device 1200 via the first type of antenna, for example, directional antenna 1010, which is estimated based on the first reference signal transmitted by the terminal-side electronic device 1000 via the first type of antenna of the terminal-side electronic device 1000. This step S1310 may be performed, for example, by the directional antenna channel quality information acquisition unit 1232 in Fig. 12. The example of the first channel quality information has been described above, and will not be repeated here.

In one embodiment, the transmitting device 1200 acquires the first information about channel quality between the terminal-side electronic device 1000 and the transmitting device 1200 via the first type of antenna by including: determining the data communication quality between the terminal-side electronic device 1000 and the transmitting device 1200 via the first type of antenna; and in response to the data communication quality between the terminal-side electronic device 1000 and the transmitting device 1200 via the first type of antenna being lower than a corresponding threshold, determining the first channel quality information based on the received first reference signal transmitted by the terminal-side electronic device 1000 via the first type of antenna. The transmitting device 1200 may determine the first channel quality information based on any suitable channel quality estimation technique.

Then, the flow proceeds to step S1320. In step S1320, the transmitting device 1200 acquires the second information about channel quality between the terminal-side electronic device 1000 and the transmitting device 1200 via the second type of antenna, for example, the omnidirectional antenna 1020, which is estimated based on the second reference signal transmitted by the terminal-side electronic device 1000 via the second type of antenna. This step S1320 may be performed, for example, by the omnidirectional antenna channel quality information acquisition unit 1234 in Fig. 12.

Then, the flow proceeds to step S1330. In step S1330, the transmitting device 1200 may set the configuration for communication between the terminal-side electronic device 1000 and the transmitting device 1200 based on at least the second channel quality information. This step S1330 can be performed by the communication configuration setting unit 1236 in Fig. 12, for example. Step S1330 is drawn with dashed lines, because in some embodiments, step S1330 can also be performed by other devices than the transmitting device 1200, for example, the terminal-side electronic device 1000 or the control-side electronic device. For example, the transmitting device 1200 can transmit any one of the second channel quality information and the comparison result between the second channel quality information and a specific threshold to the terminal-side electronic device 1000 or the control-side electronic device, so that the terminal-side electronic device 1000 or the control-side electronic device sets the configuration for communication between the terminal-side electronic device 1000 and the transmitting device 1200.

Exemplary implementations of communication condition determination and communication configuration setting in a wireless communication system according to an embodiment of the present disclosure will be described below with reference to the accompanying drawings. Similar to the embodiment described above, in the wireless communication system of this embodiment, firstly, the directional antenna communication condition and the omni-directional antenna communication condition will be judged, so as to accurately judge the influencing factors/events that result in the deterioration of communication quality, and then the communication configuration will be appropriately adjusted/set according to the judgment result, thereby improving the communication quality and communication robustness in the communication system.

It should be noted that in this embodiment, the communication condition determination and the communication configuration setting can be performed in a similar manner to the embodiments as described above. For example, the determination of communication condition events, such as the events shown in Figs. 6A to 6C, can be made as shown in the flow of Fig. 7, for example, communication via omnidirectional antennas can be performed by various devices as shown in Figs. 8A to 8C, and for example, corresponding communication configuration settings/adjustments can be made with respect to various events as shown in Figs. 9A to 9C. However, although the operations are carried out in a similar way, considering the channel reciprocity, the subjects of these operations will be interchanged compared with the embodiments described above.

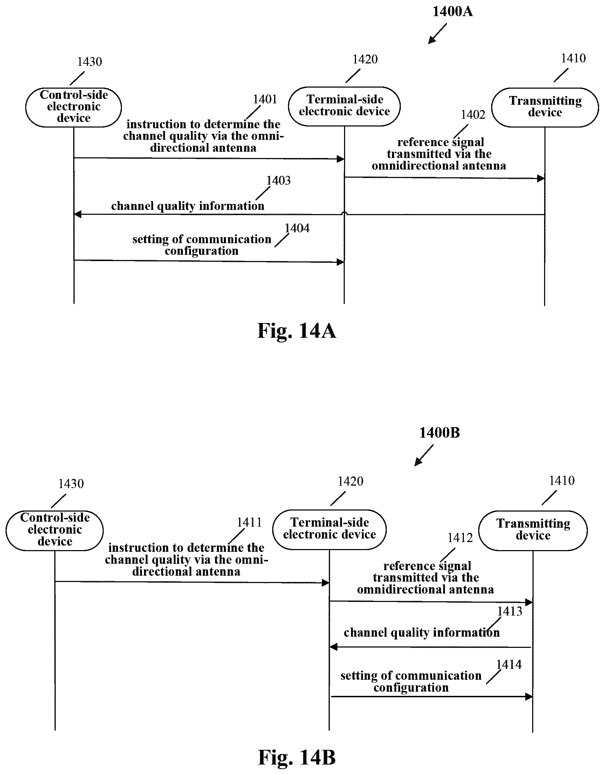

Figs. 14A- 14C illustrate schematic signaling diagrams for communication between terminal-side electronic device and transmitting device via omnidirectional antennas in a wireless communication system according to an embodiment of the present disclosure. The transmitting device 1410, the terminal-side electronic device 1420 and the control-side electronic device 1430 shown in Figs. 14A- 14C can have basically the same meaning as the transmitting device, the terminal-side electronic device and the control-side electronic device as described above and will not be described in detail here.

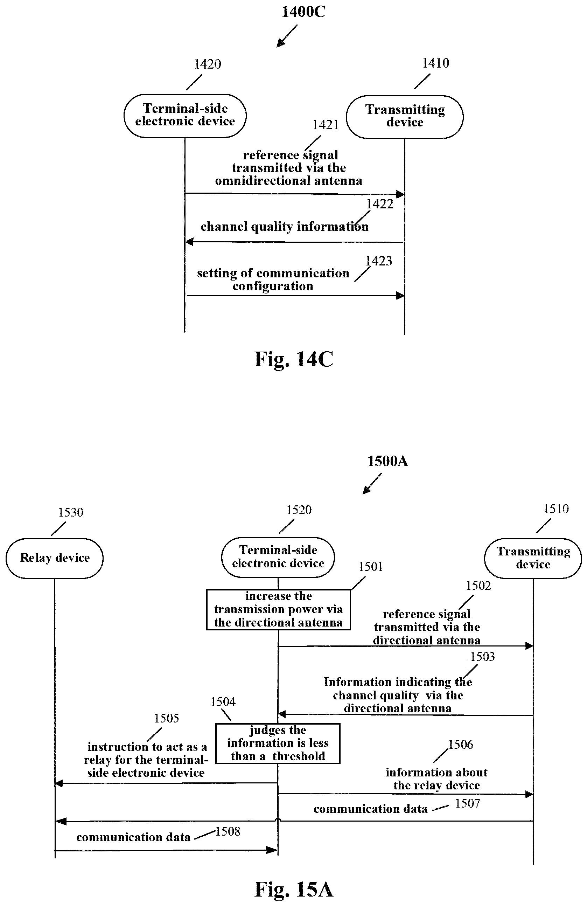

The signaling operations shown in Figs. 14A-14C may be similar to those shown in Figs. 8A-8C. Particularly, steps 1401-1404 shown in Fig. 14A, steps 1411-1414 shown in Fig. 14B and steps 1421-1423 shown in Fig. 14C, can be executed in similar manners to steps 801-804 shown in Fig. 8A, steps 811-814 shown in Fig. 8B and steps 821-823 shown in Fig. 8C, respectively, and thus will not be described in detail here.

Figs. 15A to 15C respectively show signaling diagrams of a schematic method of communication configuration setting for a scenario of communication quality deterioration between terminal-side electronic device and transmitting device in a wireless communication system according to an embodiment of the present disclosure. The transmitting device 1510, the terminal-side electronic device 1520 and the control-side electronic device 1530 shown in Figs. 15A- 15C can have basically the same meaning as the transmitting device, the terminal-side electronic device and the control-side electronic device as described above and will not be described in detail here.

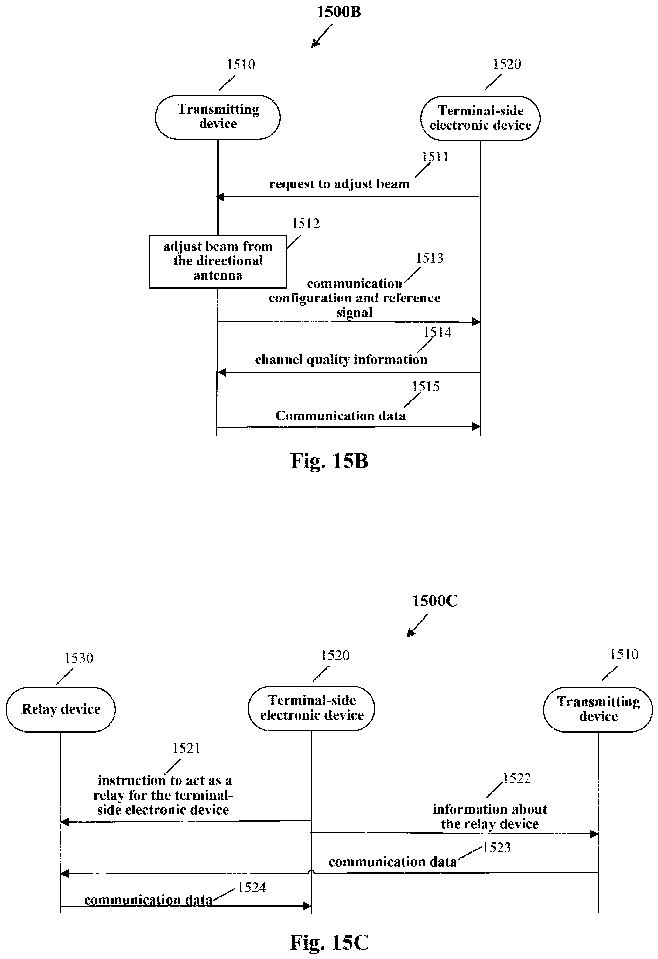

The signaling operations shown in Figs. 15A-15C may be similar to those shown in Figs. 9A-9C. Particularly, steps 1501-1508 shown in Fig. 15A, 1511-1515 shown in Fig. 15B and 1521-1524 shown in Fig. 15C may be executed in similar manners to steps 901-908 shown in Fig. 9A, steps 911-915 shown in Fig. 9B and steps 921-924 shown in Fig. 9C, respectively, and thus will not be described in detail here.

Embodiments utilizing channel reciprocity according to the present disclosure have been described above. According to this embodiment, by accurately judging the communication condition and appropriately adjusting the communication configuration according to the judgment result, the adverse effects of unfavorable factors/events on the communication in the wireless communication system can be appropriately suppressed, and the communication in the wireless communication system can be improved to be more robust.

« 5. Application examples »

An example of a cooperative communication scenario in the platooning is described in this disclosure, but it should be understood that the application scenario of this disclosure is not limited to the cooperative communication scenario in the platooning. The improved scheme proposed in this disclosure can be applied to any cooperative communication application scenario, such as unmanned aerial vehicles formation flight, intelligent factory robot cooperative operation, and so on.

It should be noted that the application examples described above are merely exemplary. The embodiments of the present disclosure can also be executed in any other suitable manner, and the advantageous effects obtained by the embodiments of the present disclosure still can be achieved. Moreover, the embodiments of the present disclosure can also be applied to other similar application examples, and the advantageous effects obtained by the embodiments of the present disclosure can still be achieved.

It should be understood that the machine-executable instructions in the machine-readable storage medium or program product according to the embodiments of the present disclosure may be configured to perform operations corresponding to the above-mentioned device and method embodiments. When referring to the above device and method embodiments, the embodiments of the machine-readable storage medium or program product are clear to those skilled in the art, and therefore will not be described repeatedly. Machine-readable storage medium and program products for carrying or including the above-mentioned machine-executable instructions also fall within the scope of the present disclosure. Such a storage medium may include, but is not limited to, a floppy disk, an optical disk, a magneto-optical disk, a memory card, a memory stick, and the like.

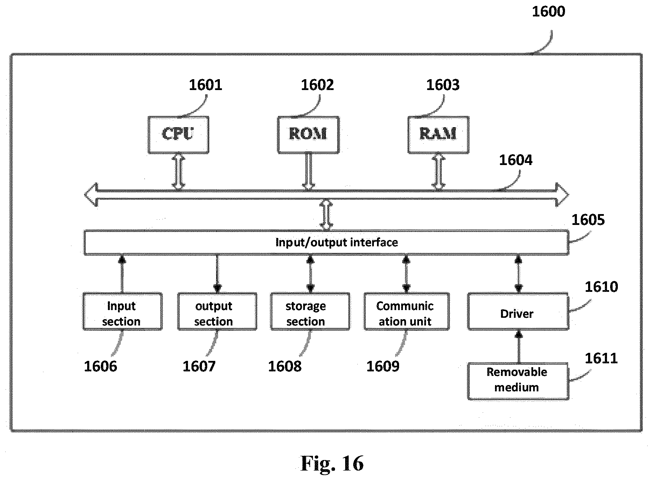

In addition, it should be understood that the processes and devices described above may also be implemented by software and / or firmware. When implemented by software and / or firmware, a program constituting the software is installed from a storage medium or a network to a computer having a dedicated hardware structure, such as a general-purpose personal computer 1600 shown in FIG. 16, and the computer can perform a variety of functions by installing various programs thereon. FIG. 16 is a block diagram illustrating an example structure of a personal computer as an information processing apparatus that can be adopted in an embodiment of the present disclosure. In one example, the personal computer may correspond to the above-described exemplary transmitting device or terminal-side electronic device according to the present disclosure.

In FIG. 16, a central processing unit (CPU) 1601 performs various processes according to a program stored in a read only memory (ROM) 1602 or a program loaded from a storage section 1608 to a random-access memory (RAM) 1603. In the RAM 1603, data required when the CPU 1601 executes various processes and the like is also stored as necessary.

The CPU 1601, the ROM 1602, and the RAM 1603 are connected to each other via a bus 1604. An input / output interface 1605 is also connected to the bus 1604.

The following components are connected to the input / output interface 1605: an input section 1606 including a keyboard, a mouse, etc.; an output section 1607 including a display, such as a cathode ray tube (CRT), a liquid crystal display (LCD), etc., and a speaker, etc.; a storage section 1608 including hard disks, etc.; and communication section 1609 including network interface cards such as LAN cards, modems, etc. The communication section 1609 performs communication processing via a network such as the Internet.

A driver 1610 is also connected to the input / output interface 1605 as needed. A removable medium 1611 such as a magnetic disk, an optical disk, a magneto-optical disk, a semiconductor memory, etc. is installed on the drive 1610 as needed, so that a computer program read out therefrom can be installed into the storage section 1608 as needed.

In a case where the above-mentioned processes are realized by a software, the programs constituting the software are installed from a network such as the Internet or a storage medium such as a removable medium 1611.

Those skilled in the art should understand that such a storage medium is not limited to the removable medium 1611 shown in FIG. 16 in which the program is stored and which is distributed separately from the device to provide the program to the user. Examples of the removable medium 1611 include a magnetic disk (including a floppy disk (registered trademark)), an optical disk (including a CD-ROM and a digital versatile disk (DVD)), and a magneto-optical disk (including a mini disk (MD) (registered trademark))) and semiconductor memory. Alternatively, the storage medium may be the ROM 1602, a hard disk included in the storage section 1608, and the like, in which programs are stored and which are distributed to users along with the device containing them.

The technology of the present disclosure can be applied to various products.

For example, the control-side electronic device according to embodiments of the present disclosure can be implemented as a variety of control devices/base stations, or be included in a variety of control devices/base stations. For example, the transmitting device and terminal device according to embodiments of the present disclosure can be implemented as a variety of terminal devices or be included in a variety of terminal devices.

For example, the control device/base stations mentioned in this disclosure can be implemented as any type of evolved Node B (eNB), such as macro eNB and small eNB. A small eNB may be an eNB covering a cell smaller than a macro cell, such as a pico eNB, a micro eNB, and a home (femto) eNB. Furthermore, for example, the control device/base stations can be implemented as gNB, such as macro gNB and small gNB. A small gNB may be a gNB covering a cell smaller than a macro cell, such as a pico gNB, a micro gNB, and a home (femto) gNB. Alternatively, the base station can be implemented as any other type of base station, such as a NodeB and a Base Transceiver Station (BTS). The base station may include: a main body (also referred to as a base station device) configured to control wireless communication; and one or more remote radio heads (RRHs) disposed at a place different from the main body. In addition, various types of terminals described below can work as base stations by temporarily or semi-persistently performing base station functions.

For example, in some embodiments, the terminal device mentioned in this disclosure can be implemented as a mobile terminal such as a smart phone, a tablet personal computer (PC), a notebook PC, a portable gaming terminal, a portable / dongle Mobile routers and digital cameras, or vehicle terminals such as car navigation equipment. The terminal device can also be implemented as a terminal that performs machine-to-machine (M2M) communication, also called as a machine type communication (MTC) terminal. In addition, the terminal device may be a wireless communication module mounted on each of the terminals described above, such as an integrated circuit module including a single chip.

Examples according to the present disclosure will be described below with reference to the figures.

[Example of base station]

It should be understood that the term "base station" in this disclosure has the full breadth of its usual meaning and includes at least a wireless communication station that is used as part of a wireless communication system or radio system for facilitating communication. Examples of base stations may be, for example but not limited to, the following: maybe one or both of a base transceiver station (BTS) and a base station controller (BSC) in a GSM system, may be one or both of a radio network controller (RNC) and Node B in a WCDMA system, may be eNBs in LTE and LTE-Advanced systems, or may be corresponding network nodes in future communication systems (such as gNB, eLTE eNB, etc that may appear in 5G communication systems). Part of the functions in the base station of the present disclosure can also be implemented as an entity with control function for communication in D2D, M2M, and V2V communication scenarios, or as an entity that plays a spectrum coordination role in cognitive radio communication scenarios.

First example

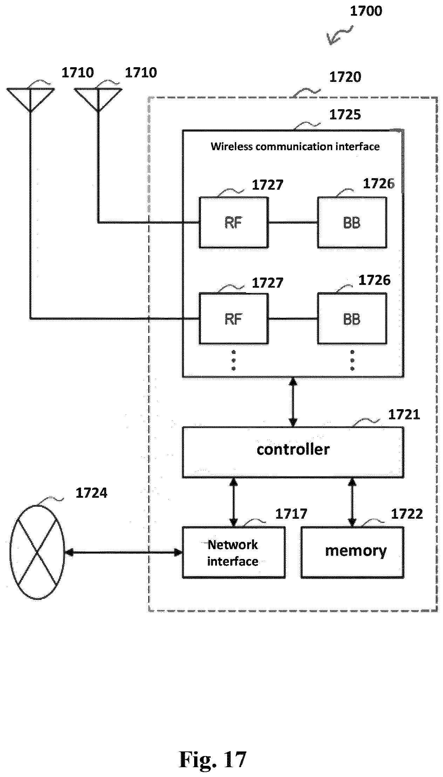

FIG. 17 is a block diagram illustrating a first example of a schematic configuration of a gNB to which the technology of the present disclosure can be applied. The gNB 1700 includes a plurality of antennas 1710 and a base station device 1720. The base station device 1720 and each antenna 1710 may be connected to each other via an RF cable. In an implementation manner, the gNB 1700 (or the base station device 1720) herein may correspond to the above-mentioned control-side electronic device.

Each of the antennas 1710 includes a single or multiple antenna elements, such as multiple antenna elements included in a multiple-input multiple-output (MIMO) antenna, and is used for the base station device 1720 to transmit and receive wireless signals. As shown in FIG. 17, the gNB 1700 may include a plurality of antennas 1710. For example, multiple antennas 1710 may be compatible with multiple frequency bands used by gNB 1700.

The base station device 1720 includes a controller 1721, a memory 1722, a network interface 1717, and a wireless communication interface 1725.

The controller 1721 may be, for example, a CPU or a DSP, and operates various functions of the base station device 1720 at a higher layer. For example, the controller 1721 determines position information of a target terminal device in at least one terminal device on the terminal side of a wireless communication system based on the location information and specific position configuration information of the at least one terminal device acquired via a wireless communication interface 1725. The controller 1721 may have logical functions that perform controls such as radio resource control, radio bearer control, mobility management, admission control, and scheduling. The controls can be performed in conjunction with a nearby gNB or core network node. The memory 1722 includes a RAM and a ROM, and stores a program executed by the controller 1721 and various types of control data such as a terminal list, transmission power data, and scheduling data.

The network interface 1717 is a communication interface for connecting the base station device 1720 to the core network 1724. The controller 1721 may communicate with a core network node or another gNB via the network interface 1717. In this case, the gNB 1700 and the core network node or other gNBs may be connected to each other through a logical interface such as an S1 interface and an X2 interface. The network interface 1717 may also be a wired communication interface or a wireless communication interface for a wireless backhaul line. If the network interface 1717 is a wireless communication interface, compared with the frequency band used by the wireless communication interface 1725, the network interface 1717 can use a higher frequency band for wireless communication.

The wireless communication interface 1725 supports any cellular communication scheme such as Long Term Evolution (LTE) and LTE-Advanced, and provides a wireless connection to a terminal located in a cell of the gNB 1700 via an antenna 1710. The wireless communication interface 1725 may generally include, for example, a baseband (BB) processor 1726 and an RF circuit 1727. The BB processor 1726 may perform, for example, encoding / decoding, modulation / demodulation, and multiplexing / demultiplexing, and execute various types of signal processing in layers such as L1, Medium Access Control (MAC), Radio Link Control (RLC), and Group Data Convergence Protocol (PDCP). As an alternative of the controller 1721, the BB processor 1726 may have a part or all of the above-mentioned logical functions. The BB processor 1726 may be a memory storing a communication control program, or a module including a processor and related circuits configured to execute the program. Updating the program can change the function of the BB processor 1726. The module may be a card or a blade inserted into a slot of the base station device 1720. Alternatively, the module may be a chip mounted on a card or a blade. Meanwhile, the RF circuit 1727 may include, for example, a mixer, a filter, and an amplifier, and transmits and receives a wireless signal via the antenna 1710. Although FIG. 17 illustrates an example in which one RF circuit 1727 is connected to one antenna 1710, the present disclosure is not limited to this illustration, but one RF circuit 1727 may be connected to multiple antennas 1710 at the same time.

As shown in FIG. 17, the wireless communication interface 1725 may include a plurality of BB processors 1726. For example, the plurality of BB processors 1726 may be compatible with multiple frequency bands used by gNB 1700. As shown in FIG. 17, the wireless communication interface 1725 may include a plurality of RF circuits 1727. For example, the plurality of RF circuits 1727 may be compatible with multiple antenna elements. Although FIG. 17 illustrates an example in which the wireless communication interface 1725 includes a plurality of BB processors 1726 and a plurality of RF circuits 1727, the wireless communication interface 1725 may also include a single BB processor 1726 or a single RF circuit 1727.

Second example

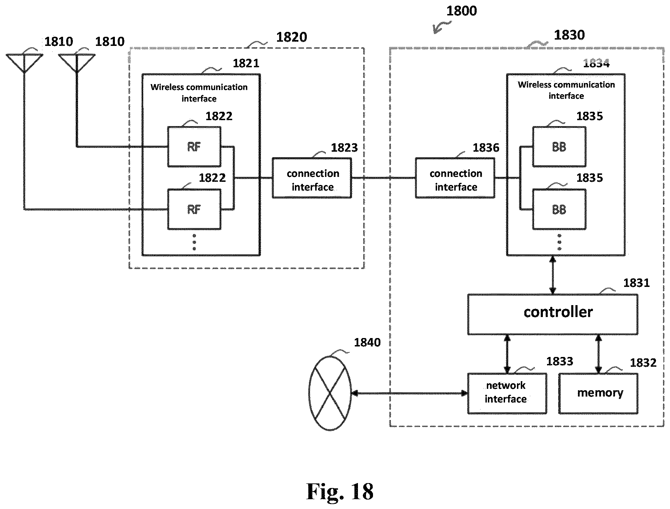

FIG. 18 is a block diagram illustrating a second example of a schematic configuration of a gNB to which the technology of the present disclosure can be applied. The gNB 1800 includes multiple antennas 1810, RRH 1820 and base station equipment 1830. The RRH 1820 and each antenna 1810 may be connected to each other via an RF cable. The base station equipment 1830 and the RRH 1820 may be connected to each other via a high-speed line such as a fiber optic cable. In an implementation manner, the gNB 1800 (or the base station equipment 1830) herein may correspond to the foregoing control-side electronic device.

Each of the antennas 1810 includes a single or multiple antenna elements (such as multiple antenna elements included in a MIMO antenna) and is used for RRH 1820 to transmit and receive wireless signals. As shown in FIG. 18, the gNB 1800 may include multiple antennas 1810. For example, multiple antennas 1810 may be compatible with multiple frequency bands used by gNB 1800.

The base station device 1830 includes a controller 1831, a memory 1832, a network interface 1833, a wireless communication interface 1834, and a connection interface 1836. The controller 1831, the memory 1832, and the network interface 1833 are the same as the controller 1721, the memory 1722, and the network interface 1717 described with reference to FIG. 17.

The wireless communication interface 1834 supports any cellular communication scheme such as LTE and LTE-Advanced, and provides wireless communication to a terminal located in a sector corresponding to the RRH 1820 via the RRH 1820 and the antenna 1810. The wireless communication interface 1834 may typically include, for example, a BB processor 1835. The BB processor 1835 is the same as the BB processor 1726 described with reference to FIG. 17 except that the BB processor 1835 is connected to the RF circuit 1822 of the RRH 1820 via the connection interface 1836. As shown in FIG. 18, the wireless communication interface 1834 may include a plurality of BB processors 1835. For example, multiple BB processors 1835 may be compatible with multiple frequency bands used by gNB 1800. Although FIG. 18 illustrates an example in which the wireless communication interface 1834 includes a plurality of BB processors 1835, the wireless communication interface 1834 may also include a single BB processor 1835.

The connection interface 1836 is an interface for connecting the base station device 1830 (wireless communication interface 1834) to the RRH 1820. The connection interface 1836 may also be a communication module for communication in the above-mentioned high-speed line connecting the base station device 1830 (wireless communication interface 1834) to the RRH 1820.

The RRH 1820 includes a connection interface 1823 and a wireless communication interface 1821.

The connection interface 1823 is an interface for connecting the RRH 1820 (wireless communication interface 1821) to the base station device 1830. The connection interface 1823 may also be a communication module for communication in the above-mentioned high-speed line.

The wireless communication interface 1821 transmits and receives wireless signals via the antenna 1810. The wireless communication interface 1821 may generally include, for example, an RF circuit 1822. The RF circuit 1822 may include, for example, a mixer, a filter, and an amplifier, and transmits and receives wireless signals via the antenna 1810. Although FIG. 18 illustrates an example in which one RF circuit 1822 is connected to one antenna 1810, the present disclosure is not limited to this illustration, but one RF circuit 1822 may be connected to multiple antennas 1810 at the same time.

As shown in FIG. 18, the wireless communication interface 1821 may include a plurality of RF circuits 1822. For example, the plurality of RF circuits 1822 may support multiple antenna elements. Although FIG. 18 illustrates an example in which the wireless communication interface 1821 includes a plurality of RF circuits 1822, the wireless communication interface 1821 may include a single RF circuit 1822.

[ Example of user equipment/terminal device]

First example

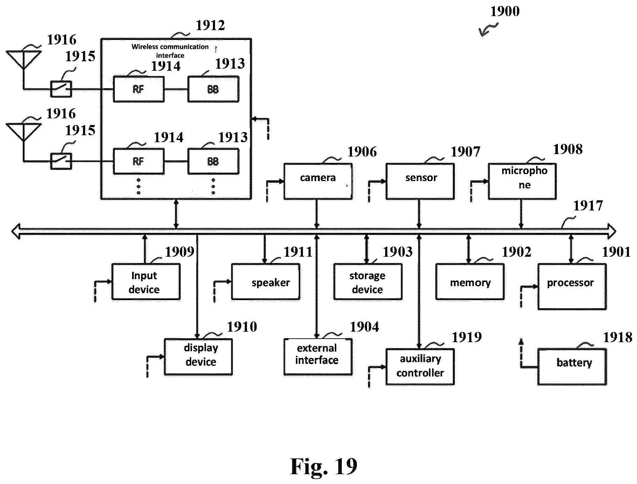

FIG. 19 is a block diagram illustrating an example of a schematic configuration of a communication device 1900, such as smartphone, linker, etc., to which the technology of the present disclosure can be applied. The communication device 1900 includes a processor 1901, a memory 1902, a storage device 1903, an external connection interface 1904, a camera device 1906, a sensor 1907, a microphone 1908, an input device 1909, a display device 1910, a speaker 1911, a wireless communication interface 1912, one or more antenna switches 1915, one or more antennas 1916, a bus 1917, a battery 1918, and an auxiliary controller 1919. In an implementation manner, the communication device 1900 (or the processor 1901) herein may correspond to the foregoing transmitting device or terminal-side electronic device.

The processor 1901 may be, for example, a CPU or a system on chip (SoC), and controls functions of an application layer and another layer of the smartphone 1900. The memory 1902 includes a RAM and a ROM, and stores data and programs executed by the processor 1901. The storage device 1903 may include a storage medium such as a semiconductor memory and a hard disk. The external connection interface 1904 is an interface for connecting external devices such as a memory card and a universal serial bus (USB) device to the smartphone 1900.

The camera device 1906 includes an image sensor such as a charge-coupled device (CCD) and a complementary metal oxide semiconductor (CMOS), and generates a captured image. The sensor 1907 may include a set of sensors such as a measurement sensor, a gyroscope sensor, a geomagnetic sensor, and an acceleration sensor. The microphone 1908 converts a sound input to the smartphone 1900 into an audio signal. The input device 1909 includes, for example, a touch sensor, a keypad, a keyboard, a button, or a switch configured to detect a touch on the screen of the display device 1910, and receives an operation or information input from a user. The display device 1910 includes a screen such as a liquid crystal display (LCD) and an organic light emitting diode (OLED) display, and displays an output image of the smartphone 1900. The speaker 1911 converts an audio signal output from the smartphone 1900 into a sound.

The wireless communication interface 1912 supports any cellular communication scheme such as LTE and LTE-Advanced, and performs wireless communication. The wireless communication interface 1912 may generally include, for example, a BB processor 1913 and an RF circuit 1914. The BB processor 1913 may perform, for example, encoding / decoding, modulation / demodulation, and multiplexing / demultiplexing, and perform various types of signal processing for wireless communication. Meanwhile, the RF circuit 1914 may include, for example, a mixer, a filter, and an amplifier, and transmits and receives wireless signals via the antenna 1916. The wireless communication interface 1912 may be a chip module on which a BB processor 1913 and an RF circuit 1914 are integrated. As shown in FIG. 19, the wireless communication interface 1912 may include multiple BB processors 1913 and multiple RF circuits 1914. Although FIG. 19 illustrates an example in which the wireless communication interface 1912 includes a plurality of BB processors 1913 and a plurality of RF circuits 1914, the wireless communication interface 1912 may also include a single BB processor 1913 or a single RF circuit 1914.

In addition, in addition to the cellular communication scheme, the wireless communication interface 1912 may support other types of wireless communication scheme, such as a short-range wireless communication scheme, a near field communication scheme, and a wireless local area network (LAN) scheme. In this case, the wireless communication interface 1912 may include a BB processor 1913 and an RF circuit 1914 for each wireless communication scheme.

Each of the antenna switches 1915 switches a connection destination of the antenna 1916 between a plurality of circuits included in the wireless communication interface 1912 (for example, circuits for different wireless communication schemes).

Each of the antennas 1916 includes a single or multiple antenna elements, such as multiple antenna elements included in a MIMO antenna, and is used for the wireless communication interface 1912 to transmit and receive wireless signals. As shown in FIG. 19, the smartphone 1900 may include a plurality of antennas 1916. Although FIG. 19 illustrates an example in which the smart phone 1900 includes a plurality of antennas 1916, the smart phone 1900 may also include a single antenna 1916.

In addition, the smartphone 1900 may include an antenna 1916 for each wireless communication scheme. In this case, the antenna switch 1915 may be omitted from the configuration of the smartphone 1900.

The bus 1917 connects the processor 1901, the memory 1902, the storage device 1903, the external connection interface 1904, the camera device 1906, the sensor 1907, the microphone 1908, the input device 1909, the display device 1910, the speaker 1911, the wireless communication interface 1912, and the auxiliary controller 1919 to each other. The battery 1918 supplies power to each block of the smartphone 1900 shown in FIG. 19 via a feeder, and the feeder is partially shown as a dotted line in the figure. The auxiliary controller 1919 operates the minimum necessary functions of the smartphone 1900 in the sleep mode, for example.

Second example

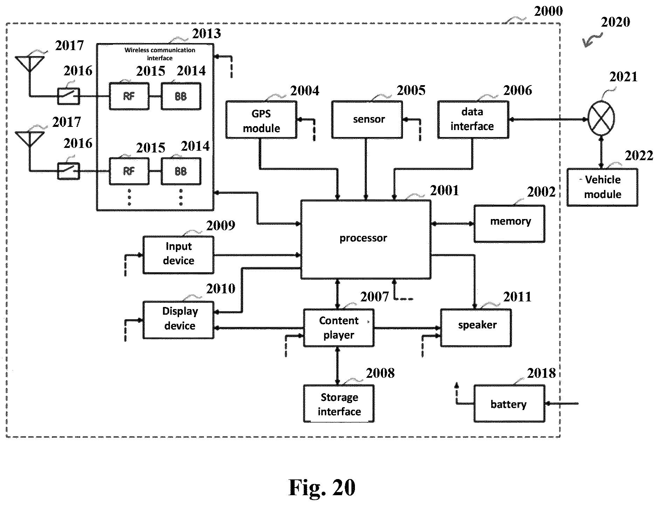

FIG. 20 is a block diagram illustrating an example of a schematic configuration of a car navigation device 2000 to which the technology of the present disclosure can be applied. The car navigation device 2000 includes a processor 2001, a memory 2002, a global location system (GPS) module 2004, a sensor 2005, a data interface 2006, a content player 2007, a storage medium interface 2008, an input device 2009, a display device 2010, a speaker 2011, and a wireless communication interface 2013, one or more antenna switches 2016, one or more antennas 2017, and a battery 2018. In an implementation manner, the car navigation device 2000 (or the processor 2001) herein may correspond to the transmitting device or terminal-side electronic device.

The processor 2001 may be, for example, a CPU or a SoC, and controls navigation functions and other functions of the car navigation device 2000. The memory 2002 includes a RAM and a ROM, and stores data and programs executed by the processor 2001.

The GPS module 2004 uses a GPS signal received from a GPS satellite to measure the position (such as latitude, longitude, and altitude) of the car navigation device 2000. The sensor 2005 may include a set of sensors such as a gyroscope sensor, a geomagnetic sensor, and an air pressure sensor. The data interface 2006 is connected to, for example, an in-vehicle network 2021 via a terminal not shown, and acquires data (such as vehicle speed data) generated by the vehicle.

The content player 2007 reproduces content stored in a storage medium such as a CD and a DVD, which is inserted into the storage medium interface 2008. The input device 2009 includes, for example, a touch sensor, a button, or a switch configured to detect a touch on the screen of the display device 2010, and receives an operation or information input from a user. The display device 2010 includes a screen such as an LCD or OLED display, and displays an image of a navigation function or reproduced content. The speaker 2011 outputs the sound of the navigation function or the reproduced content.

The wireless communication interface 2013 supports any cellular communication scheme such as LTE and LTE-Advanced, and performs wireless communication. The wireless communication interface 2013 may generally include, for example, a BB processor 2014 and an RF circuit 2015. The BB processor 2014 may perform, for example, encoding / decoding, modulation / demodulation, and multiplexing / demultiplexing, and perform various types of signal processing for wireless communication. Meanwhile, the RF circuit 2015 may include, for example, a mixer, a filter, and an amplifier, and transmit and receive wireless signals via the antenna 2017. The wireless communication interface 2013 may also be a chip module on which a BB processor 2014 and an RF circuit 2015 are integrated. As shown in FIG. 20, the wireless communication interface 2013 may include a plurality of BB processors 2014 and a plurality of RF circuits 2015. Although FIG. 20 illustrates an example in which the wireless communication interface 2013 includes a plurality of BB processors 2014 and a plurality of RF circuits 2015, the wireless communication interface 2013 may also include a single BB processor 2014 or a single RF circuit 2015.

In addition, in addition to the cellular communication scheme, the wireless communication interface 2013 may support other types of wireless communication scheme, such as a short-range wireless communication scheme, a near field communication scheme, and a wireless LAN scheme. In this case, the wireless communication interface 2013 may include a BB processor 2014 and an RF circuit 2015 for each wireless communication scheme.

Each of the antenna switches 2016 switches the connection destination of the antenna 2017 between a plurality of circuits included in the wireless communication interface 2013, such as circuits for different wireless communication schemes.

Each of the antennas 2017 includes a single or multiple antenna element, such as multiple antenna elements included in a MIMO antenna, and is used for the wireless communication interface 2013 to transmit and receive wireless signals. As shown in FIG. 20, the car navigation device 2000 may include a plurality of antennas 2017. Although FIG. 20 illustrates an example in which the car navigation device 2000 includes a plurality of antennas 2017, the car navigation device 2000 may also include a single antenna 2017.

In addition, the car navigation device 2000 may include an antenna 2017 for each wireless communication scheme. In this case, the antenna switch 2016 may be omitted from the configuration of the car navigation device 2000.

The battery 2018 supplies power to each block of the car navigation device 2000 shown in FIG. 20 via a feeder, and the feeder is partially shown as a dotted line in the figure. The battery 2018 accumulates power provided from the vehicle.

The technology of the present disclosure may also be implemented as a vehicle on-board system (or vehicle) 2020 including one or more of a car navigation device 2000, an in-vehicle network 2021, and a vehicle module 2022. The vehicle module 2022 generates vehicle data such as vehicle speed, engine speed, and failure information, and outputs the generated data to the in-vehicle network 2021.

The exemplary embodiments of the present disclosure have been described above with reference to Fig. 1 through Fig. 20. As described above, the present disclosure simultaneously utilizes the omnidirectional antenna and directional antenna of the transmitting device and terminal-side electronic device, in which the high directional beam emitted by the directional antenna is used for data communication between the transmitting device and the terminal-side electronic device, which improves the road capacity and energy efficiency, while the omni-directional antenna communication is used between the transmitting device and the terminal-side electronic device to judge the communication condition more appropriately and accurately, so that upon the communication via the directional antenna is affected, the type of the event affecting communication can be judged by means of the omnidirectional antenna, and the communication configuration can be adjusted accordingly, so that the communication between the transmitting device and the terminal-side electronic device can be improved, and the communication can be kept stable and robust.

The exemplary embodiments of the present disclosure have been described with reference to the drawings, but the present disclosure is of course not limited to the above examples. A person skilled in the art may find various alternations and modifications within the scope of the appended claims, and it should be understood that they will naturally fall in the technical scope of the present disclosure.

It should be understood that machine-executable instructions in a machine-readable storage medium or program product according to embodiments of the present disclosure may be configured to perform operations corresponding to the above-described apparatus and method embodiments. When referring to the above-described embodiments of the apparatus and method, the embodiments of the machine-readable storage medium or the program product will be clear to those skilled in the art, so the description will not be repeated. Machine-readable storage media and program products for carrying or including the above-mentioned machine-executable instructions also fall within the scope of this disclosure. Such storage media may include, but are not limited to, floppy disks, optical disks, magneto-optical disks, memory cards, memory sticks, and the like.

In addition, it should be understood that the above series of processes and devices can also be realized by software and/or firmware. In case of being implemented by software and/or firmware, corresponding programs constituting corresponding software are stored in the storage medium of related devices, and when the programs are executed, various functions can be executed.

For example, a plurality of functions included in one unit in the above embodiments may be implemented by separate devices. Alternatively, multiple functions implemented by multiple units in the above embodiments may be implemented by separate devices, respectively. In addition, one of the above functions may be implemented by multiple units. Needless to say, such configurations are included in the technical scope of the present disclosure.

In this specification, the steps described in the flowchart include not only processes performed in time series in the described order, but also processes performed in parallel or individually instead of having to be performed in time series. Further, even in the steps processed in a time series, needless to say, the order can be appropriately changed.

Implementation of exemplary embodiments of the present disclosure

According to the embodiments of the present disclosure, various manners of implementing the concepts of the present disclosure can be conceived, including but not limited to:

Exemplary embodiment 1. A terminal-side electronic device in a wireless communication system, which can communicate with a transmitting device in the wireless communication system via a first type of antenna and a second type of antenna, respectively, wherein the electronic device further includes a processing circuit configured to:

acquire a first information indicating communication condition between the terminal-side electronic device and the transmitting device via the first type of antenna; and
acquire a second information indicating communication condition between the terminal-side electronic device and the transmitting device via the second type of antenna, wherein the communication between the terminal-side electronic device and the transmitting device via the second type of antenna is performed based on the first information;
wherein a configuration for communication between the electronic device and the transmitting device can be set based on at least the second information, and wherein the first type of antenna and the second type of antenna have different directivity characteristics.

Exemplary embodiment 2. The electronic device of Exemplary embodiment 1, wherein the second type of antenna has a wider pointing range than the first type of antenna.

Exemplary embodiment 3. The electronic device of Exemplary embodiment 2, wherein the first type of antenna comprises a directional antenna and the second type of antenna comprises an omnidirectional antenna.

Exemplary embodiment 4. The electronic device of Exemplary embodiment 1, wherein the first information includes any one of the following or a quantized value thereof:

communication quality information about data communication between the terminal-side electronic device and the transmitting device via the first type of antenna; and
channel quality information determined based on a first reference signal transmitted by the transmitting device via the first type of antenna.

Exemplary embodiment 5. The electronic device of Exemplary embodiment 4, wherein the channel quality information comprises any one of the following:

power parameters of the received first reference signal transmitted by the transmitting device via the first type of antenna; and
channel states between the terminal-side electronic device and the transmitting device via the first type of antenna estimated based on the received first reference signal.

Exemplary embodiment 6. The electronic device of Exemplary embodiment 1, wherein acquire the first information indicating communication condition between the terminal-side electronic device and the transmitting device via the first type of antenna comprises:

determining the data communication quality between the terminal-side electronic device and the transmitting device via the first type of antenna; and
determining the first information based on the received first reference signal transmitted by the transmitting device via the first type of antenna, in response to the data communication quality between the terminal-side electronic device and the transmitting device via the first type of antenna being lower than a corresponding threshold.

Exemplary embodiment 7. The electronic device of any of Exemplary embodiments 4-6, wherein the first reference signal is transmitted by the transmitting device in any of the following ways:

the transmitting device continuously transmits via the first type of antenna;
the transmitting device carries out transmission in response to a request from the terminal-side electronic device, wherein the request is transmitted by the terminal-side electronic device via the first type of antenna when the data communication quality between the terminal-side electronic device and the transmitting device via the first type of antenna is lower than a corresponding threshold;
the transmitting device carries out the transmission via the first type of antenna, in response to the received data communication quality between the terminal-side electronic device and the transmitting device via the first type of antenna being lower than the corresponding threshold; and
the transmitting device carries out the transmission via the first type of antenna in response to not receiving feedback from the terminal-side electronic device within a specific time period.

Exemplary embodiment 8. The electronic device of Exemplary embodiment 1, wherein in response to the first information being lower than a first threshold or a comparison result between the first information and the first threshold being a specific value, the transmitting device carries out communication between the terminal-side electronic device and the transmitting device via the second type of antenna.
Exemplary embodiment 9. The electronic device of Exemplary embodiment 1, wherein, in response to a change between a current first information and a previous first information being within a predetermined range, the transmitting device carries out communication between the terminal-side electronic device and the transmitting device via the second type of antenna.
Exemplary embodiment 10. The electronic device of Exemplary embodiment 1, wherein the second information includes information about channel quality between the terminal-side electronic device and the transmitting device via the second type of antenna or its quantized value, which is determined based on a second reference signal transmitted by the transmitting device via the second type of antenna.
Exemplary embodiment 11. The electronic device of Exemplary embodiment 1, wherein acquire the second information indicating communication condition between the terminal-side electronic device and the transmitting device via the second type of antenna further comprises:
in response to the first information being lower than a first threshold or a comparison result between the first information and the first threshold being a specific value, determining the second information based on the received second reference signal transmitted by the transmitting device via the second type of antenna.
Exemplary embodiment 12. The electronic device of Exemplary embodiment 10 or 11, wherein the second reference signal is transmitted by the transmitting device in any of the following ways:

the transmitting device carries out transmission in response to a request from the terminal-side electronic device, wherein the request is transmitted by the terminal-side electronic device via the second type of antenna when the first information is lower than a first threshold or a comparison result between the first information and the first threshold is a specific value; and
the transmitting device carries out the transmission via the second type of antenna, in response to the received first information being lower than a first threshold or a comparison result between the received first information and the first threshold being a specific value.

Exemplary embodiment 13. The electronic device of Exemplary embodiment 1, wherein the configuration for communication between the electronic device and the transmitting device can be set based on a comparison result between the second information and a specific threshold.

Exemplary embodiment 14. The electronic device of Exemplary embodiment 1, wherein the configuration for communication between the electronic device and the transmitting device is set by at least one of the following: in response to the second information being less than a second threshold,

relaying the communication between the transmitting device and the electronic device via the first type of antenna by a relay device; and increasing transmission power of the transmitting device via the first type of antenna.

Exemplary embodiment 15. The electronic device of Exemplary embodiment 1, wherein the configuration for communication between the electronic device and the transmitting device is set by: in response to the second information being less than a second threshold,

increasing transmission power of the transmitting device via the first type of antenna; and when the second information acquired when the transmission power is increased to a specific power is still less than a second threshold, relaying the communication between the transmission device and the electronic device via the first type of antenna by a relay device.

Exemplary embodiment 16. The electronic device of Exemplary embodiment 1, wherein the configuration for communication between the electronic device and the transmitting device is set in such a manner that the beam transmitted by the transmitting device via the first type of antenna is adjusted in response to the second information exceeding a third threshold.

Exemplary embodiment 17. The electronic device of Exemplary embodiment 1, wherein the configuration for communication between the electronic device and the transmitting device is set in such a manner that the communication between the transmitting device and the electronic device is relayed by a relay device in response to the second information not exceeding a third threshold and not being less than the second threshold.

Exemplary embodiment 18. The electronic device of Exemplary embodiment 1, wherein the configuration for communication between the electronic device and the transmitting device is set by:
in response to the second information not exceeding the third threshold and not being less than the second threshold, and the difference of the first information between the terminal-side electronic device and an adjacent terminal-side electronic device being greater than a specific threshold, relaying the communication between the transmitting device and the terminal-side electronic device by the adjacent terminal-side electronic device.

Exemplary embodiment 19. The electronic device of Exemplary embodiment 1, wherein setting the configuration for communication between the electronic device and the transmitting device is performed by the processing circuit.

Exemplary embodiment 20. The electronic device of Exemplary embodiment 1, wherein the processing circuit is further configured to:
transmit any one of the second information and a comparison result between the second information and a specific threshold to the control-side electronic device in the wireless communication system for the control-side electronic device to set the configuration for communication between the electronic device and the transmitting device.

Exemplary embodiment 21. A transmitting device in a wireless communication system, which can communicate with a terminal-side electronic device in the wireless communication system via a first type of antenna and a second type of antenna, respectively, wherein the transmitting device further includes a processing circuit configured to:

receive a first information indicating communication condition between the terminal-side electronic device and the transmitting device via the first type of antenna;
carry out communication between the terminal-side electronic device and the transmitting device via the second type of antenna based on the first information; and
receive a second information indicating communication condition between the terminal-side electronic device and the transmitting device via the second type of antenna;
wherein a configuration for communication between the electronic device and the transmitting device can be set based on at least the second information, and wherein the first type of antenna and the second type of antenna have different directivity characteristics.

Exemplary embodiment 22. The transmitting device of Exemplary embodiment 21, wherein the second type of antenna has a wider pointing range than the first type of antenna.

Exemplary embodiment 23. The transmitting device of Exemplary embodiment 22, wherein the first type of antenna comprises a directional antenna and the second type of antenna comprises an omnidirectional antenna.

Exemplary embodiment 24. The transmitting device of Exemplary embodiment 21, wherein the first information includes any one of the following or a quantized value thereof:

    communication quality information about data communication between the terminal-side electronic device and the transmitting device via the first type of antenna; and
    channel quality information determined based on a first reference signal transmitted by the transmitting device via the first type of antenna.

Exemplary embodiment 25. The transmitting device of Exemplary embodiment 24, wherein the channel quality information comprises any one of the following:

    power parameters of the first reference signal which is received by the terminal-side electronic device and transmitted by the transmitting device via the first type of antenna; and
    channel states between the terminal-side electronic device and the transmitting device via the first type of antenna estimated by the terminal-side electronic device based on the received first reference signal.

Exemplary embodiment 26. The transmitting device of Exemplary embodiment 21, wherein receive the first information indicating communication condition between the terminal-side electronic device and the transmitting device via the first type of antenna comprises:

    transmitting a first reference signal to the terminal-side electronic device via the first type of antenna; and
    receiving the first information from the terminal-side electronic device, wherein the first information is determined based on the received first reference signal.

Exemplary embodiment 27. The transmitting device of any of Exemplary embodiments 24-26, wherein the transmitting device transmits the first reference signal in any of the following ways:

    the transmitting device continuously transmits via the first type of antenna;
    the transmitting device carries out transmission in response to a request from the terminal-side electronic device, wherein the request is transmitted by the terminal-side electronic device via the first type of antenna when the data communication quality between the terminal-side electronic device and the transmitting device via the first type of antenna is lower than a corresponding threshold;
    the transmitting device carries out the transmission via the first type of antenna, in response to the received data communication quality between the terminal-side electronic device and the transmitting device via the first type of antenna being lower than the corresponding threshold; and
    the transmitting device carries out the transmission via the first type of antenna in response to not receiving feedback from the terminal-side electronic device within a specific time period.

Exemplary embodiment 28. The transmitting device of Exemplary embodiment 21, wherein carry out communication between the terminal-side electronic device and the transmitting device via the second type of antenna based on the first information comprises: in response to the first information being lower than a first threshold or a comparison result between the first information and the first threshold being a specific value, the transmitting device carries out the communication between the terminal-side electronic device and the transmitting device via the second type of antenna.

Exemplary embodiment 29. The transmitting device of Exemplary embodiment 21, wherein carry out communication between the terminal-side electronic device and the transmitting device via the second type of antenna based on the first information comprises: in response to a change between a current first information and a previous first information being within a predetermined range, the transmitting device carries out the communication between the terminal-side electronic device and the transmitting device via the second type of antenna.

Exemplary embodiment 30. The transmitting device of Exemplary embodiment 21, wherein the second information includes information about channel quality between the terminal-side electronic device and the transmitting device via the second type of antenna or its quantized value, which is determined based on a second reference signal transmitted by the transmitting device via the second type of antenna.

Exemplary embodiment 31. The transmitting device of Exemplary embodiment 21, wherein receive the second information indicating communication condition between the terminal-side electronic device and the transmitting device via the second type of antenna further comprises:

    transmitting a second reference signal to the terminal-side electronic device via the second type of antenna; and
    receiving the second information from the terminal-side electronic device, wherein the second information is determined based on the received second reference signal.

Exemplary embodiment 32. The transmitting device of Exemplary embodiment 30 or 31, wherein the second reference signal is transmitted by the transmitting device in any of the following ways:

the transmitting device carries out transmission in response to a request from the terminal-side electronic device, wherein the request is transmitted by the terminal-side electronic device via the second type of antenna when the first information is lower than a first threshold or a comparison result between the first information and the first threshold is a specific value; and the transmitting device carries out the transmission via the second type of antenna, in response to the received first information being lower than a first threshold or a comparison result between the received first information and the first threshold being a specific value.

Exemplary embodiment 33. The transmitting device of Exemplary embodiment 21, wherein the configuration for communication between the electronic device and the transmitting device can be set based on a comparison result between the second information and a specific threshold.

Exemplary embodiment 34. The transmitting device of Exemplary embodiment 21, wherein the configuration for communication between the electronic device and the transmitting device is set, in response to the second information being less than a second threshold, by at least one of the following:

relaying the communication between the transmitting device and the electronic device via the first type of antenna by a relay device; and increasing transmission power of the transmitting device via the first type of antenna.

Exemplary embodiment 35. The transmitting device of Exemplary embodiment 21, wherein the configuration for communication between the electronic device and the transmitting device is set, in response to the second information being less than a second threshold, by:

increasing transmission power of the transmitting device via the first type of antenna; and when the second information acquired when the transmission power is increased to a specific power is still less than a second threshold, relaying the communication between the transmission device and the electronic device via the first type of antenna by a relay device.

Exemplary embodiment 36. The transmitting device of Exemplary embodiment 21, wherein the configuration for communication between the electronic device and the transmitting device is set in such a manner that the beam transmitted by the transmitting device via the first type of antenna is adjusted in response to the second information exceeding a third threshold.

Exemplary embodiment 37. The transmitting device of Exemplary embodiment 21, wherein the configuration for communication between the electronic device and the transmitting device is set in such a manner that the communication between the transmitting device and the electronic device is relayed by a relay device in response to the second information not exceeding a third threshold and not being less than the second threshold.

Exemplary embodiment 38. The transmitting device of Exemplary embodiment 21, wherein the configuration for communication between the electronic device and the transmitting device is set by:

in response to the second information not exceeding the third threshold and not being less than the second threshold, and the difference of the first information between the terminal-side electronic device and an adjacent terminal-side electronic device being greater than a specific threshold, relaying the communication between the transmitting device and the terminal-side electronic device by the adjacent terminal-side electronic device.

Exemplary embodiment 39. The transmitting device of Exemplary embodiment 21, wherein setting the configuration for communication between the electronic device and the transmitting device is performed by the processing circuit.

Exemplary embodiment 40. The transmitting device of Exemplary embodiment 21, wherein the processing circuit is further configured to:

transmit any one of the second information and a comparison result between the second information and a specific threshold to the control-side electronic device in the wireless communication system for the control-side electronic device to set the configuration for communication between the electronic device and the transmitting device.

Exemplary embodiment 41. A transmitting device in a wireless communication system, which can communicate with a terminal-side electronic device in the wireless communication system via a first type of antenna and a second type of antenna, respectively, wherein the transmitting device further includes a processing circuit configured to:

acquire a first information about channel quality between the terminal-side electronic device and the transmitting device via the first type of antenna which is estimated based on a first reference signal transmitted by the terminal-side electronic device via the first type of antenna;
acquire a second information about channel quality between the terminal-side electronic device and the transmitting device via the second type of antenna which is estimated based on a second reference signal transmitted by the terminal-side electronic device via the second type of antenna, wherein the communication between the terminal-side electronic device and the transmitting device via the second type of antenna is performed based on the first channel quality information; and
wherein, a configuration for communication between the electronic device and the transmitting device can be set based on at least the second channel quality information, and the first type of antenna and the second type of antenna have different directivity characteristics.

Exemplary embodiment 42. A terminal-side electronic device in a wireless communication system, which can communicate with a transmitting device in the wireless communication system via a first type of antenna and a second type of antenna, respectively, wherein the electronic device further includes a processing circuit configured to:

receive a first information about channel quality between the terminal-side electronic device and the transmitting device via the first type of antenna which is estimated by the transmitting device based on a first reference signal transmitted by the terminal-side electronic device via the first type of antenna;
carry out communication between the terminal-side electronic device and the transmitting device via the second type of antenna based on the first channel quality information;
receive a second information about channel quality between the terminal-side electronic device and the transmitting device via the second type of antenna which is estimated by the transmitting device based on the second reference signal transmitted by the terminal-side electronic device via the second type of antenna; and
wherein, a configuration for communication between the electronic device and the transmitting device can be set based on at least the second channel quality information, and the first type of antenna and the second type of antenna have different directivity characteristics.

Exemplary embodiment 43. A method for a terminal-side electronic device in a wireless communication system, which can communicate with a transmitting device in the wireless communication system via a first type of antenna and a second type of antenna, respectively, wherein the method comprises:

acquiring a first information indicating communication condition between the terminal-side electronic device and the transmitting device via the first type of antenna; and
acquiring a second information indicating communication condition between the terminal-side electronic device and the transmitting device via the second type of antenna, wherein the communication between the terminal-side electronic device and the transmitting device via the second type of antenna is performed based on the first information;
wherein a configuration for communication between the electronic device and the transmitting device can be set based on at least the second information, and wherein the first type of antenna and the second type of antenna have different directivity characteristics.

Exemplary embodiment 44. The method of Exemplary embodiment 43, wherein the second type of antenna has a wider pointing range than the first type of antenna.

Exemplary embodiment 45. The method of Exemplary embodiment 44, wherein the first type of antenna comprises a directional antenna and the second type of antenna comprises an omnidirectional antenna.

Exemplary embodiment 46. The method of Exemplary embodiment 1, wherein the first information includes any one of the following or a quantized value thereof:

communication quality information about data communication between the terminal-side electronic device and the transmitting device via the first type of antenna; and
channel quality information determined based on a first reference signal transmitted by the transmitting device via the first type of antenna.

Exemplary embodiment 47. The method of Exemplary embodiment 46, wherein the channel quality information comprises any one of the following:

power parameters of the received first reference signal transmitted by the transmitting device via the first type of antenna; and
channel states between the terminal-side electronic device and the transmitting device via the first type of antenna estimated based on the received first reference signal.

Exemplary embodiment 48. The method of Exemplary embodiment 46, wherein acquiring the first information indicating communication condition between the terminal-side electronic device and the transmitting device via the first type of antenna comprises:

determining the data communication quality between the terminal-side electronic device and the transmitting device via the first type of antenna; and

determining the first information based on the received first reference signal transmitted by the transmitting device via the first type of antenna, in response to the data communication quality between the terminal-side electronic device and the transmitting device via the first type of antenna being lower than a corresponding threshold.

Exemplary embodiment 49. The method of any of Exemplary embodiments 46-48, wherein the first reference signal is transmitted by the transmitting device in any of the following ways:

the transmitting device continuously transmits via the first type of antenna;

the transmitting device carries out transmission in response to a request from the terminal-side electronic device, wherein the request is transmitted by the terminal-side electronic device via the first type of antenna when the data communication quality between the terminal-side electronic device and the transmitting device via the first type of antenna is lower than a corresponding threshold;

the transmitting device carries out the transmission via the first type of antenna, in response to the received data communication quality between the terminal-side electronic device and the transmitting device via the first type of antenna being lower than the corresponding threshold; and

the transmitting device carries out the transmission via the first type of antenna in response to not receiving feedback from the terminal-side electronic device within a specific time period.

Exemplary embodiment 50. The method of Exemplary embodiment 43, wherein in response to the first information being lower than a first threshold or a comparison result between the first information and the first threshold being a specific value, the transmitting device carries out communication between the terminal-side electronic device and the transmitting device via the second type of antenna.

Exemplary embodiment 51. The method of Exemplary embodiment 43 or 50, wherein, in response to a change between a current first information and a previous first information being within a predetermined range, the transmitting device carries out communication between the terminal-side electronic device and the transmitting device via the second type of antenna.

Exemplary embodiment 52. The method of Exemplary embodiment 51, wherein the second information includes information about channel quality between the terminal-side electronic device and the transmitting device via the second type of antenna or its quantized value, which is determined based on a second reference signal transmitted by the transmitting device via the second type of antenna.

Exemplary embodiment 53. The method of Exemplary embodiment 43, wherein acquiring the second information indicating communication condition between the terminal-side electronic device and the transmitting device via the second type of antenna further comprises:

in response to the first information being lower than a first threshold or a comparison result between the first information and the first threshold being a specific value, determining the second information based on the received second reference signal transmitted by the transmitting device via the second type of antenna.

Exemplary embodiment 54. The method of Exemplary embodiment 52 or 53, wherein the second reference signal is transmitted by the transmitting device in any of the following ways:

the transmitting device carries out transmission in response to a request from the terminal-side electronic device, wherein the request is transmitted by the terminal-side electronic device via the second type of antenna when the first information is lower than a first threshold or a comparison result between the first information and the first threshold is a specific value; and

the transmitting device carries out the transmission via the second type of antenna, in response to the received first information being lower than a first threshold or a comparison result between the received first information and the first threshold being a specific value.

Exemplary embodiment 55. The method of Exemplary embodiment 43, wherein the configuration for communication between the electronic device and the transmitting device can be set based on a comparison result between the second information and a specific threshold.

Exemplary embodiment 56. The method of Exemplary embodiment 43, wherein the configuration for communication between the electronic device and the transmitting device is set by at least one of the following: in response to the second information being less than a second threshold,

relaying the communication between the transmitting device and the electronic device via the first type of antenna by a relay device; and

increasing transmission power of the transmitting device via the first type of antenna.

Exemplary embodiment 57. The method of Exemplary embodiment 43, wherein the configuration for communication between the electronic device and the transmitting device is set by: in response to the second information being less than a second threshold,

increasing transmission power of the transmitting device via the first type of antenna; and when the second information acquired when the transmission power is increased to a specific power is still less than a second threshold, relaying the communication between the transmission device and the electronic device via the first type of antenna by a relay device.

Exemplary embodiment 58. The method of Exemplary embodiment 43, wherein the configuration for communication between the electronic device and the transmitting device is set in such a manner that the beam transmitted by the transmitting device via the first type of antenna is adjusted in response to the second information exceeding a third threshold.

Exemplary embodiment 59. The method of Exemplary embodiment 43, wherein the configuration for communication between the electronic device and the transmitting device is set in such a manner that the communication between the transmitting device and the electronic device is relayed by a relay device in response to the second information not exceeding a third threshold and not being less than the second threshold.

Exemplary embodiment 60. The method of Exemplary embodiment 43, wherein the configuration for communication between the electronic device and the transmitting device is set by: in response to the second information not exceeding the third threshold and not being less than the second threshold, and the difference of the first information between the terminal-side electronic device and an adjacent terminal-side electronic device being greater than a specific threshold, relaying the communication between the transmitting device and the terminal-side electronic device by the adjacent terminal-side electronic device.

Exemplary embodiment 61. The method of Exemplary embodiment 43, further comprising: setting the configuration for communication between the electronic device and the transmitting device.

Exemplary embodiment 62. The method of Exemplary embodiment 1, further comprising: transmitting any one of the second information and a comparison result between the second information and a specific threshold to the control-side electronic device in the wireless communication system for the control-side electronic device to set the configuration for communication between the electronic device and the transmitting device.

Exemplary embodiment 63. A method for a transmitting device in a wireless communication system, which can communicate with a terminal-side electronic device in the wireless communication system via a first type of antenna and a second type of antenna, respectively, wherein the method comprises:

receiving a first information indicating communication condition between the terminal-side electronic device and the transmitting device via the first type of antenna; carrying out communication between the terminal-side electronic device and the transmitting device via the second type of antenna based on the first information; and receiving a second information indicating communication condition between the terminal-side electronic device and the transmitting device via the second type of antenna; wherein a configuration for communication between the electronic device and the transmitting device can be set based on at least the second information, and wherein the first type of antenna and the second type of antenna have different directivity characteristics.

Exemplary embodiment 64. The method of Exemplary embodiment 63, wherein the second type of antenna has a wider pointing range than the first type of antenna.

Exemplary embodiment 65. The method of Exemplary embodiment 64, wherein the first type of antenna comprises a directional antenna and the second type of antenna comprises an omnidirectional antenna.

Exemplary embodiment 66. The method of Exemplary embodiment 63, wherein the first information includes any one of the following or a quantized value thereof:

communication quality information about data communication between the terminal-side electronic device and the transmitting device via the first type of antenna; and channel quality information determined based on a first reference signal transmitted by the transmitting device via the first type of antenna.

Exemplary embodiment 67. The method of Exemplary embodiment 66, wherein the channel quality information comprises any one of the following:

power parameters of the first reference signal which is received by the terminal-side electronic device and transmitted by the transmitting device via the first type of antenna; and

channel states between the terminal-side electronic device and the transmitting device via the first type of antenna estimated by the terminal-side electronic device based on the received first reference signal.

Exemplary embodiment 68. The method of Exemplary embodiment 66, wherein receiving the first information indicating communication condition between the terminal-side electronic device and the transmitting device via the first type of antenna comprises:

transmitting a first reference signal to the terminal-side electronic device via the first type of antenna; and

receiving the first information from the terminal-side electronic device, wherein the first information is determined based on the received first reference signal.

Exemplary embodiment 69. The method of any of Exemplary embodiments 66-68, wherein the transmitting device transmits the first reference signal in any of the following ways:

the transmitting device continuously transmits via the first type of antenna;

the transmitting device carries out transmission in response to a request from the terminal-side electronic device, wherein the request is transmitted by the terminal-side electronic device via the first type of antenna when the data communication quality between the terminal-side electronic device and the transmitting device via the first type of antenna is lower than a corresponding threshold;

the transmitting device carries out the transmission via the first type of antenna, in response to the received data communication quality between the terminal-side electronic device and the transmitting device via the first type of antenna being lower than the corresponding threshold; and

the transmitting device carries out the transmission via the first type of antenna in response to not receiving feedback from the terminal-side electronic device within a specific time period.

Exemplary embodiment 70. The method of Exemplary embodiment 63, wherein carrying out communication between the terminal-side electronic device and the transmitting device via the second type of antenna based on the first information comprises: in response to the first information being lower than a first threshold or a comparison result between the first information and the first threshold being a specific value, carrying out the communication between the terminal-side electronic device and the transmitting device via the second type of antenna by the transmitting device.

Exemplary embodiment 71. The method of Exemplary embodiment 63 or 70, wherein carrying out communication between the terminal-side electronic device and the transmitting device via the second type of antenna based on the first information comprises: in response to a change between a current first information and a previous first information being within a predetermined range, carrying out the communication between the terminal-side electronic device and the transmitting device via the second type of antenna by the transmitting device.

Exemplary embodiment 72. The method of Exemplary embodiment 63, wherein the second information includes information about channel quality between the terminal-side electronic device and the transmitting device via the second type of antenna or its quantized value, which is determined based on a second reference signal transmitted by the transmitting device via the second type of antenna.

Exemplary embodiment 73. The method of Exemplary embodiment 63, wherein receiving the second information indicating communication condition between the terminal-side electronic device and the transmitting device via the second type of antenna further comprises:

transmitting a second reference signal to the terminal-side electronic device via the second type of antenna; and

receiving the second information from the terminal-side electronic device, wherein the second information is determined based on the received second reference signal.

Exemplary embodiment 74. The method of Exemplary embodiment 72 or 73, wherein the second reference signal is transmitted by the transmitting device in any of the following ways:

the transmitting device carries out transmission in response to a request from the terminal-side electronic device, wherein the request is transmitted by the terminal-side electronic device via the second type of antenna when the first information is lower than a first threshold or a comparison result between the first information and the first threshold is a specific value; and

the transmitting device carries out the transmission via the second type of antenna, in response to the received first information being lower than a first threshold or a comparison result between the received first information and the first threshold being a specific value.

Exemplary embodiment 75. The method of Exemplary embodiment 63, wherein the configuration for communication between the electronic device and the transmitting device can be set based on a comparison result between the second information and a specific threshold.

Exemplary embodiment 76. The method of Exemplary embodiment 63, wherein the configuration for communication between the electronic device and the transmitting device is set by at least one of the following: in response to the second information being less than a second threshold,

relaying the communication between the transmitting device and the electronic device via the first type of antenna by a relay device; and increasing transmission power of the transmitting device via the first type of antenna.

Exemplary embodiment 77. The method of Exemplary embodiment 63, wherein the configuration for communication between the electronic device and the transmitting device is set by: in response to the second information being less than a second threshold,

increasing transmission power of the transmitting device via the first type of antenna; and when the second information acquired when the transmission power is increased to a specific power is still less than a second threshold, relaying the communication between the transmission device and the electronic device via the first type of antenna by a relay device.

Exemplary embodiment 78. The method of Exemplary embodiment 63, wherein the configuration for communication between the electronic device and the transmitting device is set in such a manner that the beam transmitted by the transmitting device via the first type of antenna is adjusted in response to the second information exceeding a third threshold.

Exemplary embodiment 79. The method of Exemplary embodiment 63, wherein the configuration for communication between the electronic device and the transmitting device is set in such a manner that the communication between the transmitting device and the electronic device is relayed by a relay device in response to the second information not exceeding a third threshold and not being less than the second threshold.

Exemplary embodiment 80. The method of Exemplary embodiment 63, wherein the configuration for communication between the electronic device and the transmitting device is set by:

in response to the second information not exceeding the third threshold and not being less than the second threshold, and the difference of the first information between the terminal-side electronic device and an adjacent terminal-side electronic device being greater than a specific threshold, relaying the communication between the transmitting device and the terminal-side electronic device by the adjacent terminal-side electronic device.

Exemplary embodiment 81. The method of Exemplary embodiment 63, wherein setting the configuration for communication between the electronic device and the transmitting device is performed by the processing circuit.

Exemplary embodiment 82. The method of Exemplary embodiment 63, wherein the processing circuit is further configured to:

transmit any one of the second information and a comparison result between the second information and a specific threshold to the control-side electronic device in the wireless communication system for the control-side electronic device to set the configuration for communication between the electronic device and the transmitting device.

Exemplary embodiment 83. A method for a transmitting device in a wireless communication system, which can communicate with a terminal-side electronic device in the wireless communication system via a first type of antenna and a second type of antenna, respectively, wherein the method comprises:

acquiring a first information about channel quality between the terminal-side electronic device and the transmitting device via the first type of antenna which is estimated based on a first reference signal transmitted by the terminal-side electronic device via the first type of antenna; acquiring a second information about channel quality between the terminal-side electronic device and the transmitting device via the second type of antenna which is estimated based on a second reference signal transmitted by the terminal-side electronic device via the second type of antenna, wherein the communication between the terminal-side electronic device and the transmitting device via the second type of antenna is performed based on the first channel quality information; and wherein, a configuration for communication between the electronic device and the transmitting device can be set based on at least the second channel quality information, and the first type of antenna and the second type of antenna have different directivity characteristics.

Exemplary embodiment 84. A method for a terminal-side electronic device in a wireless communication system, which can communicate with a transmitting device in the wireless communication system via a first type of antenna and a second type of antenna, respectively, wherein the method comprises:

receiving a first information about channel quality between the terminal-side electronic device and the transmitting device via the first type of antenna which is estimated by the transmitting device based on a first reference signal transmitted by the terminal-side electronic device via the first type of antenna;

carrying out communication between the terminal-side electronic device and the transmitting device via the second type of antenna based on the first channel quality information;

receiving a second channel quality information between the terminal-side electronic device and the transmitting device via the second type of antenna which is estimated by the transmitting device based on the second reference signal transmitted by the terminal-side electronic device via the second type of antenna; and

wherein, a configuration for communication between the electronic device and the transmitting device can be set based on at least the second channel quality information, and the first type of antenna and the second type of antenna have different directivity characteristics.

Exemplary embodiment 85. A non-transitory computer-readable storage medium storing executable instructions which, when executed, implement the method of any of Exemplary embodiments 43 - 84.

Exemplary embodiment 86. A wireless communication device, comprising:

a processor,

a storage device storing executable instructions that, when executed, implement the method according to any one of Exemplary embodiments 43 - 84.

Exemplary embodiment 87. A wireless communication device comprising means for performing the method according to any one of Exemplary embodiments 43 - 84.

Although the present disclosure and its advantages have been described in detail, it should be understood that various changes, substitutions and alterations can be made hereto without departing from the spirit and scope of the present disclosure as defined by the appended claims. Furthermore, the terms "including", "comprising", or any other variation thereof, of the embodiments of the present disclosure are intended to encompass non-exclusive inclusion, such that a process, method, article, or device that includes a series of elements includes not only those elements, but also includes other elements not explicitly listed, or those inherent in the process, method, article, or equipment. Without more restrictions, the elements defined by the sentence "including a ..." do not exclude the existence of other identical elements in the process, method, article, or equipment including the elements.

Although some specific embodiments of the present disclosure have been described in detail, those skilled in the art should understand that the above-described embodiments are merely illustrative and do not limit the scope of the present disclosure. Those skilled in the art should understand that the above-described embodiments may be combined, modified, or replaced without departing from the scope and essence of the present disclosure. The scope of the present disclosure is defined by the appended claims.

## Claims

1. A terminal-side electronic device in a wireless communication system, which can communicate with a transmitting device in the wireless communication system via a first type of antenna and a second type of antenna, respectively, wherein the electronic device includes a processing circuit configured to:

   acquire a first information indicating communication condition between the terminal-side electronic device and the transmitting device via the first type of antenna; and

   acquire a second information indicating communication stuatus between the terminal-side electronic device and the transmitting device via the second type of antenna, wherein the communication between the terminal-side electronic device and the transmitting device via the second type of antenna is carried out based on the first information;

   wherein a configuration for communication between the electronic device and the transmitting device can be set based on at least the second information, and wherein the first type of antenna and the second type of antenna have different directivity characteristics.

2. The electronic device of claim 1, wherein the second type of antenna has a wider pointing range than the first type of antenna.

3. The electronic device of claim 2, wherein the first type of antenna comprises a directional antenna and the second type of antenna comprises an omnidirectional antenna.

4. The electronic device of claim 1, wherein the first information includes any one of the following or a quantized value thereof:

   communication quality information about data communication between the terminal-side electronic device and the transmitting device via the first type of antenna; and
channel quality information determined based on a first reference signal transmitted by the transmitting device via the first type of antenna.

5. The electronic device of claim 4, wherein the channel quality information comprises any one of the following:

power parameters of the received first reference signal transmitted by the transmitting device via the first type of antenna; and
channel state between the terminal-side electronic device and the transmitting device via the first type of antenna estimated based on the received first reference signal.

6. The electronic device of claim 1, wherein acquiring the first information indicating the communication condition between the terminal-side electronic device and the transmitting device via the first type of antenna comprises:

determining data communication quality between the terminal-side electronic device and the transmitting device via the first type of antenna; and
determining the first information based on the received first reference signal transmitted by the transmitting device via the first type of antenna, in response to the data communication quality between the terminal-side electronic device and the transmitting device via the first type of antenna being lower than a corresponding threshold.

7. The electronic device of any of claims 4-6, wherein the first reference signal is transmitted by the transmitting device in any of the following ways:

the transmitting device continuously transmits via the first type of antenna;
the transmitting device carries out the transmission in response to a request from the terminal-side electronic device, wherein the request is transmitted by the terminal-side electronic device via the first type of antenna when data communication quality between the terminal-side electronic device and the transmitting device via the first type of antenna is lower than a corresponding threshold;
the transmitting device carries out the transmission via the first type of antenna, in response to the received data communication quality between the terminal-side electronic device and the transmitting device via the first type of antenna being lower than the corresponding threshold; and

the transmitting device carries out the transmission via the first type of antenna in response to not receiving feedback from the terminal-side electronic device within a specific time period.

8. The electronic device of claim 1, wherein in response to the first information being lower than a first threshold or a comparison result between the first information and the first threshold being a specific value, the transmitting device carries out the communication between the terminal-side electronic device and the transmitting device via the second type of antenna.

9. The electronic device of claim 1, wherein, in response to a change between a current first information and a previous first information being within a predetermined range, the transmitting device carries out the communication between the terminal-side electronic device and the transmitting device via the second type of antenna.

10. The electronic device of claim 1, wherein the second information includes information about channel quality between the terminal-side electronic device and the transmitting device via the second type of antenna or its quantized value, which is determined based on a second reference signal transmitted by the transmitting device via the second type of antenna.

11. The electronic device of claim 1, wherein acquiring the second information indicating communication condition between the terminal-side electronic device and the transmitting device via the second type of antenna further comprises:
in response to the first information being lower than a first threshold or a comparison result between the first information and the first threshold being a specific value, determining the second information based on the received second reference signal transmitted by the transmitting device via the second type of antenna.

12. The electronic device of claim 10 or 11, wherein the second reference signal is transmitted by the transmitting device in any of the following ways:

the transmitting device carries out the transmission in response to a request from the terminal-side electronic device, wherein the request is transmitted by the terminal-side electronic device via the second type of antenna when the first information is lower than a first threshold or a comparison result between the first information and the first threshold is a specific value; and
the transmitting device carries out the transmission via the second type of antenna, in response to the received first information being lower than a first threshold or a comparison result between the received first information and the first threshold being a specific value.

13. The electronic device of claim 1, wherein the configuration for communication between the electronic device and the transmitting device can be set based on a comparison result between the second information and a specific threshold.

14. The electronic device of claim 1, wherein the configuration for communication between the electronic device and the transmitting device is set by at least one of the following: in response to the second information being less than a second threshold,

   relaying the communication between the transmitting device and the electronic device via the first type of antenna by a relay device; and increasing transmission power of the transmitting device via the first type of antenna.

15. The electronic device of claim 1, wherein the configuration for communication between the electronic device and the transmitting device is set by: in response to the second information being less than a second threshold,

   increasing transmission power of the transmitting device via the first type of antenna; and when the second information acquired when the transmission power is increased to a specific power is still less than a second threshold, relaying the communication between the transmission device and the electronic device via the first type of antenna by a relay device.

16. The electronic device of claim 1, wherein the configuration for communication between the electronic device and the transmitting device is set in such a manner that the beam transmitted by the transmitting device via the first type of antenna is adjusted in response to the second information exceeding a third threshold.

17. The electronic device of claim 1, wherein the configuration for communication between the electronic device and the transmitting device is set in such a manner that the communication between the transmitting device and the electronic device is relayed by a relay device in response to the second information not exceeding a third threshold and not being less than a second threshold.

18. The electronic device of claim 1, wherein the configuration for communication between the electronic device and the transmitting device is set by:
   in response to the second information not exceeding a third threshold and not being less than a second threshold, and the difference of the first information between the terminal-side electronic device and an adjacent terminal-side electronic device being greater than a specific threshold, relaying the communication between the transmitting device and the terminal-side electronic device by the adjacent terminal-side electronic device.

19. The electronic device of claim 1, wherein setting the configuration for communication between the electronic device and the transmitting device is performed by the processing circuit.

20. The electronic device of claim 1, wherein the processing circuit is further configured to:
   transmit any one of the second information and a comparison result between the second information and a specific threshold to the control-side electronic device in the wireless communication system, for the control-side electronic device to set the configuration for communication between the electronic device and the transmitting device.

21. A transmitting device in a wireless communication system, which can communicate with a terminal-side electronic device in the wireless communication system via a first type of antenna and a second type of antenna, respectively, wherein the transmitting device further includes a processing circuit configured to:

   receive a first information indicating communication condition between the terminal-side electronic device and the transmitting device via the first type of antenna;
   carry out communication between the terminal-side electronic device and the transmitting device via the second type of antenna based on the first information; and
   receive a second information indicating communication condition between the terminal-side electronic device and the transmitting device via the second type of antenna;
   wherein a configuration for communication between the electronic device and the transmitting device can be set based on at least the second information, and wherein the first type of antenna and the second type of antenna have different directivity characteristics.

22. The transmitting device of claim 21, wherein the second type of antenna has a wider pointing range than the first type of antenna.

23. The transmitting device of claim 22, wherein the first type of antenna comprises a directional antenna and the second type of antenna comprises an omnidirectional antenna.

**24.** The transmitting device of claim 21, wherein the first information includes any one of the following or a quantized value thereof:

> communication quality information about data communication between the terminal-side electronic device and the transmitting device via the first type of antenna; and
> channel quality information determined based on a first reference signal transmitted by the transmitting device via the first type of antenna.

**25.** The transmitting device of claim 24, wherein the channel quality information comprises any one of the following:

> power parameters of the first reference signal which is received by the terminal-side electronic device and transmitted by the transmitting device via the first type of antenna; and
> channel states between the terminal-side electronic device and the transmitting device via the first type of antenna estimated by the terminal-side electronic device based on the received first reference signal.

**26.** The transmitting device of claim 21, wherein receiving the first information indicating communication condition between the terminal-side electronic device and the transmitting device via the first type of antenna comprises:

> transmitting a first reference signal to the terminal-side electronic device via the first type of antenna; and
> receiving the first information from the terminal-side electronic device, wherein the first information is determined based on the received first reference signal.

**27.** The transmitting device of any of claims 24-26, wherein the transmitting device transmits the first reference signal in any of the following ways:

> the transmitting device continuously transmits via the first type of antenna;
> the transmitting device carries out the transmission in response to a request from the terminal-side electronic device, wherein the request is transmitted by the terminal-side electronic device via the first type of antenna when the data communication quality between the terminal-side electronic device and the transmitting device via the first type of antenna is lower than a corresponding threshold;
> the transmitting device carries out the transmission via the first type of antenna, in response to the received data communication quality between the terminal-side electronic device and the transmitting device via the first type of antenna being lower than the corresponding threshold; and
the transmitting device carries out the transmission via the first type of antenna in response to not receiving feedback from the terminal-side electronic device within a specific time period.

**28.** The transmitting device of claim 21, wherein carrying out the communication between the terminal-side electronic device and the transmitting device via the second type of antenna based on the first information comprises:

> in response to the first information being lower than a first threshold or a comparison result between the first information and the first threshold being a specific value, the transmitting device carries out the communication between the terminal-side electronic device and the transmitting device via the second type of antenna.

**29.** The transmitting device of claim 21 or 28, wherein carrying out the communication between the terminal-side electronic device and the transmitting device via the second type of antenna based on the first information comprises:
in response to a change between a current first information and a previous first information being within a predetermined range, the transmitting device carries out the communication between the terminal-side electronic device and the transmitting device via the second type of antenna.

**30.** The transmitting device of claim 21, wherein the second information includes information about channel quality between the terminal-side electronic device and the transmitting device via the second type of antenna or its quantized value, which is determined based on a second reference signal transmitted by the transmitting device via the second type of antenna.

**31.** The transmitting device of claim 21, wherein receiving the second information indicating communication condition between the terminal-side electronic device and the transmitting device via the second type of antenna further comprises:

> transmitting a second reference signal to the terminal-side electronic device via the second type of antenna; and
> receiving the second information from the terminal-side electronic device, wherein the second information is determined based on the received second reference signal.

**32.** The transmitting device of claim 30 or 31, wherein the second reference signal is transmitted by the transmitting device in any of the following ways:

the transmitting device carries out the transmission in response to a request from the terminal-side electronic device, wherein the request is transmitted by the terminal-side electronic device via the second type of antenna when the first information is lower than a first threshold or a comparison result between the first information and the first threshold is a specific value; and the transmitting device carries out the transmission via the second type of antenna, in response to the received first information being lower than a first threshold or a comparison result between the received first information and the first threshold being a specific value.

**33.** The transmitting device of claim 21, wherein the configuration for communication between the electronic device and the transmitting device can be set based on a comparison result between the second information and a specific threshold.

**34.** The transmitting device of claim 21, wherein the configuration for communication between the electronic device and the transmitting device is set by at least one of the following: in response to the second information being less than a second threshold,

relaying the communication between the transmitting device and the electronic device via the first type of antenna by a relay device; and increasing transmission power of the transmitting device via the first type of antenna.

**35.** The transmitting device of claim 21, wherein the configuration for communication between the electronic device and the transmitting device is set by: in response to the second information being less than a second threshold,

increasing transmission power of the transmitting device via the first type of antenna; and when the second information acquired when the transmission power is increased to a specific power is still less than a second threshold, relaying the communication between the transmission device and the electronic device via the first type of antenna by a relay device.

**36.** The transmitting device of claim 21, wherein the configuration for communication between the electronic device and the transmitting device is set in such a manner that the beam transmitted by the transmitting device via the first type of antenna is adjusted in response to the second information exceeding a third threshold.

**37.** The transmitting device of claim 21, wherein the configuration for communication between the electronic device and the transmitting device is set in such a manner that the communication between the transmitting device and the electronic device is relayed by a relay device in response to the second information not exceeding a third threshold and not being less than the second threshold.

**38.** The transmitting device of claim 21, wherein the configuration for communication between the electronic device and the transmitting device is set by:
in response to the second information not exceeding the third threshold and not being less than the second threshold, and the difference of the first information between the terminal-side electronic device and an adjacent terminal-side electronic device being greater than a specific threshold, relaying the communication between the transmitting device and the terminal-side electronic device by the adjacent terminal-side electronic device.

**39.** The transmitting device of claim 21, wherein setting the configuration for communication between the electronic device and the transmitting device is performed by the processing circuit.

**40.** The transmitting device of claim 21, wherein the processing circuit is further configured to:
transmit any one of the second information and a comparison result between the second information and a specific threshold to the control-side electronic device in the wireless communication system, for the control-side electronic device to set the configuration for communication between the electronic device and the transmitting device.

**41.** A transmitting device in a wireless communication system, which can communicate with a terminal-side electronic device in the wireless communication system via a first type of antenna and a second type of antenna, respectively, wherein the transmitting device further includes a processing circuit configured to:

acquire a first information about channel quality between the terminal-side electronic device and the transmitting device via the first type of antenna, which is estimated based on a first reference signal transmitted by the terminal-side electronic device via the first type of antenna; acquire a second information about channel quality between the terminal-side electronic device and the transmitting device via the second type of antenna, which is estimated based on a second reference signal transmitted by the terminal-side electronic device via the second type of antenna, wherein the communication between the terminal-side electronic device and the transmitting device via the second type of antenna is carried out based on the first channel quality information; and

wherein, a configuration for communication between the electronic device and the transmitting device can be set based on at least the second channel quality information, and the first type of antenna and the second type of antenna have different directivity characteristics.

42. A terminal-side electronic device in a wireless communication system, which can communicate with a transmitting device in the wireless communication system via a first type of antenna and a second type of antenna, respectively, wherein the electronic device further includes a processing circuit configured to:

receive a first information about channel quality between the terminal-side electronic device and the transmitting device via the first type of antenna which is estimated by the transmitting device based on a first reference signal transmitted by the terminal-side electronic device via the first type of antenna;

carry out communication between the terminal-side electronic device and the transmitting device via the second type of antenna based on the first channel quality information;

receive a second information about channel quality between the terminal-side electronic device and the transmitting device via the second type of antenna which is estimated by the transmitting device based on the second reference signal transmitted by the terminal-side electronic device via the second type of antenna; and

wherein, a configuration for communication between the electronic device and the transmitting device can be set based on at least the second channel quality information, and the first type of antenna and the second type of antenna have different directivity characteristics.

43. A method for a terminal-side electronic device in a wireless communication system, which can communicate with a transmitting device in the wireless communication system via a first type of antenna and a second type of antenna, respectively, wherein the method comprises:

acquiring a first information indicating communication condition between the terminal-side electronic device and the transmitting device via the first type of antenna; and

acquiring a second information indicating communication condition between the terminal-side electronic device and the transmitting device via the second type of antenna, wherein the communication between the terminal-side electronic device and the transmitting device via the second type of antenna is performed based on the first information;

wherein a configuration for communication between the electronic device and the transmitting device can be set based on at least the second information, and wherein the first type of antenna and the second type of antenna have different directivity characteristics.

44. The method of claim 43, wherein the second type of antenna has a wider pointing range than the first type of antenna.

45. The method of claim 44, wherein the first type of antenna comprises a directional antenna and the second type of antenna comprises an omnidirectional antenna.

46. The method of claim 1, wherein the first information includes any one of the following or a quantized value thereof:

communication quality information about data communication between the terminal-side electronic device and the transmitting device via the first type of antenna; and

channel quality information determined based on a first reference signal transmitted by the transmitting device via the first type of antenna.

47. The method of claim 46, wherein the channel quality information comprises any one of the following:

power parameters of the received first reference signal transmitted by the transmitting device via the first type of antenna; and

channel states between the terminal-side electronic device and the transmitting device via the first type of antenna estimated based on the received first reference signal.

48. The method of claim 46, wherein acquiring the first information indicating communication condition between the terminal-side electronic device and the transmitting device via the first type of antenna comprises:

determining data communication quality between the terminal-side electronic device and the transmitting device via the first type of antenna; and

determining the first information based on the received first reference signal transmitted by the transmitting device via the first type of antenna, in response to the data communication quality between the terminal-side electronic device and the transmitting device via the first type of antenna being lower than a corresponding threshold.

49. The method of any of claims 46-48, wherein the first reference signal is transmitted by the transmitting device in any of the following ways:

the transmitting device continuously transmits via the first type of antenna;
the transmitting device carries out the transmission in response to a request from the terminal-side electronic device, wherein the request is transmitted by the terminal-side electronic device via the first type of antenna when the data communication quality between the terminal-side electronic device and the transmitting device via the first type of antenna is lower than a corresponding threshold;
the transmitting device carries out the transmission via the first type of antenna, in response to the received data communication quality between the terminal-side electronic device and the transmitting device via the first type of antenna being lower than the corresponding threshold; and
the transmitting device carries out the transmission via the first type of antenna in response to not receiving feedback from the terminal-side electronic device within a specific time period.

50. The method of claim 43, wherein in response to the first information being lower than a first threshold or a comparison result between the first information and the first threshold being a specific value, the transmitting device carries out the communication between the terminal-side electronic device and the transmitting device via the second type of antenna.

51. The method of claim 43 or 50, wherein, in response to a change between a current first information and a previous first information being within a predetermined range, the transmitting device carries out the communication between the terminal-side electronic device and the transmitting device via the second type of antenna.

52. The method of claim 51, wherein the second information includes information about channel quality between the terminal-side electronic device and the transmitting device via the second type of antenna or its quantized value, which is determined based on a second reference signal transmitted by the transmitting device via the second type of antenna.

53. The method of claim 43, wherein acquiring the second information indicating communication condition between the terminal-side electronic device and the transmitting device via the second type of antenna further comprises:
in response to the first information being lower than a first threshold or a comparison result between the first information and the first threshold being a specific value, determining the second information based on the received second reference signal transmitted by the transmitting device via the second type of antenna.

54. The method of claim 52 or 53, wherein the second reference signal is transmitted by the transmitting device in any of the following ways:

the transmitting device carries out the transmission in response to a request from the terminal-side electronic device, wherein the request is transmitted by the terminal-side electronic device via the second type of antenna when the first information is lower than a first threshold or a comparison result between the first information and the first threshold is a specific value; and
the transmitting device carries out the transmission via the second type of antenna, in response to the received first information being lower than a first threshold or a comparison result between the received first information and the first threshold being a specific value.

55. The method of claim 43, wherein the configuration for communication between the electronic device and the transmitting device can be set based on a comparison result between the second information and a specific threshold.

56. The method of claim 43, wherein the configuration for communication between the electronic device and the transmitting device is set by at least one of the following: in response to the second information being less than a second threshold,

relaying the communication between the transmitting device and the electronic device via the first type of antenna by a relay device; and
increasing transmission power of the transmitting device via the first type of antenna.

57. The method of claim 43, wherein the configuration for communication between the electronic device and the transmitting device is set by: in response to the second information being less than a second threshold,

increasing transmission power of the transmitting device via the first type of antenna; and

when the second information acquired when the transmission power is increased to a specific power is still less than a second threshold, relaying the communication between the transmission device and the electronic device via the first type of antenna by a relay device.

58. The method of claim 43, wherein the configuration for communication between the electronic device and the transmitting device is set in such a manner that the beam transmitted by the transmitting device via the first type of antenna is adjusted in response to the second information exceeding a third threshold.

59. The method of claim 43, wherein the configuration for communication between the electronic device and the transmitting device is set in such a manner that the communication between the transmitting device and the electronic device is relayed by a relay device in response to the second information not exceeding a third threshold and not being less than a second threshold.

60. The method of claim 43, wherein the configuration for communication between the electronic device and the transmitting device is set by:
in response to the second information not exceeding a third threshold and not being less than a second threshold, and the difference of the first information between the terminal-side electronic device and an adjacent terminal-side electronic device being greater than a specific threshold, relaying the communication between the transmitting device and the terminal-side electronic device by the adjacent terminal-side electronic device.

61. The method of claim 43, further comprising: setting the configuration for communication between the electronic device and the transmitting device.

62. The method of claim 43, further comprising:
transmitting any one of the second information and a comparison result between the second information and a specific threshold to the control-side electronic device in the wireless communication system, for the control-side electronic device to set the configuration for communication between the electronic device and the transmitting device.

63. A method for a transmitting device in a wireless communication system, which can communicate with a terminal-side electronic device in the wireless communication system via a first type of antenna and a second type of antenna, respectively, wherein the method comprises:

receiving a first information indicating communication condition between the terminal-side electronic device and the transmitting device via the first type of antenna;
carrying out communication between the terminal-side electronic device and the transmitting device via the second type of antenna based on the first information; and
receiving a second information indicating communication condition between the terminal-side electronic device and the transmitting device via the second type of antenna;
wherein a configuration for communication between the electronic device and the transmitting device can be set based on at least the second information, and wherein the first type of antenna and the second type of antenna have different directivity characteristics.

64. The method of claim 63, wherein the second type of antenna has a wider pointing range than the first type of antenna.

65. The method of claim 64, wherein the first type of antenna comprises a directional antenna and the second type of antenna comprises an omnidirectional antenna.

66. The method of claim 63, wherein the first information includes any one of the following or a quantized value thereof:

communication quality information about data communication between the terminal-side electronic device and the transmitting device via the first type of antenna; and
channel quality information determined based on a first reference signal transmitted by the transmitting device via the first type of antenna.

67. The method of claim 66, wherein the channel quality information comprises any one of the following:

power parameters of the first reference signal which is received by the terminal-side electronic device and transmitted by the transmitting device via the first type of antenna; and
channel states between the terminal-side electronic device and the transmitting device via the first type of antenna estimated by the terminal-side electronic device based on the received first reference signal.

68. The method of claim 66, wherein receiving the first information indicating communication condition between the terminal-side electronic device and the transmitting device via the first type of antenna comprises:

transmitting a first reference signal to the terminal-side electronic device via the first type of antenna; and

receiving the first information from the terminal-side electronic device, wherein the first information is determined based on the received first reference signal.

69. The method of any of claims 66-68, wherein the transmitting device transmits the first reference signal in any of the following ways:

the transmitting device continuously transmits via the first type of antenna;

the transmitting device carries out transmission in response to a request from the terminal-side electronic device, wherein the request is transmitted by the terminal-side electronic device via the first type of antenna when the data communication quality between the terminal-side electronic device and the transmitting device via the first type of antenna is lower than a corresponding threshold;

the transmitting device carries out the transmission via the first type of antenna, in response to the received data communication quality between the terminal-side electronic device and the transmitting device via the first type of antenna being lower than the corresponding threshold; and

the transmitting device carries out the transmission via the first type of antenna in response to not receiving feedback from the terminal-side electronic device within a specific time period.

70. The method of claim 63, wherein carrying out the communication between the terminal-side electronic device and the transmitting device via the second type of antenna based on the first information comprises:

in response to the first information being lower than a first threshold or a comparison result between the first information and the first threshold being a specific value, carrying out the communication between the terminal-side electronic device and the transmitting device via the second type of antenna by the transmitting device.

71. The method of claim 63 or 70, wherein carrying out the communication between the terminal-side electronic device and the transmitting device via the second type of antenna based on the first information comprises:

in response to a change between a current first information and a previous first information being within a predetermined range, carrying out the communication between the terminal-side electronic device and the transmitting device via the second type of antenna by the transmitting device.

72. The method of claim 63, wherein the second information includes information about channel quality between the terminal-side electronic device and the transmitting device via the second type of antenna or its quantized value, which is determined based on a second reference signal transmitted by the transmitting device via the second type of antenna.

73. The method of claim 63, wherein receiving the second information indicating communication condition between the terminal-side electronic device and the transmitting device via the second type of antenna further comprises:

transmitting a second reference signal to the terminal-side electronic device via the second type of antenna; and

receiving the second information from the terminal-side electronic device, wherein the second information is determined based on the received second reference signal.

74. The method of claim 72 or 73, wherein the second reference signal is transmitted by the transmitting device in any of the following ways:

the transmitting device carries out the transmission in response to a request from the terminal-side electronic device, wherein the request is transmitted by the terminal-side electronic device via the second type of antenna when the first information is lower than a first threshold or a comparison result between the first information and the first threshold is a specific value; and

the transmitting device carries out the transmission via the second type of antenna, in response to the received first information being lower than a first threshold or a comparison result between the received first information and the first threshold being a specific value.

75. The method of claim 63, wherein the configuration for communication between the electronic device and the transmitting device can be set based on a comparison result between the second information and a specific threshold.

76. The method of claim 63, wherein the configuration for communication between the electronic device and the transmitting device is set by at least one of the following: in response to the second information being less than a second threshold,

relaying the communication between the transmitting device and the electronic device via the first type of antenna by a relay device; and

increasing transmission power of the transmitting device via the first type of antenna.

**77.** The method of claim 63, wherein the configuration for communication between the electronic device and the transmitting device is set by: in response to the second information being less than a second threshold,

increasing transmission power of the transmitting device via the first type of antenna; and when the second information acquired when the transmission power is increased to a specific power is still less than a second threshold, relaying the communication between the transmission device and the electronic device via the first type of antenna by a relay device.

**78.** The method of claim 63, wherein the configuration for communication between the electronic device and the transmitting device is set in such a manner that the beam transmitted by the transmitting device via the first type of antenna is adjusted in response to the second information exceeding a third threshold.

**79.** The method of claim 63, wherein the configuration for communication between the electronic device and the transmitting device is set in such a manner that the communication between the transmitting device and the electronic device is relayed by a relay device in response to the second information not exceeding a third threshold and not being less than the second threshold.

**80.** The method of claim 63, wherein the configuration for communication between the electronic device and the transmitting device is set by:
in response to the second information not exceeding the third threshold and not being less than the second threshold, and the difference of the first information between the terminal-side electronic device and an adjacent terminal-side electronic device being greater than a specific threshold, relaying the communication between the transmitting device and the terminal-side electronic device by the adjacent terminal-side electronic device.

**81.** The method of claim 63, wherein setting the configuration for communication between the electronic device and the transmitting device is performed by a processing circuit.

**82.** The method of claim 63, wherein the processing circuit is further configured to:
transmit any one of the second information and a comparison result between the second information and a specific threshold to the control-side electronic device in the wireless communication system, for the control-side electronic device to set the configuration for communication between the electronic device and the transmitting device.

**83.** A method for a transmitting device in a wireless communication system, which can communicate with a terminal-side electronic device in the wireless communication system via a first type of antenna and a second type of antenna, respectively, wherein the method comprises:

acquiring a first information about channel quality between the terminal-side electronic device and the transmitting device via the first type of antenna which is estimated based on a first reference signal transmitted by the terminal-side electronic device via the first type of antenna; acquiring a second information about channel quality between the terminal-side electronic device and the transmitting device via the second type of antenna which is estimated based on a second reference signal transmitted by the terminal-side electronic device via the second type of antenna, wherein the communication between the terminal-side electronic device and the transmitting device via the second type of antenna is performed based on the first channel quality information; and wherein, a configuration for communication between the electronic device and the transmitting device can be set based on at least the second channel quality information, and the first type of antenna and the second type of antenna have different directivity characteristics.

**84.** A method for a terminal-side electronic device in a wireless communication system, which can communicate with a transmitting device in the wireless communication system via a first type of antenna and a second type of antenna, respectively, wherein the method comprises:

receiving a first information about channel quality between the terminal-side electronic device and the transmitting device via the first type of antenna which is estimated by the transmitting device based on a first reference signal transmitted by the terminal-side electronic device via the first type of antenna; carrying out communication between the terminal-side electronic device and the transmitting device via the second type of antenna based on the first channel quality information; receiving a second channel quality information between the terminal-side electronic device and the transmitting device via the second type of antenna which is estimated by the transmitting device based on the second reference signal transmitted by the terminal-side electronic device via the second type of antenna; and
wherein, a configuration for communication between the electronic device and the transmitting device can be set based on at least the second channel quality information, and the first type of antenna and the second type of antenna have different directivity characteristics.

85. A non-transitory computer-readable storage medium storing executable instructions which, when executed, implement the method of any of claims 43 - 84.

86. A wireless communication device, comprising:

a processor,
a storage device storing executable instructions that, when executed, implement the method according to any one of claims 43 - 84.

87. A wireless communication apparatus comprising means for implementing the method according to any one of claims 43 - 84.

100

110

Control-side
electronic
device

120c

Terminal-side
electronic
device

120b

Terminal-side
electronic
device

120a

Terminal-side
electronic
device

130

Transmitting
device

**Fig. 1A**

a terminal-side electronic device acquires relevant information about communication condition between the transmitting device and a terminal-side electronic device via a directional antenna — S101

the terminal-side electronic device transmits the acquired relevant information to the control-side electronic device — S102

based on the received information, the control-side electronic device instructs the transmitting device to communicate with the terminal-side electronic device via the omnidirectional antenna — S103

the transmitting device transmits a reference signal to the terminal-side electronic device via the omnidirectional antenna — S104

based on the received reference signal, the terminal-side electronic device acquires relevant information about the communication condition between the terminal-side electronic device and the transmitting device via the omnidirectional antenna — S105

the terminal-side electronic device transmits the acquired relevant information about the communication condition via the omnidirectional antenna to the control-side electronic device — S106

the control-side electronic device can set the configuration for communication between the transmitting device and the terminal-side electronic device based on the acquired relevant information about the communication condition via the omnidirectional antenna — S107

**Fig. 1B**

200

Fig. 2

300

acquire the first information indicating the communication condition between the terminal-side electronic device and the transmitting device via the first type of antenna

S310

acquire second information indicating the communication condition between the terminal-side electronic device and the transmitting device via the second type of antenna, wherein the communication between the terminal-side electronic device and the transmitting device via the second type of antenna is carried out based on the first information

S320

set the configuration for communication between the terminal-side electronic device and the transmitting device based on at least the second information

S330

**Fig. 3**

400

Processing circuit 430

directional antenna 410

omnidirectional antenna 420

directional antenna communication condition receiving unit 432

omnidirectional antenna communication initiating unit 434

omnidirectional antenna communication condition receiving unit 436

communication configuration setting unit 438

Fig. 4

500

| |
|---|
| receive first information indicating the communication condition between the terminal-side electronic device and the transmitting device via the first type of antenna |

S510

| |
|---|
| carry out communication between the terminal-side electronic device and the transmitting device via the second type of antenna based on the first information |

S520

| |
|---|
| receive second information indicating the communication condition between the terminal-side electronic device and the transmitting device via the second type of antenna |

S530

| |
|---|
| set the configuration for communication between the terminal-side electronic device and the transmitting device based on at least the second information |

S540

**Fig. 5**

600A

110

120x    120c    120b    120a    130

**Fig. 6A**

600B

110

120d    120c    120b

120a

130

**Fig. 6B**

600C

110

120d

120c

120b

120a

610

**Obstacle**

130

**Fig. 6C**

S701

acquire the first information indicating the data communication condition between the terminal-side device and the transmitting device via the directional antenna

No

S702

it is judged whether the first information is less than or equal to a first threshold

Yes

S703

acquire a second information indicating the communication between the terminal-side device and the transmitting device via the omni-directional antenna

S704

compare the second information with a specific threshold to determine influencing factors/events that result in deterioration of communication quality

S705

set/adjust the configuration for communication between the transmitting device and the terminal-side electronic device based on the determined influencing factors

S706

carry out the communication between the transmitting device and the terminal-side electronic device based on the adjusted communication configuration

**Fig. 7**

**800A**

830

**Control-side electronic device**

801

instruction to determine the channel quality via the omni-directional antenna

810

**Transmitting device**

802

reference signal transmitted via the omnidirectional antenna

820

**Terminal-side electronic device**

803

channel quality information

804

setting of communication configuration

## Fig. 8A

**800B**

830

**Control-side electronic device**

811

instruction to determine the channel quality via the omni-directional antenna

810

**Transmitting device**

812

reference signal transmitted via the omnidirectional antenna

820

**Terminal-side electronic device**

813

channel quality information

814

setting of communication configuration

## Fig. 8B

**800C**

810

**Transmitting device**

820

**Terminal-side electronic device**

821

reference signal transmitted via the omnidirectional antenna

822

channel quality information

823

setting of communication configuration

## Fig. 8C

**900A**

930

**Relay device**

910

**Transmitting device**

920

**Terminal-side electronic device**

901

increase the transmission power via the directional antenna

902

reference signal transmitted via the directional antenna

903

Information indicating the communication condition via the directional antenna

904

judges the information is less than a threshold

905

instruction to act as a relay for the terminal-side electronic device

906

information about the relay device

907

communication data

908

communication data

## Fig. 9A

**900B**

Transmitting device 910

Terminal-side electronic device 920

adjust beam from the directional antenna 911

communication configuration and reference signal 912

channel quality information 913

Communication data 914

**Fig. 9B**

**900C**

Relay device 930

Transmitting device 910

Terminal-side electronic device 920

instruction to act as a relay for the terminal-side electronic device 921

information about the relay device 922

communication data 923

communication data 924

**Fig. 9C**

1000

Processing circuit 1030

directional antenna 1010

omnidirectional antenna 1020

directional antenna channel quality information receiving unit 1032

omnidirectional antenna communication initiating unit 1034

omnidirectional antenna channel quality information receiving unit 1036

communication configuration setting unit 1038

Fig. 10

1100

receive first information indicating the channel quality between the terminal-side electronic device and the transmitting device via the first type of antenna $\quad$ S1110

carry out communication between the terminal-side electronic device and the transmitting device via the second type of antenna based on the first channel quality information $\quad$ S1120

receive second information indicating the channel quality between the terminal-side electronic device and the transmitting device via the second type of antenna $\quad$ S1130

set the configuration for communication between the terminal-side electronic device and the transmitting device based on at least the second channel quality information $\quad$ S1140

**Fig. 11**

1200

directional
antenna   1210

omnidirectional
antenna   1220

Processing circuit   1230

directional antenna
channel quality
information
acquisition unit   1232

omnidirectional
antenna channel
quality information
acquisition unit   1234

communication
configuration setting
unit   1236

**Fig. 12**

1300

acquire the first information indicating the channel quality between the terminal-side electronic device and the transmitting device via the first type of antenna /S1310

acquire second information indicating the channel quality between the terminal-side electronic device and the transmitting device via the second type of antenna, wherein the communication between the terminal-side electronic device and the transmitting device via the second type of antenna is carried out based on the first channel quality information /S1320

set the configuration for communication between the terminal-side electronic device and the transmitting device based on at least the second channel quality information /S1330

**Fig. 13**

**1400A**

1430

1420

1410

Control-side
electronic
device

1401

Terminal-side
electronic device

Transmitting
device

instruction to determine the
channel quality via the omni-
directional antenna

1402

reference signal
transmitted via the
omnidirectional antenna

1403

channel quality information

1404

setting of communication
configuration

**Fig. 14A**

**1400B**

1430

1420

1410

Control-side
electronic
device

1411

Terminal-side
electronic device

Transmitting
device

instruction to determine the
channel quality via the omni-
directional antenna

1412

reference signal
transmitted via the
omnidirectional antenna

1413

channel quality information

1414

setting of communication
configuration

**Fig. 14B**

EP 4 007 178 A1

**1400C**

Fig. 14C

**1500A**

Fig. 15A

75

**1500B**

1510

**Transmitting device**

1520

**Terminal-side electronic device**

1511

request to adjust beam

1512

adjust beam from the directional antenna

1513

communication configuration and reference signal

1514

channel quality information

1515

Communication data

**Fig. 15B**

**1500C**

1530

**Relay device**

1520

**Terminal-side electronic device**

1510

**Transmitting device**

1521

instruction to act as a relay for the terminal-side electronic device

1522

information about the relay device

1523

communication data

1524

communication data

**Fig. 15C**

1600

1601　　　　　1602　　　　　1603

CPU　　　　ROM　　　　RAM

1604

1605

Input/output interface

| Input section | output section | storage section | Communic ation unit | Driver |

1610

Removable medium

1611

1606　　1607　　1608　　1609

Fig. 16

1700

1710    1710

1720

1725

**Wireless communication interface**

1727                    1726

RF                      BB

1727                    1726

RF                      BB

1721

**controller**

1724

1717              1722

Network
interface        **memory**

# Fig. 17

Fig. 18

**Fig. 19**

**Fig. 20**

## INTERNATIONAL SEARCH REPORT

| International application No. |
| --- |
| **PCT/CN2020/106532** |

**A.  CLASSIFICATION OF SUBJECT MATTER**

H04B 7/0404(2017.01)i;  H04B 7/0408(2017.01)i;  H04B 17/309(2015.01)i;  H04W 4/06(2009.01)i

According to International Patent Classification (IPC) or to both national classification and IPC

**B.  FIELDS SEARCHED**

Minimum documentation searched (classification system followed by classification symbols)

  H04B; H04W

Documentation searched other than minimum documentation to the extent that such documents are included in the fields searched

Electronic data base consulted during the international search (name of data base and, where practicable, search terms used)

  USTXT; EPTXT; WOTXT; CNTXT; CNABS; VEN; CNKI; IEEE: 全向, 非定向, 定向, 指向性, 天线, 质量, 强度, 恶化, 差, 小于, 低, 阻挡, 遮挡, 阻隔, 障碍物, 调整, 调节, 改变, 切换, 方向, 配置, 功率, directional, omnidirectional, omni 1w directional, antenna, quality, strength, RSSI, reduce?, deteriorat+, corrupt+, decreas+, lower, worse, barrier?, obstacle?, modif+, adjust+, regulate+, change+, configuration, direction, power, vehicle, V2V, unmanned, aeroplane, airplane, aircraft, aerocraft, plane, machine

**C.  DOCUMENTS CONSIDERED TO BE RELEVANT**

| Category* | Citation of document, with indication, where appropriate, of the relevant passages | Relevant to claim No. |
| --- | --- | --- |
| X | CN 108475076 A (SHENZHEN DAJIANG INNOVATION TECHNOLOGY CO., LTD.) 31 August 2018 (2018-08-31)<br>    description paragraphs [0026]-[0034], [0097]-[0111], figures 1, 2 | 1-12, 19, 21-32, 39, 41-54, 61, 63-74, 81, 83-87 |
| A | CN 107069220 A (TAOGLAS GROUP HOLDINGS CORPORATION) 18 August 2017 (2017-08-18)<br>    entire document | 1-87 |
| A | CN 203466980 U (BRITO TECHNOLOGY CO., LTD.) 05 March 2014 (2014-03-05)<br>    entire document | 1-87 |
| A | US 9590298 B1 (AMAZON TECH INC) 07 March 2017 (2017-03-07)<br>    entire document | 1-87 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 September 2020** | **28 October 2020** |

| Name and mailing address of the ISA/CN | Authorized officer |
| --- | --- |
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2020/106532** |

| Patent document cited in search report | | | Publication date (day/month/year) | Patent family member(s) | | | Publication date (day/month/year) |
| --- | --- | --- | --- | --- | --- | --- | --- |
| CN | 108475076 | A | 31 August 2018 | WO | 2018191965 | A1 | 25 October 2018 |
| CN | 107069220 | A | 18 August 2017 | GB | 2546417 | A | 19 July 2017 |
| | | | | DE | 102017000130 | A1 | 20 July 2017 |
| | | | | US | 2017207530 | A1 | 20 July 2017 |
| | | | | FR | 3046896 | A1 | 21 July 2017 |
| | | | | TW | 201725785 | A | 16 July 2017 |
| CN | 203466980 | U | 05 March 2014 | TW | M473023 | U | 21 February 2014 |
| US | 9590298 | B1 | 07 March 2017 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910723741